(19)

(11) **EP 3 991 339 B1**

(12) **EUROPÄISCHE PATENTSCHRIFT**

(45) Veröffentlichungstag und Bekanntmachung des Hinweises auf die Patenterteilung:
**11.12.2024 Patentblatt 2024/50**

(21) Anmeldenummer: **20734939.0**

(22) Anmeldetag: **25.06.2020**

(51) Internationale Patentklassifikation (IPC):
***H04L 5/00*** *(2006.01)*

(52) Gemeinsame Patentklassifikation (CPC):
**H04L 5/0012; H04L 5/0037; H04L 5/0044; H04L 5/0094**

(86) Internationale Anmeldenummer:
**PCT/EP2020/067963**

(87) Internationale Veröffentlichungsnummer:
**WO 2020/260543 (30.12.2020 Gazette 2020/53)**

(54) **EFFIZIENTE SIGNALISIERUNG VON SPRUNGMUSTERN IN ZUGEWIESENEN RESSOURCEN**

EFFICIENT SIGNALING OF HOPPING PATTERNS IN ASSIGNED RESOURCES

SIGNALISATION EFFICACE DE MODÈLES DE SAUT DANS DES RESSOURCES ATTRIBUÉES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.06.2019 DE 102019209528**

(43) Veröffentlichungstag der Anmeldung:
**04.05.2022 Patentblatt 2022/18**

(73) Patentinhaber: **Fraunhofer-Gesellschaft zur Förderung der angewandten Forschung e.V.
80686 München (DE)**

(72) Erfinder:
- **KILIAN, Gerd
91058 Erlangen (DE)**
- **KNEISSL, Jakob
91058 Erlangen (DE)**
- **SOLLER, Dominik
91058 Erlangen (DE)**

(74) Vertreter: **Schlenker, Julian et al
Schoppe, Zimmermann, Stöckeler
Zinkler, Schenk & Partner mbB
Patentanwälte
Radlkoferstraße 2
81373 München (DE)**

(56) Entgegenhaltungen:
**WO-A1-2016/010644 US-A1- 2005 176 371
US-A1- 2015 023 396**



Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Ausführungsbeispiele der vorliegenden Erfindung beziehen sich auf eine Basisstation eines Kommunikationssystems, auf einen Endpunkt des Kommunikationssystems sowie auf das Kommunikationssystem, wobei das Kommunikationssystem in einem Frequenzband drahtlos kommuniziert, welches von einer Mehrzahl von Kommunikationssystemen zur Kommunikation genutzt wird. Manche Ausführungsbeispiele beziehen sich auf eine effiziente Signalisierung von Sprungmustern in zugewiesenen Ressourcen.

Bei der drahtlosen Kommunikation zwischen Teilnehmern eines Kommunikationssystems in einem Frequenzband, welches von einer Mehrzahl von Kommunikationssystemen zur Kommunikation genutzt wird, ist eine Vermeidung von Interferenzen zwischen den Teilnehmern des Kommunikationssystems sowie eine Vermeidung durch Störsignale anderer Kommunikationssysteme (= Kommunikation zwischen Teilnehmer anderer Kommunikationssysteme) erforderlich.

### Allgemeine Methoden der Interferenzvermeidung

Störungen von Teilnehmern innerhalb des eigenen Funknetzwerks (oder Kommunikationssystems) werden oftmals durch eine (z.B. durch eine Basisstation) koordinierte, konfliktfreie Zuteilung von Funkressourcen vermieden. Dies erfolgt z.B. in den Mobilfunkstandards GSM, UMTS und LTE, wo (außerhalb der initialen Netzwerk-Anmeldungsphase) Kollisionen von Funkteilnehmern innerhalb desselben Netzwerks durch sogenanntes "Scheduling" (dt. Ablaufplanung) vollständig vermieden werden können.

Störungen durch Funkteilnehmer außerhalb des eigenen Netzwerks werden oftmals durch geeignete Funknetzplanung reduziert. Hierbei wird jedem Netzwerk ein bestimmter nutzbarer Frequenzbereich (seinerseits eventuell bestehend aus mehreren Frequenzkanälen) aus dem gesamten zur Verfügung stehenden Frequenzband zugewiesen. Örtlich benachbarte Netzwerke verwenden unterschiedliche Frequenzbereiche, wodurch direkte Störungen zwischen Teilnehmern örtlich benachbarter Netzwerke nicht vorkommen. Diese Methode stellt letztlich auch eine Form der Koordination zwischen Netzwerken dar.

Wenn eine solche festgelegte Zuteilung von Frequenzbereichen oder Funkkanälen zu individuellen Netzwerken nicht möglich oder nicht praktikabel ist (wie z.B. oftmals in nicht lizenzierten Frequenzbändern), kann ein Netzwerk aus einem Satz von vorgegebenen Frequenzbereichen einen ungenutzten oder z.B. den am wenigsten genutzten durch eine Lastmessung ermitteln und diesen dann belegen bzw. dorthin wechseln.

### Interferenzvermeidung bei Einsatz des TSMA-Verfahrens

Einen weiteren Fall stellt die Übertragung von Nachrichten (Datenpaketen) mittels des sog. Telegram-Splitting-Multiple-Access (TSMA, dt. Telegrammaufteilungs-Verfahren) Verfahrens dar [1]. Hier wird der von einem Netzwerk nutzbare Frequenzbereich in eine vorgegebene Anzahl von Frequenzkanälen unterteilt, wobei ein Datenpaket auf eine Mehrzahl von Teil-Datenpakten aufgeteilt übertragen wird, welche typischerweise zu unterschiedlichen Zeitpunkten und auf unterschiedlichen Frequenzkanälen gesendet werden. Hierbei spielt das für die Übertragung der Teil-Datenpakete verwendete Sprungmuster (oder Zeit-/Frequenzsprungmuster) eine besondere Rolle, wie z.B. in [2] gezeigt wird. Eine besonders hohe Auslastung von Netzwerken lässt sich erzielen, wenn es möglichst viele verschiedene Sprungmuster gibt, welche untereinander nur möglichst wenige und auch kurze Überlappungssequenzen enthalten. Um Interferenz von mehreren Netzwerken untereinander zu verringern, können die Netzwerke relativ zueinander unterschiedliche Sprungmuster verwenden. Diese Netzwerk-individuellen Sprungmuster müssen allen Teilnehmern in den jeweiligen Netzwerken bekannt sein. Zudem ist anzustreben, dass die Sprungmuster - wie oben beschrieben - nur möglichst kurze Überlappungssequenzen zueinander haben, um systematische Kollisionen zwischen Teil-Datenpaketen von Teilnehmern unterschiedlicher Netzwerke zu vermeiden.

In untereinander koordinierten Netzwerken ist es möglich, jedem Netzwerk ein individuelles Sprungmuster zuzuweisen, welches möglichst wenig Überlappung mit den Sprungmustern anderer Netzwerke in Empfangsreichweite hat. Die Gesamtheit aller verfügbaren Sprungmuster kann als Satz (von Sprungmustern) tabelliert werden, aus welchem die Netzwerk-übergreifende, koordinierende Instanz jedem Netzwerk ein/mehrere individuelle(s) Sprungmuster zuweist. Die Berechnung eines Satzes geeigneter Sprungmuster kann vorab nach geeigneten Optimierungskriterien erfolgen.

Sind Netzwerke untereinander nicht koordiniert und ggf. auch zeitlich und im Frequenzbereich nicht synchronisiert, so kann die obige Methode (tabellierte, vorberechnete Sprungmuster) zwar prinzipiell auch angewandt werden, jedoch besteht das Risiko, dass zwei Netzwerke zufällig dasselbe Sprungmuster verwenden. Um die Wahrscheinlichkeit, dass zwei (sich gegenseitig beeinflussende) Netzwerke das gleiche Sprungmuster verwenden, auf ein sinnvolles Maß zu verringern, müsste eine außerordentlich große Zahl von verfügbaren Sprungmustern existieren, insbesondere in einem Szenario mit vielen Netzwerken.

Die US 2015/023396 A1 bezieht sich auf ein frequenzsprungbasiertes Kommunikationsnetzwerk und schlägt eine Kanalabbildung vor, die es ermöglicht, dass die Knoten des Kommunikationsnetzwerks auf unterschiedlichen Arbeitskanälen arbeiten. Hierzu wird für jeden Knoten ein Arbeitskanaletikett berechnet in Abhängigkeit von einer Anzahl an Arbeitskanälen des Knotens in einem Frequenzsprungmodus, einem Identifizierer des Knotens, und einem zeitlichen Parameter eines Superframes. Entsprechend des so berechneten Arbeitskanaletiketts wird ein Arbeitskanal ermittelt, den der Knoten während des aktuellen Superframes nutzt.

Die US 2005/176371 A1 bezieht sich auf Piconets gem. IEEE 802.15.3 und beschreibt wie die Frequenzsprungmuster innerhalb von Piconets synchronisiert werden können. Zur Vermeidung von Kollisionen mit einem anderen Piconet kann ein Piconet ermitteln, ob ein anderes Piconet in Kommunikationsreichweite ist und welches Frequenzsprungmuster von dem anderen Piconet verwendet wird. Anschließend kann das Piconet ein eigenes Frequenzsprungmuster wählen in Abhängigkeit von dem Frequenzsprungmuster des anderen Piconets.

Der vorliegenden Erfindung liegt somit die Aufgabe zugrunde, ein Konzept zu schaffen, welches die Übertragungssicherheit zwischen Teilnehmern eines Kommunikationssystems erhöht, wenn die Teilnehmer des Kommunikationssystems auf ein Frequenzband zugreifen, welches von mehreren untereinander unkoordinierten Kommunikationssysteme zur drahtlosen Kommunikation verwendet wird.

Diese Aufgabe wird durch die unabhängigen Patentansprüche gelöst.

Vorteilhafte Weiterbildungen finden sich in den abhängigen Patentansprüchen.

Ausführungsbeispiele schaffen eine Basisstation eines Kommunikationssystems, wobei das Kommunikationssystem in einem Frequenzband [z.B. einem lizenzfreien und/oder genehmigungsfreien Frequenzband; z.B. ISM Band] drahtlos kommuniziert, welches von einer Mehrzahl von Kommunikationssystemen zur Kommunikation genutzt wird, wobei die Basisstation ausgebildet ist, um ein Signal [z.B. ein Baken-Signal] zu senden, wobei das Signal eine Information über ein Kanalzugriffsmuster aufweist, wobei das Kanalzugriffsmuster eine für die Kommunikation des Kommunikationssystems verwendbare frequenz- und/oder zeitsprungbasierte Belegung [z.B. von Ressourcen] des Frequenzbands angibt [z.B. eine zeitliche Abfolge von für die Kommunikation des Kommunikationssystems verwendbaren (z.B. über das Frequenzband verteilten) Frequenzressourcen], wobei die Information einen Zustand eines Zahlenfolgengenerators [z.B. eines periodischen Zahlenfolgengenerators oder eines deterministischen Zufallszahlengenerators] zur Erzeugung einer Zahlenfolge beschreibt oder wobei die Information eine Zahl [z.B. ein Zeitschlitzindex und/oder ein Bakenindex] einer Zahlenfolge [z.B. einer periodischen Zeitschlitzindexfolge und/oder periodischen Bakenindexfolge] beschreibt, wobei die Zahlenfolge das Kanalzugriffsmuster bestimmt.

Bei Ausführungsbeispielen kann sich das Kanalzugriffsmuster von einem anderen Kanalzugriffsmuster unterscheiden, basierend auf dem zumindest ein anderes Kommunikationssystem der Mehrzahl von anderen Kommunikationssystemen auf das Frequenzband zugreift.

Bei Ausführungsbeispielen kann die Basisstation ausgebildet sein, um unkoordiniert zu den anderen Kommunikationssystemen zu arbeiten.

Bei Ausführungsbeispielen kann die Basisstation ausgebildet sein, um mit einem Teilnehmer des Kommunikationssystems unter Verwendung der durch das Kanalzugriffsmuster bestimmten Ressourcen oder einer Teilmenge davon zu kommunizieren.

Bei Ausführungsbeispielen kann die Basisstation ausgebildet sein, um das Signal mit der Information über das Kanalzugriffsmuster mehrfach [z.B. periodisch] auszusenden, wobei die mit aufeinander folgenden Aussendungen des Signals übertragenen Informationen über das Kanalzugriffsmuster unterschiedliche [z.B. aufeinander folgende oder unmittelbar aufeinander folgende] Zustände des Zahlenfolgengenerators oder unterschiedliche Zahlen der Zahlenfolge beschreiben.

Bei Ausführungsbeispielen kann die mit den Aussendungen des Signals übertragenen Informationen nur eine Teilemenge der Zustände des Zahlenfolgengenerators oder der Zahlen der Zahlenfolge beschreiben [z.B. werden nur jeder n-te Zustand oder jede n-te Index Zahl übertragen, wobei n eine natürliche Zahl größer gleich zwei ist].

Bei Ausführungsbeispielen kann die Information über das Kanalzugriffsmuster der Zustand des Zahlenfolgengenerators oder eine davon abgeleitete Information [z.B. ein Teil des Zustands des Zahlenfolgengenerators (z.B. LSBs des Zustands des Zahlenfolgengenerators)] sein.

Bei Ausführungsbeispielen kann die Information über das Kanalzugriffsmuster die Zahl der Zahlenfolge oder eine davon abgeleitete Information [z.B. ein Teil der Zahl der Zahlenfolge (z.B. LSBs der Zahl der Zahlenfolge)] sein.

Bei Ausführungsbeispielen kann die Basisstation ausgebildet sein, um das Kanalzugriffsmuster in Abhängigkeit von dem Zustand des Zahlenfolgengenerators oder einer von dem Zustand des Zahlenfolgengenerators abgeleiteten Zahl der Zahlenfolge zu ermitteln.

Bei Ausführungsbeispielen können basierend auf dem Zustand des Zahlenfolgengenerators auf den Zustand des Zahlenfolgengenerators [z.B. unmittelbar] folgende Zustände des Zahlenfolgengenerators ermittelbar sein, wobei die Basisstation ausgebildet sein kann, um in Abhängigkeit von den folgenden Zuständen des Zahlenfolgengenerators oder davon abgeleiteten folgenden Zahlen der Zahlenfolge das Kanalzugriffsmuster zu ermitteln.

Bei Ausführungsbeispielen kann die Basisstation ausgebildet sein, um das Kanalzugriffsmuster in Abhängigkeit von einer individuellen Information des Kommunikationssystems [z.B. einer immanenten Information des Kommunikationssystems, wie z.B. einem netzwerkspezifischen Identifikator] zu ermitteln.

Bei Ausführungsbeispielen kann die individuelle Information des Kommunikationssystems eine immanente Information des Kommunikationssystems sein.

Bei Ausführungsbeispielen kann die immanente Information des Kommunikationssystems ein netzwerkspezifischer Identifikator sein.

Bei Ausführungsbeispielen kann der netzwerkspezifische Identifikator eine Identifikation des Kommunikationssystems sein.

Bei Ausführungsbeispielen kann die Basisstation ausgebildet ist, um

- den Zustand des Zahlenfolgengenerators, oder eine von dem Zustand des Zahlenfolgengenerators abgeleitete Zahl der Zahlenfolge, oder die Zahl der Zahlenfolge, und
- die individuelle Information des Kommunikationssystems unter Verwendung einer Abbildungsfunktion auf eine Zeitinformation und eine Frequenzinformation abzubilden,

wobei die Zeitinformation und die Frequenzinformation eine Ressource des Kanalzugriffsmusters beschreiben.

Bei Ausführungsbeispielen kann die Zeitinformation einen Zeitschlitz oder einen Zeitschlitzindex beschreiben.

Bei Ausführungsbeispielen kann die Abbildungsfunktion bei der Abbildung auf die Zeitinformation eine Aktivitätsrate des Kommunikationssystems berücksichtigen, wobei die Aktivitätsrate vor Ausführung festgelegt wird oder wobei das Signal oder ein weiteres von der Basistation gesendetes Signal eine Information über die Aktivitätsrate aufweist.

Bei Ausführungsbeispielen kann die Abbildungsfunktion bei der Abbildung auf die Zeitinformation unterschiedliche Aktivitätsraten des Kommunikationssystems berücksichtigen, so dass das Kanalzugriffsmuster Bereiche unterschiedlicher Aktivitätsraten aufweist, wobei das Signal oder das weitere Signal eine Information über die Aktivitätsraten aufweist.

Bei Ausführungsbeispielen kann die Basisstation ausgebildet sein, um die Aktivitätsrate dynamisch in Abhängigkeit von einer aktuellen oder prädizierten Lastsituation des Kommunikationssystems anzupassen.

Bei Ausführungsbeispielen kann die Abbildungsfunktion bei der Abbildung auf die Zeitinformation einen vorgegebenen Mindestabstand [z.B. von einem oder mehreren Zeitschlitzen oder Zeitschlitzindexen] zwischen [z.B. unmittelbar] aufeinanderfolgenden Zeitschlitzen oder Zeitschlitzindexen des Kanalzugriffsmusters einhalten.

Bei Ausführungsbeispielen kann die Frequenzinformation einen Frequenzkanal oder einen Frequenzkanalindex beschreiben.

Bei Ausführungsbeispielen kann die Frequenzinformation einen Abstand zwischen [z.B. unmittelbar] aufeinanderfolgenden Frequenzkanälen oder Frequenzkanalindexen des Kanalzugriffsmusters beschreiben.

Bei Ausführungsbeispielen kann die Abbildungsfunktion bei der Abbildung auf die Frequenzinformation einen vorgegebenen Mindestabstand zwischen [z.B. unmittelbar] aufeinanderfolgenden Frequenzkanälen oder Frequenzkanalindexen des Kanalzugriffsmusters einhalten.

Bei Ausführungsbeispielen kann die Abbildungsfunktion bei der Abbildung auf die Frequenzinformation einen störanfälligen Frequenzkanal oder einen Bereich von störanfälligen Frequenzkanälen des Frequenzbands berücksichtigen, sodass der störanfällige Frequenzkanal oder der Bereich von störanfälligen Frequenzkanälen nicht oder weniger von dem Kanalzugriffsmuster belegt wird.

Bei Ausführungsbeispielen kann die Frequenzinformation eine Bündelung von Frequenzressourcen des Frequenzbands beschreiben, die zumindest zwei unmittelbar benachbarte oder voneinander beabstandete Frequenzkanäle oder Frequenzkanalindizes umfasst.

Bei Ausführungsbeispielen kann die Basisstation ausgebildet sein, um in Abhängigkeit von

- dem Zustand des Zahlenfolgengenerators oder einer von dem Zustand des Zahlenfolgengenerators abgeleiteten Zahl der Zahlenfolge, oder der Zahl der Zahlenfolge, und
- einer individuellen Information des Kommunikationssystems

eine Pseudozufallszahl R zu ermitteln, wobei die Pseudozufallszahl R das Kanalzugriffsmuster bestimmt.

Bei Ausführungsbeispielen kann die Basisstation ausgebildet sein, um basierend auf der Pseudozufallszahl R eine Ressource [z.B. Frequenzkanal und/oder Zeitschlitz, oder Frequenzkanalindex und/oder Zeitschlitzindex] des Kanalzugriffsmusters zu ermitteln.

Bei Ausführungsbeispielen kann das Signal ein Baken-Signal sein.

Bei Ausführungsbeispielen kann der Zahlenfolgengenerator ein periodischer Zahlenfolgengenerator zur Erzeugung einer periodischen Zahlenfolge sein.

Bei Ausführungsbeispielen kann der Zahlenfolgengenerator ein deterministischer Zufallszahlengenerator zur Erzeugung einer pseudozufälligen Zahlenfolge sein.

Bei Ausführungsbeispielen kann der Zustand des Zahlenfolgengenerators ein periodischer Bakenindex und/oder ein periodischer Zeitschlitzindex sein.

Bei Ausführungsbeispielen kann eine von dem Zustand des Zahlenfolgengenerators abgeleitete Zahl ein periodischer Bakenindex und/oder ein periodischer Zeitschlitzindex sein.

Bei Ausführungsbeispielen kann die Zahl der Zahlenfolge ein periodischer Bakenindex und/oder ein periodischer Zeitschlitzindex sein.

Bei Ausführungsbeispielen kann eine durch das Kanalzugriffsmuster definierte Belegung des Frequenzbands eine Belegung des Frequenzbands durch ein anderes Kommunikationssystem zumindest teilweise überlappen.

Weitere Ausführungsbeispiele schaffen einen Endpunkt eines Kommunikationssystems, wobei das Kommunikationssystem in einem Frequenzband [z.B. einem lizenzfreien und/oder genehmigungsfreien Frequenzband; z.B. ISM Band] drahtlos kommuniziert, welches von einer Mehrzahl von Kommunikationssystemen zur Kommunikation genutzt wird, wobei der Endpunkt ausgebildet ist, um ein Signal [z.B. ein Baken-Signal] zu empfangen, wobei das Signal eine Information über ein Kanalzugriffsmuster aufweist, wobei das Kanalzugriffsmuster eine für die Kommunikation des Kommunikationssystems verwendbare frequenz- und/oder zeitsprungbasierte Belegung [z.B. von Ressourcen] des Frequenzbands angibt [z.B. eine zeitliche Abfolge von für die Kommunikation des Kommunikationssystems verwendbaren (z.B. über das Frequenzband verteilten) Frequenzressourcen], wobei der Endpunkt ausgebildet ist, um das Kanalzugriffsmuster basierend auf der Information über das Kanalzugriffsmuster zu ermitteln, wobei die Information einen Zustand eines Zahlenfolgengenerators [z.B. eines periodischen Zahlenfolgengenerators oder eines deterministischen Zufallszahlengenerators] zur Erzeugung einer Zahlenfolge beschreibt oder wobei die Information eine Zahl [z.B. ein Zeitschlitzindex und/oder ein Bakenindex] einer Zahlenfolge [z.B. einer periodischen Zeitschlitzindexfolge und/oder periodischen Bakenindexfolge] beschreibt, wobei die Zahlenfolge das Kanalzugriffsmuster bestimmt.

Bei Ausführungsbeispielen kann sich das Kanalzugriffsmuster von einem anderen Kanalzugriffsmuster, basierend auf dem zumindest ein anderes Kommunikationssystem der Mehrzahl von anderen Kommunikationssystemen auf das Frequenzband zugreift, unterscheiden.

Bei Ausführungsbeispielen kann der Endpunkt ausgebildet sein, um unkoordiniert zu den anderen Kommunikationssystemen zu arbeiten.

Bei Ausführungsbeispielen kann der Endpunkt ausgebildet sein, um mit einem Teilnehmer des Kommunikationssystems unter Verwendung der durch das Kanalzugriffsmuster bestimmten Ressourcen oder einer Teilmenge davon zu kommunizieren.

Bei Ausführungsbeispielen kann der Endpunkt ausgebildet sein, um das Signal mit der Information über das Kanalzugriffsmuster mehrfach [z.B. periodisch oder sporadisch] zu empfangen, wobei die mit aufeinander folgenden Aussendungen des Signals übertragenen Informationen über das Kanalzugriffsmuster unterschiedliche [z.B. aufeinander folgende oder unmittelbar aufeinander folgende] Zustände des Zahlenfolgengenerators oder unterschiedliche Zahlen der Zahlenfolge beschreiben, wobei der Endpunkt ausgebildet sein kann, um das Kanalzugriffsmuster basierend auf den Informationen über das Kanalzugriffsmuster [z.B. basierend auf den unterschiedlichen Zuständen des Zahlenfolgengenerators oder den unterschiedlichen Zahlen der Zahlenfolge] zu ermitteln.

Bei Ausführungsbeispielen können die mit den Aussendungen des Signals übertragenen Informationen nur eine Teilmenge der Zustände des Zahlenfolgengenerators oder der Zahlen der Zahlenfolge beschreiben [z.B. wird nur jeder n-te Zustand oder jede n-te Index Zahl übertragen, wobei n eine natürliche Zahl größer gleich zwei ist].

Bei Ausführungsbeispielen kann die Information über das Kanalzugriffsmuster der Zustand des Zahlenfolgengenerators oder eine davon abgeleitete Information [z.B. ein Teil des Zustands des Zahlenfolgengenerators (z.B. LSBs des Zustands des Zahlenfolgengenerators)] sein.

Bei Ausführungsbeispielen kann die Information über das Kanalzugriffsmuster die Zahl der Zahlenfolge oder eine davon abgeleitete Information [z.B. ein Teil der Zahl der Zahlenfolge (z.B. LSBs der Zahl der Zahlenfolge)] sein.

Bei Ausführungsbeispielen kann der Endpunkt ausgebildet sein, um das Kanalzugriffsmuster in Abhängigkeit von dem Zustand des Zahlenfolgengenerators oder einer von dem Zustand des Zahlenfolgengenerators abgeleiteten Zahl der Zahlenfolge zu ermitteln.

Bei Ausführungsbeispielen können basierend auf dem Zustand des Zahlenfolgengenerators auf den Zustand des Zahlenfolgengenerators [z.B. unmittelbar] folgende Zustände des Zahlenfolgengenerators ermittelbar sein, wobei der Endpunkt ausgebildet sein kann, um in Abhängigkeit von den folgenden Zuständen des Zahlenfolgengenerators oder davon abgeleiteten folgenden Zahlen der Zahlenfolge das Kanalzugriffsmuster zu ermitteln.

Bei Ausführungsbeispielen kann der Endpunkt ausgebildet sein, um das Kanalzugriffsmuster in Abhängigkeit von einer individuellen Information des Kommunikationssystems [z.B. einer immanenten Information des Kommunikationssystems, wie z.B. einem netzwerkspezifischen Identifikator] zu ermitteln.

Bei Ausführungsbeispielen kann die individuelle Information des Kommunikationssystems eine immanente Information des Kommunikationssystems sein.

Bei Ausführungsbeispielen kann die immanente Information des Kommunikationssystems ein netzwerkspezifischer Identifikator sein.

Bei Ausführungsbeispielen kann der netzwerkspezifische Identifikator eine Identifikation des Kommunikationssystems sein.

Bei Ausführungsbeispielen kann der Endpunkt ausgebildet sein, um

- den Zustand des Zahlenfolgengenerators, oder eine von dem Zustand des Zahlenfolgengenerators abgeleitete Zahl der Zahlenfolge, oder die Zahl der Zahlenfolge, und
- die individuelle Information des Kommunikationssystems unter Verwendung einer Abbildungsfunktion auf eine Zeitinformation und eine Frequenzinformation abzubilden,

wobei die Zeitinformation und die Frequenzinformation eine Ressource des Kanalzugriffsmusters beschreiben.

Bei Ausführungsbeispielen kann die Zeitinformation einen Zeitschlitz oder einen Zeitschlitzindex beschreiben.

Bei Ausführungsbeispielen kann die Abbildungsfunktion bei der Abbildung auf die Zeitinformation eine Aktivitätsrate des Kommunikationssystems berücksichtigen, wobei die Aktivitätsrate vor Ausführung festgelegt wird oder wobei das Signal oder ein weiteres empfangenes Signal eine Information über die Aktivitätsrate aufweist.

Bei Ausführungsbeispielen kann die Abbildungsfunktion bei der Abbildung auf die Zeitinformation unterschiedliche Aktivitätsraten des Kommunikationssystems berücksichtigen, so dass das Kanalzugriffsmuster Bereiche unterschiedlicher Aktivitätsraten aufweist, wobei das Signal oder das weitere Signal eine Information über die Aktivitätsraten aufweist.

Bei Ausführungsbeispielen kann das Signal eine Information über die Aktivitätsraten des Kommunikationssystems aufweisen.

Bei Ausführungsbeispiele kann der Endpunkt ausgebildet sein, um ein weiteres Signal zu empfangen, wobei das weitere Signal eine Information über die Aktivitätsraten des Kommunikationssystems aufweist.

Bei Ausführungsbeispielen kann die Abbildungsfunktion bei der Abbildung auf die Zeitinformation einen vorgegebenen Mindestabstand [z.B. von einem oder mehreren Zeitschlitzen oder Zeitschlitzindexen] zwischen [z.B. unmittelbar] aufeinanderfolgenden Zeitschlitzen oder Zeitschlitzindexen des Kanalzugriffsmusters einhalten.

Bei Ausführungsbeispielen kann die Frequenzinformation einen Frequenzkanal oder einen Frequenzkanalindex beschreiben.

Bei Ausführungsbeispielen kann die Frequenzinformation einen Abstand zwischen [z.B. unmittelbar] aufeinanderfolgenden Frequenzkanälen oder Frequenzkanalindexen des Kanalzugriffsmusters beschreiben.

Bei Ausführungsbeispielen kann die Abbildungsfunktion bei der Abbildung auf die Frequenzinformation einen vorgegebenen Mindestabstand zwischen [z.B. unmittelbar] aufeinanderfolgenden Frequenzkanälen oder Frequenzkanalindexen des Kanalzugriffsmusters einhalten.

Bei Ausführungsbeispielen kann die Abbildungsfunktion bei der Abbildung auf die Frequenzinformation einen störanfälligen Frequenzkanal oder einen Bereich von störanfälligen Frequenzkanälen des Frequenzbands berücksichtigen, sodass der störanfällige Frequenzkanal oder der Bereich von störanfälligen Frequenzkanälen nicht oder weniger von dem Kanalzugriffsmuster belegt wird.

Bei Ausführungsbeispielen kann die Frequenzinformation zumindest zwei unmittelbar benachbarte oder voneinander beabstandete Frequenzkanäle oder Frequenzkanalindizes beschreiben.

Bei Ausführungsbeispielen kann der Endpunkt ausgebildet seib, um in Abhängigkeit von

- dem Zustand des Zahlenfolgengenerators oder einer von dem Zustand des Zahlenfolgengenerators abgeleiteten Zahl der Zahlenfolge, oder der Zahl der Zahlenfolge, und
- einer individuellen Information des Kommunikationssystems

eine Pseudozufallszahl R zu ermitteln, wobei die Pseudozufallszahl R das Kanalzugriffsmuster bestimmt.

Bei Ausführungsbeispielen kann der Endpunkt ausgebildet sein, um basierend auf der Pseudozufallszahl R eine Ressource [z.B. Frequenzkanal und/oder Zeitschlitz, oder Frequenzkanalindex und/oder Zeitschlitzindex] des Kanalzugriffsmusters zu ermitteln.

Bei Ausführungsbeispielen kann das Signal ein Baken-Signal sein.

Bei Ausführungsbeispielen kann der Zahlenfolgengenerator ein periodischer Zahlenfolgengenerator zur Erzeugung einer periodischen Zahlenfolge sein.

Bei Ausführungsbeispielen kann der Zahlenfolgengenerator ein deterministischer Zufallszahlengenerator zur Erzeugung einer pseudozufälligen Zahlenfolge sein.

Bei Ausführungsbeispielen kann der Zustand des Zahlenfolgengenerators ein periodischer Bakenindex und/oder ein periodischer Zeitschlitzindex sein.

Bei Ausführungsbeispielen kann eine von dem Zustand des Zahlenfolgengenerators abgeleitete Zahl ein periodischer Bakenindex und/oder ein periodischer Zeitschlitzindex sein.

Bei Ausführungsbeispielen kann die Zahl der Zahlenfolge ein periodischer Bakenindex und/oder ein periodischer Zeitschlitzindex sein.

Bei Ausführungsbeispielen kann eine durch das Kanalzugriffsmuster definierte Belegung des Frequenzbands eine Belegung des Frequenzbands durch ein anderes Kommunikationssystem zumindest teilweise überlappen.

Weitere Ausführungsbeispiele schaffen ein Kommunikationssystem mit einer der oben beschriebenen Basisstationen und zumindest einem der oben beschriebenen Endpunkte.

Weiter Ausführungsbeispiele schaffen ein Verfahren zum Betreiben einer Basisstation eines Kommunikationssystems, wobei das Kommunikationssystem in einem Frequenzband drahtlos kommuniziert, welches von einer Mehrzahl von Kommunikationssystemen zur Kommunikation genutzt wird. Das Verfahren umfasst einen Schritt des Sendens eines Signals, wobei das Signal eine Information über ein Kanalzugriffsmuster aufweist, wobei das Kanalzugriffsmuster eine für die Kommunikation des Kommunikationssystems verwendbare frequenz- und/oder zeitsprungbasierte Belegung des Frequenzbands angibt, wobei die Information einen Zustand eines Zahlenfolgengenerators zur Erzeugung einer Zahlenfolge beschreibt oder wobei die Information eine Zahl einer Zahlenfolge beschreibt, wobei die Zahlenfolge das Kanalzugriffsmuster bestimmt.

Weiter Ausführungsbeispiele schaffen ein Verfahren zum Betreiben eines Endpunkts eines Kommunikationssystems, wobei das Kommunikationssystem in einem Frequenzband drahtlos kommuniziert, welches von einer Mehrzahl von Kommunikationssystemen zur Kommunikation genutzt wird. Das Verfahren umfasst einen Schritt des Empfangens eines Signals, wobei das Signal eine Information über ein Kanalzugriffsmuster aufweist, wobei das Kanalzugriffsmuster eine für die Kommunikation des Kommunikationssystems verwendbare frequenz- und/oder zeitsprungbasierte Belegung des Frequenzbands angibt. Ferner umfasst das Verfahren einen Schritt des Ermittelns des Kanalzugriffsmusters basierend auf der Information über das Kanalzugriffsmuster, wobei die Information einen Zustand eines Zahlenfolgengenerators zur Erzeugung einer Zahlenfolge beschreibt oder wobei die Information eine Zahl einer Zahlenfolge beschreibt, wobei die Zahlenfolge das Kanalzugriffsmuster bestimmt.

Weitere Ausführungsbeispiele schaffen einen Controller für einen Teilnehmer eines Kommunikationssystems, wobei das Kommunikationssystem in einem Frequenzband drahtlos kommuniziert, welches von einer Mehrzahl von Kommunikationssystemen zur Kommunikation genutzt wird, wobei der Controller ausgebildet ist, um ein Kanalzugriffsmuster zu ermitteln, wobei das Kanalzugriffsmuster eine für die Kommunikation des Kommunikationssystems verwendbare frequenz- und/oder zeitsprungbasierte Belegung des Frequenzbands angibt, wobei der Controller ausgebildet ist, um das Kanalzugriffsmuster in Abhängigkeit von einem Zustand eines Zahlenfolgengenerators zur Erzeugung einer Zahlenfolge oder einer Zahl einer Zahlenfolge zu ermitteln.

Bei Ausführungsbeispielen kann der Controller ausgebildet sein, um das Kanalzugriffsmuster in Abhängigkeit von dem Zustand des Zahlenfolgengenerators oder einer von dem Zustand des Zahlenfolgengenerators abgeleiteten Zahl der Zahlenfolge zu ermitteln.

Bei Ausführungsbeispielen können basierend auf dem Zustand des Zahlenfolgengenerators auf den Zustand des Zahlenfolgengenerators [z.B. unmittelbar] folgende Zustände des Zahlenfolgengenerators ermittelbar sein, wobei Controller ausgebildet sein kann, um in Abhängigkeit von den folgenden Zuständen des Zahlenfolgengenerators oder davon abgeleiteten folgenden Zahlen der Zahlenfolge das Kanalzugriffsmuster zu ermitteln.

Bei Ausführungsbeispielen kann der Controller ausgebildet sein, um das Kanalzugriffsmuster in Abhängigkeit von einer individuellen Information des Kommunikationssystems [z.B. einer immanenten Information des Kommunikationssystems, wie z.B. einem netzwerkspezifischen Identifikator] zu ermitteln.

Bei Ausführungsbeispielen kann der Controller ausgebildet sein, um

- den Zustand des Zahlenfolgengenerators, oder eine von dem Zustand des Zahlenfolgengenerators abgeleitete Zahl der Zahlenfolge, oder die Zahl der Zahlenfolge, und
- die individuelle Information des Kommunikationssystems

unter Verwendung einer Abbildungsfunktion auf eine Zeitinformation und eine Frequenzinformation abzubilden, wobei die Zeitinformation und die Frequenzinformation eine Ressource des Kanalzugriffsmusters beschreiben.

Bei Ausführungsbeispielen kann der Controller ausgebildet sein um in Abhängigkeit von

- dem Zustand des Zahlenfolgengenerators oder einer von dem Zustand des Zahlenfolgengenerators abgeleiteten Zahl der Zahlenfolge, oder der Zahl der Zahlenfolge, und
- einer individuellen Information des Kommunikationssystems

eine Pseudozufallszahl R zu ermitteln, wobei die Pseudozufallszahl R das Kanalzugriffsmuster bestimmt.

Bei Ausführungsbeispielen kann der Controller ausgebildet sein, um basierend auf der Pseudozufallszahl R eine Ressource [z.B. Frequenzkanal und/oder Zeitschlitz, oder Frequenzkanalindex und/oder Zeitschlitzindex] des Kanalzugriffsmusters zu ermitteln.

Weitere Ausführungsbeispiele schaffen ein Verfahren zum Erzeugen eines Kanalzugriffsmusters. Das Verfahren umfasst einen Schritt des Erzeugens des Kanalzugriffsmusters, wobei das Kanalzugriffsmuster eine für eine Kommunikation eines Kommunikationssystems verwendbare frequenz- und/oder zeitsprungbasierte Belegung des Frequenzbands angibt, wobei das Kommunikationssystem in einem Frequenzband drahtlos kommuniziert, welches von einer Mehrzahl von Kommunikationssystemen zur Kommunikation genutzt wird, wobei das Kanalzugriffsmuster in Abhängigkeit von einem Zustand eines Zahlenfolgengenerators zur Erzeugung einer Zahlenfolge oder einer Zahl einer Zahlenfolge erzeugt wird.

Weitere Ausführungsbeispiele schaffen ein Kommunikationssystem, wobei das Kommunikationssystem ausgebildet ist, um in einem Frequenzband [z.B. einem lizenzfreien und/oder genehmigungsfreien Frequenzband; z.B. ISM Band], welches von einer Mehrzahl von Kommunikationssystemen zur Kommunikation genutzt wird, drahtlos zu kommunizieren, wobei das Kommunikationssystem ausgebildet ist, um basierend auf einem Kanalzugriffsmuster unterschiedliche Frequenzen oder Frequenzkanäle des Frequenzbands [z.B. in die das Frequenzband unterteilt ist] abschnittsweise [z.B. zeitschlitzweise] für die Kommunikation zu nutzen, unabhängig davon ob diese von einem anderen Kommunikationssystem verwendet werden, wobei sich das Kanalzugriffsmuster von einem anderen Kanalzugriffsmuster, basierend auf dem zumindest ein anderes Kommunikationssystem der Mehrzahl von anderen Kommunikationssystemen auf das Frequenzband zugreift, unterscheidet.

Bei Ausführungsbeispielen kann das Kanalzugriffsmuster eine für die Kommunikation des Kommunikationssystems verwendbare frequenz- und/oder zeitsprungbasierte Belegung [z.B. von Ressourcen] des Frequenzbands angeben [z.B. eine zeitliche Abfolge von für die Kommunikation des Kommunikationssystems verwendbare (z.B. über das Frequenzband verteilte) Frequenzressourcen].

Bei Ausführungsbeispielen kann das Kommunikationssystem ausgebildet sein, um unkoordiniert zu den anderen Kommunikationssystemen in dem Frequenzband zu kommunizieren.

Bei Ausführungsbeispielen kann das Kommunikationssystem ausgebildet sein, um das Kanalzugriffsmuster zu ermitteln.

Bei Ausführungsbeispielen kann das Kanalzugriffsmuster von einer individuellen [z.B. immanenten] Information des Kommunikationssystems abhängig sein.

Bei Ausführungsbeispielen können sich das Kanalzugriffsmuster und das andere Kanalzugriffsmuster in weniger als 20 % der darin festgelegten Ressourcen überlappen.

Bei Ausführungsbeispielen können Teilnehmer des Kommunikationssystems Daten untereinander basierend auf dem Kanalzugriffsmuster abschnittsweise in den unterschiedlichen Kanälen des Frequenzbands übertragen.

Bei Ausführungsbeispielen kann eine Empfangsbandbreite von Teilnehmern des Kommunikationssystems schmaler sein als eine Bandbreite des Frequenzbands.

Weitere Ausführungsbeispiele schaffen ein Verfahren zum Betreiben eines Kommunikationssystems, wobei das Kommunikationssystem in einem Frequenzband [z.B. einem lizenzfreien und/oder genehmigungsfreien Frequenzband; z.B. ISM Band] drahtlos kommuniziert, welches von einer Mehrzahl von Kommunikationssystemen zur Kommunikation genutzt wird. Das Verfahren umfasst einen Schritt des Übertragens von Daten zwischen Teilnehmern des Kommunikationssystems basierend auf einem Kanalzugriffsmuster abschnittsweise in unterschiedlichen Kanälen des Frequenzbands, unabhängig davon ob diese oder eine Untermenge davon von anderen Kommunikationssystemen verwendet werden, wobei sich das Kanalzugriffsmuster von einem anderen Kanalzugriffsmuster basierend auf dem zumindest ein anderes Kommunikationssystem der Mehrzahl von anderen Kommunikationssystemen auf das Frequenzband zugreift, unterscheidet.

Weitere Ausführungsbeispiele schaffen eine Kommunikationsanordnung mit einem ersten Kommunikationssystem und einem zweiten Kommunikationssystem, wobei das erste Kommunikationssystem und das zweite Kommunikationssystem ausgebildet sind, um in dem gleichen Frequenzband [z.B. einem lizenzfreien und/oder genehmigungsfreien Frequenzband; z.B. ISM Band] [z.B. welches von einer Mehrzahl von Kommunikationssystemen zur Kommunikation genutzt wird] drahtlos zu kommunizieren, wobei das erste Kommunikationssystem ausgebildet ist, um unter Verwendung eines ersten Kanalzugriffsmusters unterschiedliche Kanäle des Frequenzbands [z.B. in die das Frequenzband unterteilt ist] abschnittsweise [z.B. zeitschlitzweise] für die Kommunikation zu nutzen, unabhängig davon ob diese oder eine Untermenge davon von einem anderen Kommunikationssystem verwendet werden, wobei das zweite Kommunikationssystem ausgebildet ist, um unter Verwendung eines zweiten Kanalzugriffsmusters unterschiedliche Kanäle des Frequenzbands [z.B. in die das Frequenzband unterteilt ist] abschnittsweise [z.B. zeitschlitzweise] für die Kommunikation zu nutzen, unabhängig davon ob diese oder eine Untermenge davon von einem anderen Kommunikationssystem verwendet werden, wobei das erste Kanalzugriffsmuster und das zweite Kanalzugriffsmuster unterschiedlich sind.

Bei Ausführungsbeispielen können das erste Kommunikationssystem und das zweite Kommunikationssystem untereinander nicht koordiniert sein.

Bei Ausführungsbeispielen können Teilnehmer des ersten Kommunikationssystems Daten untereinander basierend auf dem ersten Kanalzugriffsmuster abschnittsweise in den unterschiedlichen Kanälen des Frequenzbands übertragen.

Bei Ausführungsbeispielen können Teilnehmer des zweiten Kommunikationssystems Daten untereinander basierend auf dem zweiten Kanalzugriffsmuster abschnittsweise in den unterschiedlichen Kanälen des Frequenzbands übertragen.

Bei Ausführungsbeispielen können das erste Kommunikationssystem und das zweite Kommunikationssystem untereinander nicht kommunizieren.

Weitere Ausführungsbeispiele schaffen ein Verfahren zum Betreiben von zwei Kommunikationssystemen in einem Frequenzband, welches von einer Mehrzahl von Kommunikationssystemen zur drahtlosen Kommunikation genutzt wird. Das Verfahren umfasst einen Schritt des Übertragens von Daten zwischen Teilnehmern des ersten Kommunikationssystems basierend auf einem ersten Kanalzugriffsmuster abschnittsweise in unterschiedlichen Kanälen des Frequenzbands, unabhängig davon ob diese oder eine Untermenge davon von anderen Kommunikationssystemen verwendet werden. Ferner umfasst das Verfahren einen Schritt des Übertragens von Daten zwischen Teilnehmern des zweiten Kommunikationssystems basierend auf einem zweiten Kanalzugriffsmuster abschnittsweise in unterschiedlichen Kanälen des Frequenzbands, unabhängig davon ob diese oder eine Untermenge davon von anderen Kommunikationssystemen verwendet werden, wobei das erste Kanalzugriffsmuster und das zweite Kanalzugriffsmuster unterschiedlich sind.

Ausführungsbeispiele erhöhen die Leistungsfähigkeit eines digitalen Funkübertragungssystems, indem die wechselseitige Störung zwischen Teilnehmern unterschiedlicher und untereinander nicht koordinierter Funknetzwerke reduziert werden. Dieser Effekt wird gemäß Ausführungsbeispielen durch die Generierung und Nutzung von Netzwerkindividuellen Kanalzugriffsmustern erzielt, welche bestimmte (unten beschriebene Eigenschaften) aufweisen. Ein besonders großer Nutzen ergibt sich bei Datenübertragung unter Einsatz des Telegram-Splitting-Multiple-Access Verfahrens.

Die erhöhte Leistungsfähigkeit wirkt sich wahlweise (bei gegebener Last) in Form einer verringerten Paketfehlerrate aus oder (bei gegebener Paketfehlerrate) in Form einer höheren Auslastung der Netzwerke.

Ausführungsbeispiele schaffen eine Basisstation eines Kommunikationssystems, wobei das Kommunikationssystem in einem Frequenzband drahtlos kommuniziert, welches von einer Mehrzahl von Kommunikationssystemen zur Kommunikation genutzt wird, wobei die Basisstation ausgebildet ist, um ein Signal zu senden, wobei das Signal eine Information [z.B. Signalisierungsinformation] über ein Kanalzugriffsmuster aufweist, wobei das Kanalzugriffsmuster eine für die Kommunikation des Kommunikationssystems verwendbare frequenz- und/oder zeitsprungbasierte Belegung von Ressourcen [z.B. des Frequenzbands] angibt, wobei zumindest ein Teil der Ressourcen des Kanalzugriffsmusters [d.h. ein Teil der durch das Kanalzugriffsmuster angegebenen Ressourcen] einem konkurrenzfreien Übertragungsabschnitt [z.B. einer konkurrenzfreien Periode] zugewiesen ist, [z.B. in dem die Basisstation einen Zugriff auf die Ressourcen steuert [z.B. einen oder mehreren Endpunkten des Kommunikationssystems zur exklusiven Nutzung zuweist]], wobei das Signal ferner eine Steuerungsinformation zur Steuerung eines Zugriffs auf die Ressourcen des konkurrenzfreien Übertragungsabschnitts [d.h. den Teil der durch das Kanalzugriffsmuster angegebenen Ressourcen, der dem konkurrenzfreien Übertragungsabschnitt zugewiesen ist] aufweist.

Bei Ausführungsbeispielen können einem Endpunkt des Kommunikationssystems exklusiv zugewiesene Ressourcen aus den Ressourcen des konkurrenzfreien Übertragungsabschnittsbasierend auf einer Abbildungsfunktion, die die Steuerungsinformation auf die exklusiv zugewiesenen Ressourcen abbildet, ermittelbar sein.

Bei Ausführungsbeispielen kann die Steuerungsinformation [z.B. ausschließlich] folgende Steuerungsparameter umfassen:

- IDs von Endpunkten des konkurrenzfreien Übertragungsabschnitts [z.B. denen Ressourcen aus den Ressourcen des konkurrenzfreien Übertragungsabschnitts zur exklusiven Nutzung zugewiesenen sind], wobei die Endpunkte des konkurrenzfreien Übertragungsabschnitts Endpunkte einer ersten Klasse von Endpunkten und/oder Endpunkte einer zweiten Klasse von Endpunkten umfasst,
- eine Anzahl an zugewiesenen Ressourcen für jeden der Endpunkte des konkurrenzfreien Übertragungsabschnitts oder eine davon abgeleitete Information, und
- eine Anzahl von Endpunkten, die der ersten Klasse von Endpunkten zugehörig sind.

Bei Ausführungsbeispielen kann die Steuerungsinformation ausschließlich die genannten Steuerungsparameter umfassen.

Bei Ausführungsbeispielen können durch die Steuerungsinformation die IDs der Endpunkte, die der ersten Klasse von Endpunkten zugehörig sind, vor den IDs der Endpunkte, die der zweiten Klasse von Endpunkten zugehörig sind, genannt werden.

Bei Ausführungsbeispielen können folgende Basisparameter vorab bekannt sind oder bei einer Anmeldung eines Endpunkts an der Basisstation zwischen der Basisstation und dem Endpunkt ausgetauscht werden:

- eine Anzahl an Ressourcen des konkurrenzfreien Übertragungsabschnitts,
- ein erstes relatives Kanalzugriffsmuster für eine erste Klasse von Endpunkten, wobei das erste relative Kanalzugriffsmuster für die Übertragung zu verwendende Ressourcen aus den Ressourcen des konkurrenzfreien Übertragungsabschnittsangibt,

- ein zweites relatives Kanalzugriffsmuster für eine zweite Klasse von Endpunkten, wobei das zweite relative Kanalzugriffsmuster für die Übertragung zu verwendende Ressourcen aus den Ressourcen des konkurrenzfreien Übertragungsabschnitts angibt.

Beispielsweise kann die erste Klasse von Endpunkten Endpunkte umfassen, die niedrige Verzögerungszeiten erfordern oder Nachrichten höherer Priorität senden. Beispielsweise kann die zweite Klasse von Endpunkten Endpunkte umfassen, die energieeffizient arbeiten [z.B. batteriebetrieben sind oder mittels eines Energy-Harvesting-Elements betrieben werden] oder Nachrichten niedrigerer Priorität senden.

Bei Ausführungsbeispielen können die Basisparameter bei einer Änderung derselben während des Betriebs des Kommunikationssystems zwischen der Basisstation und den Endpunkten ausgetauscht werden.

Bei Ausführungsbeispielen kann die Steuerungsinformation oder das Signal nicht die Basisparameter oder eine Information über dieselben umfassen.

Bei Ausführungsbeispielen können den Endpunkten des konkurrenzfreien Übertragungsabschnitts exklusiv zugewiesene Ressourcen aus den Ressourcen des konkurrenzfreien Übertragungsabschnitts basierend auf einer Abbildungsfunktion, die die Steuerungsparameter und die Basisparameter auf die jeweiligen exklusiv zugewiesenen Ressourcen abbildet, ermittelbar sein.

Bei Ausführungsbeispielen können gemäß der Abbildungsfunktion den Endpunkten des konkurrenzfreien Übertragungsabschnitts, die der ersten Klasse von Endpunkten zugehörig sind, verfügbare Ressourcen aus den Ressourcen des konkurrenzfreien Übertragungsabschnitts nacheinander in einer Reihenfolge einer Nennung [z.B. Auflistung] der IDs der jeweiligen Endpunkte durch die Signalisierungsinformation die jeweilige durch die Signalisierungsinformation angegebene Anzahl an zugewiesenen Ressourcen entsprechend des ersten relativen Kanalzugriffsmusters exklusiv zugewiesen werden.

Bei Ausführungsbeispielen können gemäß der Abbildungsfunktion den Endpunkten des konkurrenzfreien Übertragungsabschnitts, die der ersten Klasse von Endpunkten zugehörig sind, Ressourcen aus den Ressourcen des konkurrenzfreien Übertragungsabschnitts basierend auf folgender Gleichung exklusiv zugwiesen werden:

$$t_{start}[n] = \sum_{k=0}^{n-1} lenRessourceElementUsers[k]$$

wobei k ein Laufindex ist, wobei n ein aktueller Endpunkt ist mit n ≤ i, wobei i eine Anzahl an Endunkten ist, die der ersten Klasse von Endpunkten zugehörig sind, wobei lenRessourceElementUsers ein Array mit einer Länge der zugewiesenen Ressourcen jedes Endpunkts ist.

Bei Ausführungsbeispielen können gemäß der Abbildungsfunktion den Endpunkten des konkurrenzfreien Übertragungsabschnitts, die der zweiten Klasse von Endpunkten zugehörig sind, verfügbare Ressourcen aus den Ressourcen des konkurrenzfreien Übertragungsabschnitts nacheinander in einer Reihenfolge einer Nennung [z.B. Auflistung] der IDs der jeweiligen Endpunkte durch die Signalisierungsinformation die jeweilige durch die Signalisierungsinformation angegebene Anzahl an zugewiesenen Ressourcen entsprechend des zweiten relativen Kanalzugriffsmusters zugewiesen werden.

Bei Ausführungsbeispielen können gemäß der Abbildungsfunktion den Endpunkten des konkurrenzfreien Übertragungsabschnitts, die der zweiten Klasse von Endpunkten zugehörig sind, Ressourcen aus den Ressourcen des konkurrenzfreien Übertragungsabschnitts basierend auf folgender Gleichung exklusiv zugwiesen werden:

$$t_{start}[n] = \sum_{k=0}^{i-1} lenRessourceElementUsers[k] + (n-i)\%gap + \\ + \begin{Bmatrix} 0 & if\ (n-i) \leq gap \\ \sum lenRessourceElementUsers[(n-i)\%gap : (n-i-1) : gap] & if (n-i) > gap \end{Bmatrix}$$

wobei k ein Laufindex ist, wobei n ein aktueller Endpunkt ist mit n > i, wobei i eine Anzahl an Endunkten ist, die der ersten Klasse von Endpunkten zugehörig sind, wobei lenRessourceElementUsers ein Array mit einer Länge der zugewiesenen Ressourcen jedes Endpunkts ist, wobei gap nicht zugewiesene Ressourcen innerhalb des zweiten Sprungmusters sind.

Bei Ausführungsbeispielen kann die erste Klasse von Endpunkten Endpunkte mit hohen Latenzanforderungen [z.B. Endpunkte, die niedrige Latenzzeiten (engl. low delay] erfordern] umfassen.

Bei Ausführungsbeispielen kann die zweite Klasse von Endpunkten energieeffiziente Endpunkte umfassen.

Bei Ausführungsbeispielen kann das erste relative Kanalzugriffsmuster angeben, dass unmittelbar aufeinander folgende Ressourcen der Ressourcen des konkurrenzfreien Übertragungsabschnitts zu verwenden sind.

Bei Ausführungsbeispielen kann das zweite relative Kanalzugriffsmuster angeben, dass jede p-te Ressource der Ressourcen des konkurrenzfreien Übertragungsabschnitts zu verwenden ist, wobei p eine natürliche Zahl größer gleich zwei ist.

Bei Ausführungsbeispielen kann die Steuerungsinformation ferner folgenden Steuerungsparameter umfassen:

- eine Anzahl an zu parallelisierenden Endpunkten des konkurrenzfreien Übertragungsabschnitts.

Bei Ausführungsbeispielen können gemäß der Abbildungsfunktion verfügbare Ressourcen des konkurrenzfreien Übertragungsabschnitts, die näher an einem Anfang des konkurrenzfreien Übertragungsabschnitts liegen, vor verfügbaren Ressourcen des konkurrenzfreien Übertragungsabschnitts, die näher an einem Ende des konkurrenzfreien Übertragungsabschnitts liegen, zugewiesen werden.

Bei Ausführungsbeispielen kann eine Reihenfolge der Nennung der IDs der Endpunkte, die der zweiten Klasse von Endpunkten zugehörig sind, nach den Anzahlen der jeweilig zugewiesenen Ressourcen sortiert sein, so dass ein Endpunkt, dem eine höhere Anzahl von Ressourcen zugewiesen ist, vor einem Endpunkt genannt ist, dem eine niedrigere Anzahl von Ressourcen zugewiesen ist.

Bei Ausführungsbeispielen kann gemäß der Abbildungsfunktion ein Endpunkt, der der zweiten Klasse von Endpunkten zugehörig ist und dem durch die Signalisierungsinformation eine Anzahl von Ressourcen zugewiesen ist, die unter Berücksichtigung des zweiten relativen Kanalzugriffsmuster zu einer Zugriffsdauer führt, die länger als die konkurrenzfreie Periode ist, in zumindest zwei virtuelle Endpunkte unterteilt werden, wobei den zumindest zwei virtuellen Endpunkten jeweils einen Teil der jeweiligen Anzahl von Ressourcen zugewiesen ist, wobei gemäß der Abbildungsfunktion den zumindest zwei virtuellen Endpunkten verfügbare Ressourcen aus den Ressourcen des konkurrenzfreien Übertragungsabschnitts nacheinander der jeweilige Teil der jeweiligen Anzahl von Ressourcen entsprechend des zweiten relativen Kanalzugriffsmusters exklusiv zugewiesen werden.

Bei Ausführungsbeispielen kann die von der Anzahl an zugewiesenen Ressourcen für jeden der Endpunkte des konkurrenzfreien Übertragungsabschnitts abgeleitete Information eine Huffman codierte Version der Anzahl an zugewiesenen Ressourcen für jeden der Endpunkte des konkurrenzfreien Übertragungsabschnitts sein.

Bei Ausführungsbeispielen kann ein Huffman-Baum der verwendeten Huffman-Codierung vorab bekannt sein oder bei Anmeldung eines Endpunkts an der Basisstation zwischen der Basisstation und dem Endpunkt ausgetauscht werden.

Bei Ausführungsbeispielen kann, wenn sich während des Betriebs des Kommunikationssystems bedingt durch eine Änderung der Anzahl an zugewiesenen Ressourcen eines oder mehrerer Endpunkte eine der verwendeten Huffman-Codierung zugrundeliegende Verteilungsfunktion ändert, ein aktualisierter Huffman-Baum zwischen der Basisstation und zumindest einem Teil der Endpunkte ausgetauscht werden.

Bei Ausführungsbeispielen kann die von der Anzahl an zugewiesenen Ressourcen für jeden der Endpunkte des konkurrenzfreien Übertragungsabschnitts abgeleitete Information eine geringe Auflösung aufweisen als ein Ressourcenelement.

Bei Ausführungsbeispielen kann die von der Anzahl an zugewiesenen Ressourcen für jeden der Endpunkte des konkurrenzfreien Übertragungsabschnitts abgeleitete Information ein Teil von Bits [z.B. eine Anzahl von MSBs; z.B. 4 MSBs] einer digitalen Version der Anzahl an zugewiesenen Ressourcen sein.

Bei Ausführungsbeispielen kann die Steuerungsinformation folgende Parameter umfassen:

- IDs von Endpunkten des konkurrenzfreien Übertragungsabschnitts [z.B. denen Ressourcen aus den Ressourcen des konkurrenzfreien Übertragungsabschnitts zur exklusiven Nutzung zugewiesenen sind].

Bei Ausführungsbeispielen können folgende Basisparameter vorab bekannt sein oder bei einer Anmeldung eines Endpunkts an der Basisstation zwischen der Basisstation und dem Endpunkt ausgetauscht werden:

- eine Anzahl an Ressourcen des konkurrenzfreien Übertragungsabschnitts,
- ein Satz von zumindest zwei unterschiedlichen relativen Kanalzugriffsmustern.

Bei Ausführungsbeispielen können den Endpunkten des konkurrenzfreien Übertragungsabschnitts exklusiv zugewiesene Ressourcen aus den Ressourcen des konkurrenzfreien Übertragungsabschnitts basierend auf einer Abbildungsfunktion, die die Steuerungsparameter nach und die Basisparameter auf die jeweiligen exklusiv zugewiesenen Ressourcen abbildet, ermittelbar sein.

Bei Ausführungsbeispielen können gemäß der Abbildungsfunktion den Endpunkten des konkurrenzfreien Übertragungsabschnitts verfügbare Ressourcen aus den Ressourcen des konkurrenzfreien Übertragungsabschnitts nacheinander in einer Reihenfolge einer Nennung [z.B. Auflistung] der IDs der jeweiligen Endpunkte durch die Signalisierungsinformation entsprechend eines jeweiligen relativen Kanalzugriffsmusters aus dem Satz von zumindest zwei unterschiedlichen relativen Kanalzugriffsmustern, das entsprechend der Reihenfolge der Nennung der IDs der Endpunkte dem jeweiligen Endpunkt zugeordnet ist, exklusiv zugewiesen werden.

Bei Ausführungsbeispielen kann ein anderer Teil der Ressourcen des Kanalzugriffsmusters einer konkurrenzbasierten Periode [z.B. contention based access periode (CAP)] zugewiesen sein.

Bei Ausführungsbeispielen kann die Information einen Zustand eines Zahlenfolgengenerators zur Erzeugung einer Zahlenfolge oder eine Zahl einer Zahlenfolge beschreiben, wobei die Zahlenfolge das Kanalzugriffsmuster bestimmt.

Bei Ausführungsbeispielen kann das Signal ein Baken-Signal sein.

Weitere Ausführungsbeispiele schaffen ein Endpunkt eines Kommunikationssystems, wobei das Kommunikationssystem in einem Frequenzband drahtlos kommuniziert, welches von einer Mehrzahl von Kommunikationssystemen zur Kommunikation genutzt wird, wobei der Endpunkt ausgebildet ist, um ein Signal zu empfangen, wobei das Signal eine Information [z.B. Signalisierungsinformation] über ein Kanalzugriffsmuster aufweist, wobei das Kanalzugriffsmuster eine für die Kommunikation des Kommunikationssystems verwendbare frequenz- und/oder zeitsprungbasierte Belegung des Frequenzbands angibt, wobei der Endpunkt ausgebildet ist, um das Kanalzugriffsmuster basierend auf der Information über das Kanalzugriffsmuster zu ermitteln, wobei zumindest ein Teil der Ressourcen des Kanalzugriffsmusters [d.h. ein Teil der durch das Kanalzugriffsmuster angegebenen Ressourcen] einer konkurrenzfreien Periode zugewiesen ist, [z.B. in der die Basisstation einen Zugriff auf die Ressourcen steuert [z.B. einen oder mehreren Endpunkten des Kommunikationssystems zur exklusiven Nutzung zuweist]], wobei das Signal ferner eine Steuerungsinformation zur Steuerung eines Zugriffs auf die Ressourcen des konkurrenzfreien Übertragungsabschnitts [d.h. den Teil der durch das Kanalzugriffsmuster angegebenen Ressourcen, der dem konkurrenzfreien Übertragungsabschnitt zugewiesen ist] aufweist, wobei der Endpunkt ausgebildet ist, um den Endpunkt exklusiv zugewiesene Ressourcen aus den Ressourcen des konkurrenzfreien Übertragungsabschnitts basierend auf einer Abbildungsfunktion, die die Steuerungsinformation auf die exklusiv zugewiesenen Ressourcen abbildet, zu ermitteln.

Bei Ausführungsbeispielen kann die Steuerungsinformation [z.B. ausschließlich] folgende Steuerungsparameter umfassen:

- IDs von Endpunkten des konkurrenzfreien Übertragungsabschnitts [z.B. denen Ressourcen aus den Ressourcen des konkurrenzfreien Übertragungsabschnitts zur exklusiven Nutzung zugewiesenen sind], wobei die Endpunkte des konkurrenzfreien Übertragungsabschnitts Endpunkte einer ersten Klasse von Endpunkten und/oder Endpunkte einer zweiten Klasse von Endpunkten umfasst,
- eine Anzahl an zugewiesenen Ressourcen für jeden der Endpunkte des konkurrenzfreien Übertragungsabschnitts oder eine davon abgeleitete Information, und
- eine Anzahl von Endpunkten, die der ersten Klasse von Endpunkten zugehörig sind.

Bei Ausführungsbeispielen kann die Steuerungsinformation ausschließlich die genannten Steuerungsparameter umfassen.

Bei Ausführungsbeispielen können durch die Steuerungsinformation die IDs der Endpunkte, die der ersten Klasse von Endpunkten zugehörig sind, vor den IDs der Endpunkte, die der zweiten Klasse von Endpunkten zugehörig sind, genannt werden.

Bei Ausführungsbeispielen können folgende Basisparameter vorab bekannt sein oder bei einer Anmeldung eines Endpunkts an der Basisstation zwischen der Basisstation und dem Endpunkt ausgetauscht werden:

- eine Anzahl an Ressourcen des konkurrenzfreien Übertragungsabschnitts,
- ein erstes relatives Kanalzugriffsmuster für eine erste Klasse von Endpunkten, wobei das erste relative Kanalzugriffsmuster für die Übertragung zu verwendende Ressourcen aus den Ressourcen des konkurrenzfreien Übertragungsabschnitts angibt,
- ein zweites relatives Kanalzugriffsmuster für eine zweite Klasse von Endpunkten, wobei das zweite relative Kanalzugriffsmuster für die Übertragung zu verwendende Ressourcen aus den Ressourcen des konkurrenzfreien Übertragungsabschnitts angibt.

Bei Ausführungsbeispielen können die Basisparameter bei einer Änderung derselben während des Betriebs des Kommunikationssystems zwischen der Basisstation und den Endpunkten ausgetauscht werden.

Bei Ausführungsbeispielen kann die Steuerungsinformation oder das Signal nicht die Basisparameter oder eine Information über dieselben umfassen.

Bei Ausführungsbeispielen kann der Endpunkt ausgebildet sein, um dem Endpunkt durch die Signalisierungsinformation exklusiv zugewiesene Ressourcen aus den Ressourcen des konkurrenzfreien Übertragungsabschnitts basierend auf der Abbildungsfunktion, die die Steuerungsparameter nach Anspruch 33 und die Basisparameter nach Anspruch 36 auf die jeweiligen exklusiv zugewiesenen Ressourcen abbildet, zu ermitteln.

Bei Ausführungsbeispielen können gemäß der Abbildungsfunktion den Endpunkten des konkurrenzfreien Übertragungsabschnitts, die der ersten Klasse von Endpunkten zugehörig sind, verfügbare Ressourcen aus den Ressourcen des konkurrenzfreien Übertragungsabschnitts nacheinander in einer Reihenfolge einer Nennung [z.B. Auflistung] der IDs der jeweiligen Endpunkte durch die Signalisierungsinformation die jeweilige durch die Signalisierungsinformation angegebene Anzahl an zugewiesenen Ressourcen entsprechend des ersten relativen Kanalzugriffsmusters exklusiv zugewiesen werden.

Bei Ausführungsbeispielen können gemäß der Abbildungsfunktion den Endpunkten des konkurrenzfreien Übertragungsabschnitts, die der ersten Klasse von Endpunkten zugehörig sind, Ressourcen aus den Ressourcen des konkurrenzfreien Übertragungsabschnitts basierend auf folgender Gleichung exklusiv zugwiesen werden:

$$t_{start}[n] = \sum_{k=0}^{n-1} lenRessourceElementUsers[k]$$

wobei k ein Laufindex ist, wobei n ein aktueller Endpunkt ist mit $n \leq i$, wobei i eine Anzahl an Endunkten ist, die der ersten Klasse von Endpunkten zugehörig sind, wobei lenRessourceElementUsers ein Array mit einer Länge der zugewiesenen Ressourcen jedes Endpunkts ist.

Bei Ausführungsbeispielen können gemäß der Abbildungsfunktion den Endpunkten des konkurrenzfreien Übertragungsabschnitts, die der zweiten Klasse von Endpunkten zugehörig sind, verfügbare Ressourcen aus den Ressourcen des konkurrenzfreien Übertragungsabschnitts nacheinander in einer Reihenfolge einer Nennung [z.B. Auflistung] der IDs der jeweiligen Endpunkte durch die Signalisierungsinformation die jeweilige durch die Signalisierungsinformation angegebene Anzahl an zugewiesenen Ressourcen entsprechend des zweiten relativen Kanalzugriffsmusters zugewiesen werden.

Bei Ausführungsbeispielen können gemäß der Abbildungsfunktion den Endpunkten des konkurrenzfreien Übertragungsabschnitts, die der zweiten Klasse von Endpunkten zugehörig sind, Ressourcen aus den Ressourcen des konkurrenzfreien Übertragungsabschnitts basierend auf folgender Gleichung exklusiv zugwiesen werden:

$$t_{start}[n] = \sum_{k=0}^{i-1} lenRessourceElementUsers[k] + (n-i)\%gap + \\ + \begin{Bmatrix} 0 & if\ (n-i) \leq gap \\ \sum lenRessourceElementUsers[(n-i)\%gap : (n-i-1) : gap] & if (n-i) > gap \end{Bmatrix}$$

wobei k ein Laufindex ist, wobei n ein aktueller Endpunkt ist mit $n > i$, wobei i eine Anzahl an Endunkten ist, die der ersten Klasse von Endpunkten zugehörig sind, wobei lenRessourceElementUsers ein Array mit einer Länge der zugewiesenen Ressourcen jedes Endpunkts ist, wobei gap nicht zugewiesene Ressourcen innerhalb des zweiten Sprungmusters sind.

Bei Ausführungsbeispielen kann die erste Klasse von Endpunkten Endpunkte mit hohen Latenzanforderungen [z.B. Endpunkte, die niedrige Latenzzeiten (engl. low delay] erfordern] umfassen.

Bei Ausführungsbeispielen kann die zweite Klasse von Endpunkten energieeffiziente Endpunkte umfassen.

Bei Ausführungsbeispielen kann das erste relative Kanalzugriffsmuster angeben, dass unmittelbar aufeinander folgende Ressourcen der Ressourcen des konkurrenzfreien Übertragungsabschnitts zu verwenden sind.

Bei Ausführungsbeispielen kann das zweite relative Kanalzugriffsmuster angeben, dass jede p-te Ressource der Ressourcen des konkurrenzfreien Übertragungsabschnitts zu verwenden ist, wobei p eine natürliche Zahl größer gleich zwei ist.

Bei Ausführungsbeispielen kann die Steuerungsinformation ferner folgenden Steuerungsparameter umfassen:

- eine Anzahl an zu parallelisierenden Endpunkten des konkurrenzfreien Übertragungsabschnitts.

Bei Ausführungsbeispielen können gemäß der Abbildungsfunktion verfügbare Ressourcen des konkurrenzfreien Übertragungsabschnitts, die näher an einem Anfang des konkurrenzfreien Übertragungsabschnitts liegen, vor verfügbaren Ressourcen des konkurrenzfreien Übertragungsabschnitts, die näher an einem Ende des konkurrenzfreien Übertragungsabschnitts liegen, zugewiesen werden.

Bei Ausführungsbeispielen kann eine Reihenfolge der Nennung der IDs der Endpunkte, die der zweiten Klasse von Endpunkten zugehörig sind, nach den Anzahlen der jeweilig zugewiesenen Ressourcen sortiert sein, so dass ein Endpunkt, dem eine höhere Anzahl von Ressourcen zugewiesen ist, vor einem Endpunkt genannt ist, dem eine niedrigere Anzahl von Ressourcen zugewiesen ist.

Bei Ausführungsbeispielen können gemäß der Abbildungsfunktion ein Endpunkt, der der zweiten Klasse von Endpunkten zugehörig ist und dem durch die Signalisierungsinformation eine Anzahl von Ressourcen zugewiesen werden, die unter Berücksichtigung des zweiten relativen Kanalzugriffsmuster zu einer Zugriffsdauer führt, die länger als die konkurrenzfreie Periode ist, in zumindest zwei virtuelle Endpunkte unterteilt wird, wobei den zumindest zwei virtuellen Endpunkten jeweils einen Teil der jeweiligen Anzahl von Ressourcen zugewiesen ist, wobei gemäß der Abbildungsfunktion den zumindest zwei virtuellen Endpunkten verfügbare Ressourcen aus den Ressourcen des konkurrenzfreien Übertragungsabschnitts nacheinander der jeweilige Teil der jeweiligen Anzahl von Ressourcen entsprechend des zweiten relativen Kanalzugriffsmusters exklusiv zugewiesen werden.

Bei Ausführungsbeispielen kann die von der Anzahl an zugewiesenen Ressourcen für jeden der Endpunkte des konkurrenzfreien Übertragungsabschnitts abgeleitete Information eine Huffman codierte Version der Anzahl an zugewiesenen Ressourcen für jeden der Endpunkte des konkurrenzfreien Übertragungsabschnitts sein.

Bei Ausführungsbeispielen kann ein Huffman-Baum der verwendeten Huffman-Codierung vorab bekannt sein oder bei Anmeldung eines Endpunkts an der Basisstation zwischen der Basisstation und dem Endpunkt ausgetauscht werden.

Bei Ausführungsbeispielen kann, wenn sich während des Betriebs des Kommunikationssystems bedingt durch eine Änderung der Anzahl an zugewiesenen Ressourcen eines oder mehrerer Endpunkte eine der verwendeten Huffman-Codierung zugrundeliegende Verteilungsfunktion ändert, ein aktualisierter Huffman-Baum zwischen der Basistation und zumindest einem Teil der Endpunkte ausgetauscht werden.

Bei Ausführungsbeispielen kann die von der Anzahl an zugewiesenen Ressourcen für jeden der Endpunkte des konkurrenzfreien Übertragungsabschnitts abgeleitete Information eine geringe Auflösung aufweisen als ein Ressourcenelement.

Bei Ausführungsbeispielen kann die von der Anzahl an zugewiesenen Ressourcen für jeden der Endpunkte des konkurrenzfreien Übertragungsabschnitts abgeleitete Information ein Teil von Bits einer digitalen Version der Anzahl an zugewiesenen Ressourcen sein.

Bei Ausführungsbeispielen kann die Steuerungsinformation folgende Parameter umfassen:

- IDs von Endpunkten des konkurrenzfreien Übertragungsabschnitts [z.B. denen Ressourcen aus den Ressourcen des konkurrenzfreien Übertragungsabschnitts zur exklusiven Nutzung zugewiesenen sind].

Bei Ausführungsbeispielen können folgende Basisparameter vorab bekannt sein oder bei einer Anmeldung eines Endpunkts an der Basisstation zwischen der Basisstation und dem Endpunkt ausgetauscht werden:

- eine Anzahl an Ressourcen des konkurrenzfreien Übertragungsabschnitts,
- ein Satz von zumindest zwei unterschiedlichen relativen Kanalzugriffsmustern.

Bei Ausführungsbeispielen kann der Endpunkt ausgebildet sein, um dem Endpunkt durch die Signalisierungsinformation exklusiv zugewiesene Ressourcen aus den Ressourcen des konkurrenzfreien Übertragungsabschnitts basierend auf einer Abbildungsfunktion, die die Steuerungsparameter und die Basisparameter auf die jeweiligen exklusiv zugewiesenen Ressourcen abbildet, zu ermitteln.

Bei Ausführungsbeispielen können gemäß der Abbildungsfunktion den Endpunkten des konkurrenzfreien Übertragungsabschnitts verfügbare Ressourcen aus den Ressourcen des konkurrenzfreien Übertragungsabschnitts nacheinander in einer Reihenfolge einer Nennung [z.B. Auflistung] der IDs der jeweiligen Endpunkte durch die Signalisierungsinformation entsprechend eines jeweiligen relativen Kanalzugriffsmusters aus dem Satz von zumindest zwei unterschiedlichen relativen Kanalzugriffsmustern, das entsprechend der Reihenfolge der Nennung der IDs der Endpunkte dem jeweiligen Endpunkt zugeordnet ist, exklusiv zugewiesen werden.

Bei Ausführungsbeispielen kann ein anderer Teil der Ressourcen des Kanalzugriffsmusters einer konkurrenzbasierten Periode [z.B. contention based access periode (CAP)] zugewiesen sein.

Bei Ausführungsbeispielen kann die Information einen Zustand eines Zahlenfolgengenerators zur Erzeugung einer Zahlenfolge oder eine Zahl einer Zahlenfolge beschreiben, wobei die Zahlenfolge das Kanalzugriffsmuster bestimmt.

Bei Ausführungsbeispielen kann das Signal ein Baken-Signal sein.

Weitere Ausführungsbeispiele schaffen ein Kommunikationssystem mit einer Basisstation gemäß einem der hierin beschriebenen Ausführungsbeispiele und zumindest einem Endpunkt gemäß einem der hierin beschriebenen Ausführungsbeispiele.

Weitere Ausführungsbeispiele schaffen ein Verfahren. Das Verfahren umfasst einen Schritt des Sendens eines Signals in einem Kommunikationssystem, wobei das Kommunikationssystem in einem Frequenzband drahtlos kommuniziert, welches von einer Mehrzahl von Kommunikationssystemen zur Kommunikation genutzt wird, wobei das Signal eine Information [z.B. Signalisierungsinformation] über ein Kanalzugriffsmuster aufweist, wobei das Kanalzugriffsmuster eine für die Kommunikation des Kommunikationssystems verwendbare frequenz- und/oder zeitsprungbasierte Belegung von Ressourcen [z.B. des Frequenzbands] angibt, wobei zumindest ein Teil der Ressourcen des Kanalzugriffsmusters [d.h. ein Teil der durch das Kanalzugriffsmuster angegebenen Ressourcen] einer konkurrenzfreien Periode zugewiesen ist, [z.B. in der die Basisstation einen Zugriff auf die Ressourcen steuert [z.B. einen oder mehreren Endpunkten des Kommunikationssystems zur exklusiven Nutzung zuweist]], wobei das Signal ferner eine Steuerungsinformation zur Steuerung eines Zugriffs auf die Ressourcen des konkurrenzfreien Übertragungsabschnitts [d.h. den Teil der durch das Kanalzugriffsmuster angegebenen Ressourcen, der dem konkurrenzfreien Übertragungsabschnitt zugewiesen ist] aufweist.

Weitere Ausführungsbeispiele schaffen ein Verfahren. Das Verfahren umfasst einen Schritt des Empfangens eines Signals in einem Kommunikationssystem, wobei das Kommunikationssystem in einem Frequenzband drahtlos kommuniziert, welches von einer Mehrzahl von Kommunikationssystemen zur Kommunikation genutzt wird, wobei das Signal eine Information [z.B. Signalisierungsinformation] über ein Kanalzugriffsmuster aufweist, wobei das Kanalzugriffsmuster eine für die Kommunikation des Kommunikationssystems verwendbare frequenz- und/oder zeitsprungbasierte Belegung von Ressourcen [z.B. des Frequenzbands] angibt, wobei zumindest ein Teil der Ressourcen des Kanalzugriffsmusters [d.h. ein Teil der durch das Kanalzugriffsmuster angegebenen Ressourcen] einer konkurrenzfreien Periode zugewiesen ist, [z.B. in der die Basisstation einen Zugriff auf die Ressourcen steuert [z.B. einen oder mehreren Endpunkten des Kommunikationssystems zur exklusiven Nutzung zuweist]], wobei das Signal ferner eine Steuerungsinformation zur Steuerung eines Zugriffs auf die Ressourcen des konkurrenzfreien Übertragungsabschnitts [d.h. den Teil der durch das Kanalzugriffsmuster angegebenen Ressourcen, der dem konkurrenzfreien Übertragungsabschnitt zugewiesen ist] aufweist. Das Verfahren umfasst ferner einen Schritt des Ermittelns des Kanalzugriffsmusters basierend auf der Information über das Kanalzugriffsmuster. Das Verfahren umfasst ferner einen Schritt des Ermittelns von exklusiv zugewiesenen Ressourcen aus den Ressourcen des konkurrenzfreien Übertragungsabschnitts basierend auf einer Abbildungsfunktion, die die Steuerungsinformation auf die exklusiv zugewiesenen Ressourcen abbildet.

Ausführungsbeispiele der vorliegenden Erfindung werden bezugnehmend auf die beiliegenden Figuren näher beschrieben. Es zeigen:

Fig. 1 ein schematisches Blockschaltbild einer Kommunikationsanordnung mit einem ersten Kommunikationssystem, gemäß einem Ausführungsbeispiel der vorliegenden Erfindung,

Fig. 2 ein schematisches Blockschaltbild einer Kommunikationsanordnung von zwei untereinander unkoordinierten Netzwerken mit je einer Basisstation und jeweils vier zugehörigen Endgeräten, gemäß einem Ausführungsbeispiel der vorliegenden Erfindung,

Fig. 3 in einem Diagramm eine Aufteilung des Frequenzbands in Ressourcen sowie eine durch zwei unterschiedliche Kanalzugriffsmuster definierte frequenz- und zeitsprungbasierte Belegung der Ressourcen des Frequenzbands, gemäß einem Ausführungsbeispiel der vorliegenden Erfindung,

Fig. 4 ein schematisches Blockschaltbild eines Kommunikationssystems mit einer Basisstation und einer Mehrzahl von Endpunkten, gemäß einem Ausführungsbeispiel der vorliegenden Erfindung,

Fig. 5 ein schematisches Blockschaltbild eines Controllers zur Erzeugung eines Kanalzugriffsmusters, gemäß einem Ausführungsbeispiel der vorliegenden Erfindung,

Fig. 6 ein schematisches Blockschaltbild eines Controllers zur Erzeugung eines Kanalzugriffsmusters, gemäß einem weiteren Ausführungsbeispiel der vorliegenden Erfindung,

Fig. 7 ein schematisches Blockschaltbild eines Ausschnitts des Controllers, gemäß einem Ausführungsbeispiel der vorliegenden Erfindung,

Fig. 8 in einem Diagramm ein auf einer Monte-Carlo-Simulation beruhendes Histogramm über die Variable $\Delta fi$,

Fig. 9 in einem Diagramm eine durch ein Kanalzugriffsmuster definierte frequenz- und zeitsprungbasierte Belegung der Ressourcen des Frequenzbands sowie eine Projektion des Kanalzugriffsmusters auf eine Zeitachse, gemäß einem Ausführungsbeispiel der vorliegenden Erfindung,

Fig. 10 in einem Diagramm auf eine Zeitachse projizierte Ressourcenelemente eines Kanalzugriffsmusters, die in ungenutzten Zeitschlitzen resultiert, gemäß einem Ausführungsbeispiel der vorliegenden Erfindung,

Fig. 11 in einem Diagramm auf eine Zeitachse projizierte Ressourcenelemente eines Kanalzugriffsmusters mit einer Aktivitätsrate A=1/4, gemäß einem Ausführungsbeispiel der vorliegenden Erfindung,

Fig. 12 in einem Diagramm auf eine Zeitachse projizierte Ressourcenelemente eines Kanalzugriffsmusters mit einer Aktivitätsrate A=1/4 und einem vorgegebenen Mindestabstand zwischen aufeinander folgenden Zeitschlitzen des Kanalzugriffsmusters, gemäß einem Ausführungsbeispiel der vorliegenden Erfindung,

Fig. 13 eine zeitliche Aufteilung eines Kanalzugriffsmusters 110 in Bereiche unterschiedlicher Aktivitätsrate A1, A2 und A3, gemäß einem Ausführungsbeispiel der vorliegenden Erfindung,

Fig. 14 in einem Diagramm eine durch ein Kanalzugriffsmuster definierte frequenz- und zeitsprungbasierte Belegung der Ressourcen des Frequenzbands, wobei das Kanalzugriffsmuster zusätzlich bei Bedarf aktivierbare Ressourcen aufweist, gemäß einem Ausführungsbeispiel der vorliegenden Erfindung,

Fig. 15 in einem Diagramm eine durch ein Kanalzugriffsmuster definierte frequenz- und zeitsprungbasierte Belegung der Ressourcen des Frequenzbands, wobei ein regelmäßig stärker gestörter Frequenzbereich des Frequenzbands nicht durch das Kanalzugriffsmuster belegt wird, gemäß einem Ausführungsbeispiel der vorliegenden Erfindung,

Fig. 16 in einem Diagramm eine durch ein Kanalzugriffsmuster definierte frequenz- und zeitsprungbasierte Belegung der Ressourcen des Frequenzbands, wobei Ressourcen im Frequenzbereich gebündelt werden, gemäß einem Ausführungsbeispiel der vorliegenden Erfindung,

Fig. 17 in einem Diagramm einen zeitlichen Ablauf von Datenübertragungen innerhalb eines koordinierten Kommunikationssystems,

Fig. 18a in einem Diagramm einen Ressourcenrahmen bestehend aus Zeitressourcen,

Fig. 18b in einem Diagramm einen Ressourcenrahmen bestehend aus Frequenzressourcen,

Fig. 18c in einem Diagramm einen Ressourcenrahmen bestehend aus Zeit- und Frequenzressourcen,

Fig. 19 in einem Diagramm eine Belegung eines Ressourcenrahmens mit 19 (Zeit-)Ressourcen durch drei Endpunkte, wobei einem ersten Endpunkt die ersten drei Ressourcen, einem zweiten Endpunkt 106_2 die darauffolgenden sechs Ressourcen, und einem dritten Endpunkt die darauffolgende Ressource exklusiv zugewiesen sind,

Fig. 20 ein schematisches Blockschaltbild eines Kommunikationssystems mit einer Basisstation und mehreren Endpunkten, gemäß einem Ausführungsbeispiel der vorliegenden Erfindung,

Fig. 21 in einem Diagramm eine Belegung eines Ressourcenrahmens mit 20 (Zeit-)Ressourcen durch vier Endpunkte, wobei ein erster Endpunkt und ein zweiter Endpunkt mit hohen Latenzanforderungen (engl. low delay) sind, und wobei ein dritter Endpunkt und ein vierter Endpunkt energieeffiziente Endpunkte sind,

Fig. 22 eine schematische Ansicht einer Abbildungsfunktion, die die mit der Bake übertragene Steuerungsinformation (z.B. Steuerungsparameter) und vorab bekannte Parameter (z.B. Basisparameter) auf Ausgangsparameter abbildet, basierend auf denen die den jeweiligen Endpunkten exklusiv zugewiesene Ressourcen der konkurrenzfreien Periode ermittelt werden können,

Fig. 23 in einem Diagramm eine Belegung eines Ressourcenrahmens 20 (Zeit-)Ressourcen durch eine erste Gruppe von vier Endpunkten und drei weiteren Endpunkten, wobei die Gruppe von vier Endpunkten und ein zweiter Endpunkt der drei weiteren Endpunkte hohe Latenzanforderungen (engl. low delay) aufweisen, und wobei ein dritter Endpunkt und ein vierter Endpunkt energieeffiziente Endpunkte sind,

Fig. 24 in einem Diagramm eine Belegung eines Ressourcenrahmens, der 20 Zeitressourcen und 16 Frequenzressourcen (von denen 3 genutzt werden) pro Zeitressource aufweist, durch vier Endpunkte, wobei drei der vier Endpunkte zu parallelisieren sind, wobei ein erster Endpunkt und ein zweiter Endpunkt hohe Latenzanforderungen (engl. low delay) aufweisen, und wobei ein dritter Endpunkt und ein vierter Endpunkt energieeffiziente Endpunkte sind, wobei der vierte Endpunkt eine niedrige Leistungsübertragungsbilanz aufweist,

Fig. 25 in einem Diagramm eine Belegung eines Ressourcenrahmens 20 (Zeit-)Ressourcen durch vier energieeffiziente Endpunkte, wobei einem ersten Endpunkt der vier Endpunkte eine Anzahl von Ressourcen zugewiesen ist, die unter Berücksichtigung des zweiten relativen Kanalzugriffsmuster zu einer Zugriffsdauer führt, die länger als die konkurrenzfreie Periode ist, so dass eine dem ersten Endpunkt zugewiesene Ressource außerhalb des Ressourcenrahmens liegt,

Fig. 26 in einem Diagramm eine Belegung eines Ressourcenrahmens mit 20 (Zeit-)Ressourcen durch einen energieeffizienten Endpunkt, wobei dem Endpunkt eine Anzahl von Ressourcen zugewiesen ist, die gemäß des zweiten relativen Kanalzugriffsmusters zu einer Belegung von Ressourcen führt, bei der eine Ressource außerhalb des Ressourcenrahmens liegt, so dass diese eine Ressource als einem zweiten virtuellen Endpunkt zugehörig angesehen wird, und somit in den Ressourcenrahmen verschoben wird,

Fig. 27 in einem Diagramm eine Belegung eines Ressourcenrahmens 20 (Zeit-)Ressourcen durch vier energieeffiziente Endpunkte, wobei bei der Zuweisung der Ressourcen der erste Endpunkt, dem eine Anzahl von Ressourcen zugewiesen ist, die gemäß des zweiten relativen Kanalzugriffsmusters zu einer Belegung von Ressourcen führt, bei der eine Ressource außerhalb des Ressourcenrahmens liegt, als zwei (virtuelle) Endpunkte angesehen wurde,

Fig. 28 ein Flussdiagramm eines Verfahrens, gemäß einem Ausführungsbeispiel der vorliegenden Erfindung, und

Fig. 29 ein Flussdiagramm eines Verfahrens, gemäß einem Ausführungsbeispiel der vorliegenden Erfindung.

In der nachfolgenden Beschreibung der Ausführungsbeispiele der vorliegenden Erfindung werden in den Figuren gleiche oder gleichwirkende Elemente mit dem gleichen Bezugszeichen versehen, so dass deren Beschreibung untereinander austauschbar ist.

Zunächst wird erläutert wie Kommunikationssysteme, die in dem gleichen Frequenzband kommunizieren, welches ggf. von einer Mehrzahl von Kommunikationssystemen zur Kommunikation genutzt wird, durch unterschiedliche Kanalzugriffsmuster voneinander getrennt werden können, bevor im Anschluss daran erläutert wird, wie ein oder mehreren Teilnehmern des Kommunikationssystems Ressourcen einer konkurrenzfreien Zugriffsperiode zur exklusiven Nutzung effizient zugewiesen werden können.

## A. Netzwerkspezifische Kanalzugriffsmuster

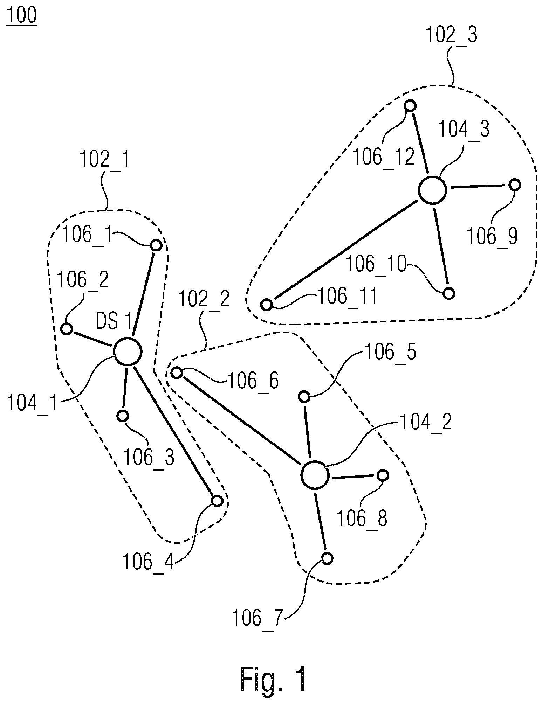

Fig. 1 zeigt ein schematisches Blockschaltbild einer Kommunikationsanordnung 100 mit einem ersten Kommunikationssystem 102_1, gemäß einem Ausführungsbeispiel der vorliegenden Erfindung.

Das erste Kommunikationssystem 102_1 kann eine Basisstation 104_1 und ein oder mehrere Endpunkte 106_1-106J aufweisen, wobei j eine natürliche Zahl größer gleich eins ist. In dem in Fig. 1 gezeigten Ausführungsbeispiel weist das erste Kommunikationssystem 102_1 zur Veranschaulichung vier Endpunkte 106_1-106_4 auf, das erste Kommunikationssystem 104_1 kann jedoch genauso 1, 10, 100, 1.000, 10.000 oder sogar 100.000 Endpunkte aufweisen.

Das erste Kommunikationssystem 102_1 kann ausgebildet sein, um in einem Frequenzband (z.B. einem lizenzfreien und/oder genehmigungsfreien Frequenzband, z.B. ISM Band), welches von einer Mehrzahl von Kommunikationssystemen zur Kommunikation genutzt wird, drahtlos zu kommunizieren. Das Frequenzband kann dabei eine wesentlich größere (z.B. um zumindest den Faktor zwei größere) Bandbreite aufweisen als Empfangsfilter der Teilnehmer des ersten Kommunikationssystems 102_1.

In Reichweite des ersten Kommunikationssystems 102_1 können - wie dies in Fig. 1 angedeutet ist - beispielsweise ein zweites Kommunikationssystem 102_2 und ein drittes Kommunikationssystem 102_3 sein, wobei diese drei Kommunikationssysteme 102_1, 102_2 und 102_3 das gleiche Frequenzband zur drahtlosen Kommunikation nutzen können.

Bei Ausführungsbeispielen kann das erste Kommunikationssystem 102_1 ausgebildet sein, um basierend auf einem Kanalzugriffsmuster unterschiedliche Frequenzen oder Frequenzkanäle des Frequenzbands (z.B. in die das Frequenzband unterteilt ist) abschnittsweise (z.B. zeitschlitzweise) für die Kommunikation zu nutzen, unabhängig davon ob diese von einem anderen Kommunikationssystem (z.B. dem zweiten Kommunikationssystem 102_2 und/oder dem dritten Kommunikationssystem 102_3) verwendet werden, wobei sich das Kanalzugriffsmuster von einem anderen Kanalzugriffsmuster, basierend auf dem zumindest ein anderes Kommunikationssystem der Mehrzahl von anderen Kommunikationssystemen (z.B. dem zweiten Kommunikationssystem 102_2) auf das Frequenzband zugreift, unterscheidet.

In einer solchen Kommunikationsanordnung 100, wie sie in Fig. 1 gezeigt ist, können die Signale untereinander unkoordinierter Kommunikationssysteme (z.B. das erste Kommunikationssystem 102_1 und das zweite Kommunikationssystem 102_2) somit durch unterschiedliche Kanalzugriffsmuster voneinander getrennt werden, so dass eine wechselseitige Störung durch Interferenzen vermieden oder minimiert wird.

Beispielsweise können Teilnehmer des ersten Kommunikationssystems 102_1, wie z.B. eine Basisstation 104_1 und mehrere Endpunkte 106_1-106_4, basierend auf einem ersten Kanalzugriffsmuster (z.B. welches eine für die Kommunikation des ersten Kommunikationssystems 102_1 verwendbare frequenzsprungbasierte Belegung (z.B. von Ressourcen) des Frequenzbands angibt) drahtlos untereinander kommunizieren, während Teilnehmer des zweiten Kommunikationssystems 102_2, wie z.B. eine Basisstation 104_2 und mehrere Endpunkte 106_5-106_8, basierend auf einem zweiten Kanalzugriffsmuster (z.B. welches eine für die Kommunikation des zweiten Kommunikationssystems 102_2 verwendbare frequenzsprungbasierte Belegung (z.B. von Ressourcen) des Frequenzbands angibt) drahtlos untereinander kommunizieren, wobei das erste Kanalzugriffsmuster und das zweite Kanalzugriffsmuster unterschiedlich sind (z.B. eine Überlappung in den verwendeten Ressourcen von weniger als 20% aufweisen, im Idealfall keine Überlappung aufweisen).

Wie bereits erwähnt, sind die Kommunikationssysteme (z.B. das erste Kommunikationssystem 102_1 und das zweite Kommunikationssystem 102_2) untereinander unkoordiniert.

Dass die Kommunikationssysteme 102_1, 102_2, 102_3 untereinander unkoordiniert sind, bezieht sich hierin darauf, dass die Kommunikationssysteme untereinander (= zwischen den Kommunikationssystemen) keine Information über das jeweils verwendete Kanalzugriffsmuster austauschen, oder mit anderen Worten, dass ein Kommunikationssystem keine Kenntnis über das von einem anderen Kommunikationssystem verwendete Kanalzugriffsmuster hat. Dem ersten Kommunikationssystem 102_1 ist somit nicht bekannt, welches Kanalzugriffsmuster von einem anderen Kommunikationssystem (z.B. dem zweiten Kommunikationssystem 102_2) verwendet wird.

Ausführungsbeispiele beziehen sich somit auf eine Kommunikationsanordnung 100 von untereinander unkoordinierten und ggf. untereinander auch unsynchronisierten Funknetzwerken (oder Kommunikationssystemen) 102_1, 102_2 zur Datenübertragung, die auf ein gemeinsam genutztes Frequenzband zugreifen. Mit anderen Worten, es gibt zumindest zwei Funknetzwerke 102_1, 102_2, welche jeweils unabhängig voneinander arbeiten. Beide Netzwerke 102_1, 102_2 setzen dabei das gleiche Frequenzband ein.

Bei Ausführungsbeispielen wird davon ausgegangen, dass bei jeder einzelnen Datenübertragung jeweils nur ein (kleiner) Teil des Frequenzbandes genutzt wird, wie z.B. ein Frequenzkanal oder ein Teilfrequenzkanal. Beispielsweise kann das Frequenzband in (Teil-)Frequenzkanäle zerlegt werden, wobei ein Frequenzkanal eine echte Teilmenge des gesamten Frequenzbandes ist. Die Gesamtheit aller zur Verfügung stehenden Frequenzkanäle konstituiert dabei das genutzte Frequenzband. Die Übertragung einer Nachricht (Datenpaket) kann z.B. im Telegram-Splitting-Verfahren nacheinander über eine Folge unterschiedlicher Frequenzkanäle erfolgen. In diesem Falle sind Ausführungsbeispiele von besonderem Nutzen.

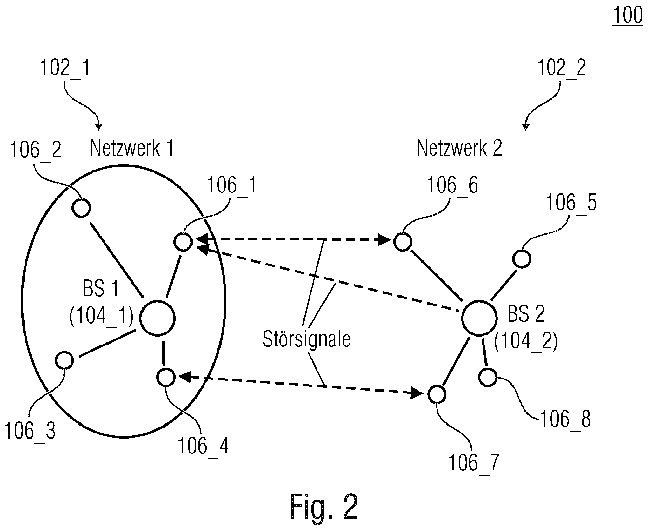

Oftmals sind Netzwerke (oder Kommunikationssysteme) 102_1, 102_2 örtlich so angeordnet, dass Sendesignale von Teilnehmern eines Netzwerks (z.B. des Kommunikationssystems 102_2) auch von Teilnehmern anderer, in der Nähe befindlicher Netzwerke (z.B. des Kommunikationssystems 102_1) empfangbar sind. Mithin treten sie dort als Störsignale (Interferenzen) auf, welche die Leistungsfähigkeit eines Funkübertragungssystems grundsätzlich erheblich beeinträchtigen können, wie dies in Fig. 2 gezeigt ist.

Im Detail zeigt Fig. 2 eine schematische Ansicht von zwei untereinander unkoordinierten Netzwerken 102_1, 102_2 mit je einer Basisstation (BS 1) 104_1, (BS 2) 104_2 und jeweils vier zugehörigen Endgeräten 106_1-106_4, 106_5-106_8. Mit anderen Worten, Fig. 2 zeigt eine beispielhafte Netzwerktopologie für zwei Netzwerke 102_1, 102_2 mit Basisstationen (BS 1) 104_1, (BS 2) 104_2 sowie jeweils vier Endgeräten 106_1-106_4, 106_5-106_8. Die rot gestrichelten Pfeile 108 symbolisieren exemplarisch potentielle Störsignale, d.h. die Funkteilnehmer können die Sendesignale der Teilnehmer aus dem jeweils anderen Netzwerk als Störsignale empfangen. Je nach Gegebenheit kann eine Vielzahl von Netzwerken untereinander in Empfangsreichweite sein, sodass die Teilenehmer (Basisstationen oder Endgeräte) ggf. einer erheblichen Zahl von Störern aus anderen Netzwerken ausgesetzt sein können.

Wird (wie oben erwähnt) das Frequenzband als gemeinsam genutzte Ressource in einzelne, nichtüberlappende Frequenzkanäle unterteilt, so kann die Auswirkung der Störsignale signifikant reduziert werden. In untereinander koordinierten Netzwerken kann jedem Netzwerk ein Teil des Frequenzbands (eine Menge an Frequenzkanälen) exklusiv zugeordnet werden, sodass die wechselseitige Störung (Interferenz) minimiert werden kann. In gänzlich unkoordinierten Netzwerken ist dies nicht möglich.

Bei Ausführungsbeispielen wird daher der Zugriff auf das physikalische Übertragungsmedium (d.h. den physikalischen Funkkanal) in jedem Netzwerk so ausgestaltet, dass zumindest eins aus

a) der Kanalzugriff, d.h. die Frequenz- und Zeitbelegung des Funkkanals, in einem Netzwerk, möglichst wenig Überlappung in Zeit und Frequenz mit dem Kanalzugriff in anderen Netzwerken desselben Standards hat (hoher Grad an "Orthogonalität"),
b) der Kanalzugriff innerhalb gewünschter Vorgaben (z.B. mittlere Zugriffshäufigkeit pro Zeit) einen (pseudo-)zufälligen Charakter hat ("Zufälligkeit"),
c) soweit nach den Vorgaben vermeidbar zwischen Netzwerken keine längeren Sequenzen von (in Zeit und Frequenz) identischem Kanalzugriff auftreten ("Vermeidung systematischer Überlappungen"),
d) alle Frequenzkanäle innerhalb des Frequenzbandes möglichst gleichmäßig genutzt werden, um eine möglichst hohe Frequenzdiversität sowie ggf. die Einhaltung behördlicher, regulatorischer Vorgaben zu erzielen ("Gleichverteilung der Frequenzkanalnutzung"),
e) die Information über Frequenz- und Zeitbelegung des Funkkanals z.B. für zu einem Netzwerk neu hinzukommende Teilnehmer mit möglichst geringem Signalisierungsaufwand übermittelt werden kann ("Reduzierung von Signalisierungsinformation"),

erfüllt ist.

Vereinfacht ausgedrückt wird bei Ausführungsbeispielen eine wechselseitige Störung zwischen mehreren Netzwerken (Inter-Netzwerk-Interferenz) dadurch reduziert, dass der Kanalzugriff auf das gemeinsam genutzte Frequenzband in Frequenz und Zeit unterschiedlich, bevorzugt möglichst "orthogonal" und mit (pseudo-)zufälligem Charakter, erfolgt.

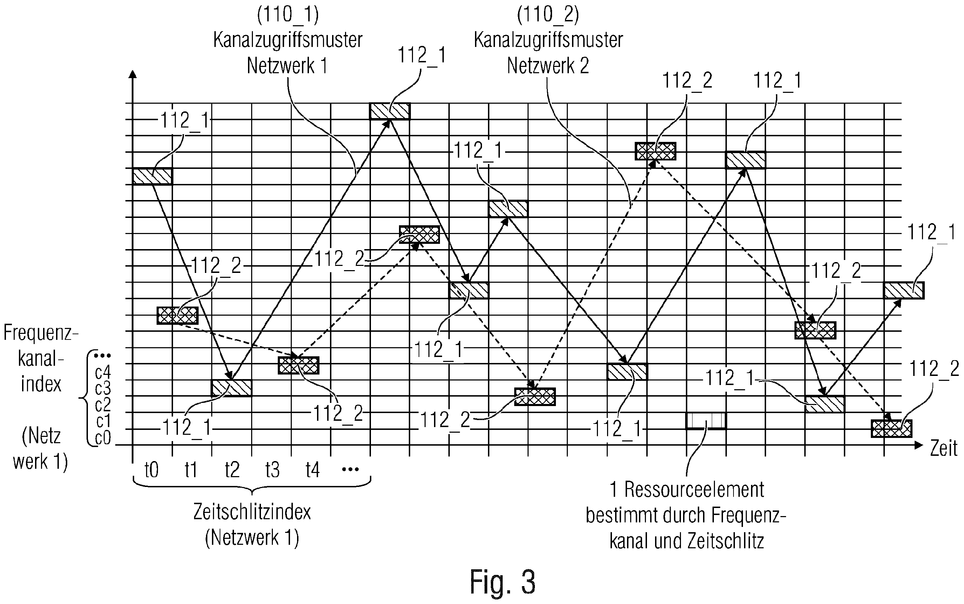

Im Folgenden wird zur Veranschaulichung davon ausgegangen, dass neben der Aufteilung des Frequenzbandes in diskrete Frequenzkanäle (Indizes c0, c1, c2,...) auch eine zeitliche Diskretisierung der Zugriffe innerhalb eines jeden Netzwerks erfolgt. Die zugehörigen zeitlichen Ressourcen werden als Zeitschlitze (engl. Timeslots) bezeichnet und sind in Fig. 3 mit den Indizes t0, t1, t2,... versehen. Beide Anforderungen (Diskretisierung in Frequenz und Zeit) sind jedoch nicht notwendige Voraussetzungen für die Anwendung von Ausführungsbeispielen.

Im Detail zeigt Fig. 3 in einem Diagramm eine Aufteilung des Frequenzbands in Ressourcen sowie eine durch zwei unterschiedliche Kanalzugriffsmuster definierte frequenz- und zeitsprungbasierte Belegung der Ressourcen des Frequenzbands. Dabei beschreibt die Ordinate die Frequenzkanalindizes und die Abszisse die Zeitschlitzindizes.

Beispielsweise können Teilnehmer des ersten Kommunikationssystems 102_1 basierend auf dem ersten Kanalzugriffsmuster 110_1, welches eine für die Kommunikation des ersten Kommunikationssystems 102_1 verwendbare frequenzsprungbasierte Belegung von Ressourcen des Frequenzbands angibt, drahtlos untereinander kommunizieren, während Teilnehmer des zweiten Kommunikationssystems 102_2 basierend auf dem zweiten Kanalzugriffsmuster 110_2, welches eine für die Kommunikation des zweiten Kommunikationssystems 102_2 verwendbare frequenzsprungbasierte Belegung von Ressourcen des Frequenzbands angibt, drahtlos untereinander kommunizieren, wobei das erste Kanalzugriffsmuster und das zweite Kanalzugriffsmuster unterschiedlich sind (z.B. eine Überlappung von weniger als 20% aufweisen, im Idealfall keine Überlappung aufweisen).

Mit anderen Worten, Fig. 3 zeigt in Form eines Gitterrasters eine Übersicht aller grundsätzlich verfügbaren Ressourcen in Frequenz und Zeit (schematische Darstellung der Frequenzkanäle und Zeitschlitze sowie beispielhafte Kanalzugriffsmuster), wobei ein einzelnes Ressourcenelement im ersten Kommunikationsnetzwerk 102_1 durch Zuordnung eines Frequenzkanalindex und eines Zeitschlitzindex bestimmt ist. Beispielhaft sind die durch das erste Kommunikationsnetzwerk 102_1 belegbaren Ressourcen die mit Bezugszeichen 112_1 gekennzeichneten Ressourcenelemente. Die Menge aller innerhalb eines Kommunikationsnetzwerks belegbaren Ressourcen stellt ein Kanalzugriffsmuster 110_1 dar. Für das erste Kommunikationsnetzwerk 102_1 sind dies alle durch Bezugszeichen 112_1 gekennzeichnete Ressourcenelemente, die durch Pfeile verbunden sind. In äquivalenter Weise ist das Kanalzugriffsmuster eines weiteren Kommunikationsnetzwerks (z.B. des zweiten Kommunikationsnetzwerks 102_2) in Fig. 3 beispielhaft eingetragen (alle durch Bezugszeichen 112_2 gekennzeichneten Ressourcenelemente, die durch Pfeile verbunden sind), welches nicht im selben Frequenz- und Zeitraster wie das erste Kommunikationsnetzwerk 102_1 verankert ist (Ressourcenelemente sind in Frequenz und Zeit aus dem Grundraster vom ersten Kommunikationsnetzwerk 102_1 verschoben).

Wichtig ist die Unterscheidung zwischen

- allen grundsätzlich (maximal) verfügbaren Ressourcenelementen, d.h. die Gesamtmenge aller Ressourcenelemente, aus denen das Kanalzugriffsmuster eine geeignete Untermenge auswählt (in Fig. 3 z.B. alle Elemente des Gitternetzes),
- allen in das Kanalzugriffsmuster tatsächlich aufgenommenen Ressourcenelementen (in Fig. 3 alle mit Bezugszeichen 112_1 versehenen Ressourcenelemente) und

- der Menge an Ressourcenelementen (des Kanalzugriffsmusters), die im Netzwerk tatsächlich für eine Datenübertragung belegt werden (es könnte bei geringem Datenaufkommen z.B. nur jedes dritte im Kanalzugriffsmuster vorhandene Ressourcenelement tatsächlich genutzt werden).

Die Gestaltung des Kanalzugriffsmusters bedeutet somit auch eine Festlegung des aktiv nutzbaren Ressourcenvorrats für dieses Kommunikationsnetzwerk (oder Kommunikationssystems).

Im Folgenden werden Ausführungsbeispiele von Basisstationen, Endpunkten und/oder Kommunikationssystemen beschrieben, die zur Kommunikation Kanalzugriffsmuster nutzten, die zumindest eines der oben genannten Kriterien a) bis e) erfüllen. Ferner werden im Folgenden Ausführungsbeispiele der Erzeugung solcher Kanalzugriffsmuster beschrieben.

### A.1. Basisstation, Endpunkt und Kommunikationssystem

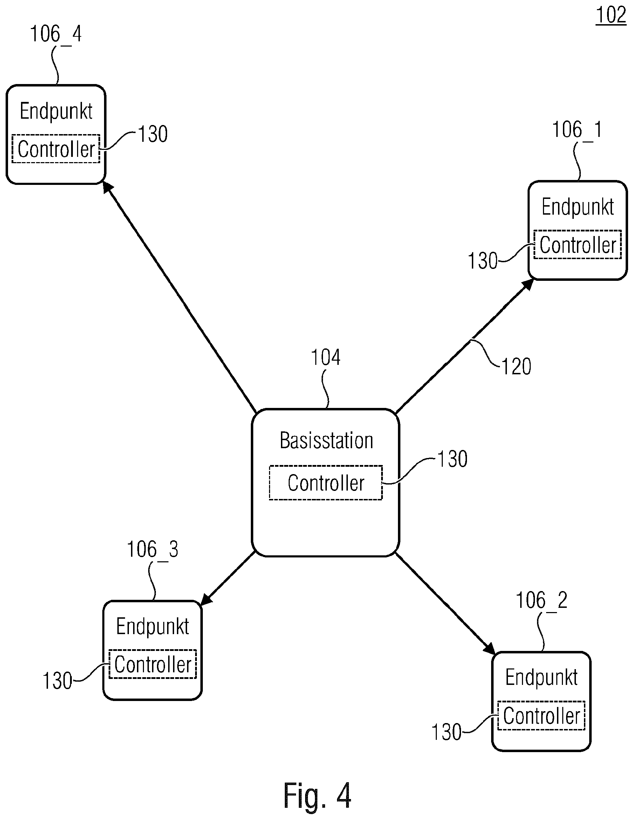

Fig. 4 zeigt ein schematisches Blockschaltbild eines Kommunikationssystems 102 mit einer Basisstation 104 und einer Mehrzahl von Endpunkten 106_1-106_4, gemäß einem Ausführungsbeispiel.

Wie in Fig. 4 gem. einem Ausführungsbeispiel gezeigt ist, kann das Kommunikationssystem 102 eine Basisstation und vier Endpunkte 106_1-106_4 aufweisen. Die vorliegende Erfindung ist jedoch nicht auf solche Ausführungsbeispiele beschränkt, vielmehr kann das Kommunikationssystem ein oder mehrere Endpunkte 106_1-106J aufweisen, wobei j eine natürliche Zahl größer gleich eins ist. Beispielsweise kann das Kommunikationssystem 1, 10, 100, 1.000, 10.000 oder sogar 100.000 Endpunkte aufweisen.

Die Teilnehmer (= Basisstation 104 und Endpunkte 106_1-106_4) des in Fig. 4 gezeigten Kommunikationssystems nutzen zur gegenseitigen Kommunikation ein Frequenzband (z.B. ein lizenzfreies und/oder genehmigungsfreies Frequenzband, z.B. ISM Band), welches von einer Mehrzahl von Kommunikationssystemen zur Kommunikation genutzt wird, wie dies oben in Bezug auf die Fig. 1 bis 3 erläutert wird. Das Kommunikationssystem 102 arbeitet dabei unkoordiniert in Bezug auf die anderen Kommunikationssysteme, die das gleiche Frequenzband nutzen.

Bei Ausführungsbeispielen kann die Basisstation 104 ausgebildet sein, um ein Signal 120 zu senden, wobei das Signal 120 eine Information über ein Kanalzugriffsmuster 110 aufweist, wobei das Kanalzugriffsmuster eine für die Kommunikation des Kommunikationssystems 102 verwendbare frequenz- und/oder zeitsprungbasierte Belegung (z.B. von Ressourcen) des Frequenzbands angibt (z.B. eine zeitliche Abfolge von für die Kommunikation des Kommunikationssystems verwendbaren (z.B. über das Frequenzband verteilten) Frequenzressourcen), wobei die Information einen Zustand eines Zahlenfolgengenerators zur Erzeugung einer Zahlenfolge beschreibt, wobei die Zahlenfolge das Kanalzugriffsmuster bestimmt.

Beispielsweise kann der Zustand des Zahlenfolgengenerators ein innerer Zustand des Zahlenfolgengenerators sein, wobei von dem inneren Zustand des Zahlenfolgengenerators eine Zahl der Zahlenfolge abgeleitet werden kann. Basierend auf dem inneren Zustand des Zahlenfolgengenerators können auch auf den inneren Zustand des Zahlenfolgengenerators folgende innere Zustände des Zahlenfolgengenerators ermittelt werden, von denen auch folgende Zahlen der Zahlenfolge abgeleitet werden können. Beispielsweise kann die Zahl der Zahlenfolge direkt von dem inneren Zustand des Zahlenfolgengenerators abgeleitet werden (z.B. Zustand = Zahl), z.B. bei der Implementierung des Zahlenfolgengenerators als Zähler, oder aber über eine Abbildungsfunktion, z.B. bei der Implementierung des Zahlenfolgengenerators als Schieberegister, ggf. mit Rückkoppelung.

Bei Ausführungsbeispielen kann zumindest einer der Endpunkte 106_1-106_4 ausgebildet sein, um das Signal 120 mit der Information über das Kanalzugriffsmuster 110 zu empfangen, und um das Kanalzugriffsmuster 110 basierend auf der Information über das Kanalzugriffsmuster zu ermitteln, wobei die Information einen Zustand eines Zahlenfolgengenerators zur Erzeugung einer Zahlenfolge beschreibt, wobei die Zahlenfolge das Kanalzugriffsmuster bestimmt.

Beispielsweise kann die Basisstation 104 und/oder zumindest einer der Endpunkte 106_1-106_4 ausgebildet sein, um das Kanalzugriffsmuster in Abhängigkeit von dem Zustand des Zahlenfolgengenerators pseudozufällig zu ermitteln, wie z.B. unter Verwendung einer pseudozufälligen Abbildungsfunktion.

Ferner kann die Basisstation 104 und/oder zumindest einer der Endpunkte 106_1-106_4 ausgebildet sein, um das Kanalzugriffsmuster in Abhängigkeit von einer individuellen Information des Kommunikationssystems (z.B. einer immanenten Information des Kommunikationssystems, wie z.B. einem netzwerkspezifischen Identifikator) pseudozufällig zu ermitteln.

Im Folgenden werden Ausführungsbeispiele der Erzeugung von Kanalzugriffsmustern beschrieben. Die Kanalzugriffsmuster werden hierbei durch die Basisstation 104 erzeugt und können basierend auf dem Signal mit der Information 120 über das Kanalzugriffsmuster von zumindest einem (oder allen) der in Fig. 4 gezeigten Endpunkte 106_1-106_4 ermittelt werden, beispielsweise durch jeweils einen Controller (Steuergerät, Steuereinheit) 130, der in die Basisstation 104 und/oder in die Endpunkte 106_1-106_4 implementiert ist. Die Vorgabe der Kanalzugriffsmuster erfolgt hierbei (ausschließlich) durch die Basisstation 104, während die Endpunkte 106_1-106_4 das Kanalzugriffsmuster nur "kennen", also nach derselben Methode generieren wie die Basisstation 104.

Dabei wird in der folgenden Beschreibung von einem Funkübertragungssystem (oder einer Kommunikationsanordnung) mit mehreren unabhängigen, untereinander unkoordinierten Kommunikationsnetzwerken ausgegangen, deren Teilnehmer wechselseitig in Empfangsreichweite sind, sodass Sendesignale von Teilnehmern eines Netzwerks potentiell als Störsignale für Teilnehmer anderer Netzwerke in Betracht kommen. Für die Anwendung von Ausführungsbeispielen ist es nicht nötig, dass Information (Daten oder Signalisierungsinformation) zwischen unterschiedlichen Netzwerken ausgetauscht wird. Ebenso ist es unerheblich, ob die Netzwerke untereinander zeitlich und/oder in der Frequenz synchronisiert sind.

Ferner wird vorausgesetzt, dass es innerhalb jedes Netzwerks eine koordinierende Instanz gibt (im Folgenden "Basisstation" genannt), welche den nicht-koordinierenden Teilnehmern des Netzwerks (im Folgenden "Endgeräte" oder "Endpunkte" genannt) Information über das innerhalb des Netzwerks angewandte Kanalzugriffsmuster übermitteln kann. Diese Information kann z.B. über regelmäßig ausgesendete Baken-Signale (engl. Beacon) übertragen werden, jedoch auch in unregelmäßigen Abständen übertragen werden oder ggf. dediziert an einzelne Endgeräte oder Gruppen von Endgeräten.

Des Weiteren wird davon ausgegangen, dass das gesamte, zur Übertragung zur Verfügung stehende Frequenzband in eine Vielzahl von einzelnen Frequenzkanälen unterteilt ist, auf die jeweils einzeln oder in Teilmengen (Gruppen von Frequenzkanälen) zugegriffen werden kann.

Ohne Einschränkung der Allgemeinheit und zur besseren Veranschaulichung wird in den folgenden Ausführungen davon ausgegangen, dass innerhalb jedes Netzwerks ein festes, diskretes Zeitraster existiert, zu welchem Kanalzugriffe erfolgen können (siehe auch Fig. 3). Ein Kanalzugriff in Form von Aussendung eines Signals kann sowohl durch Endgeräte als auch durch die Basisstation erfolgen. Ein Kanalzugriff muss jedoch in einer im Kanalzugriffsmuster dafür vorgesehenen Ressource nicht notwendigerweise erfolgen, falls z.B. keine Daten oder sonstigen Informationen zur Übertragung anstehen.

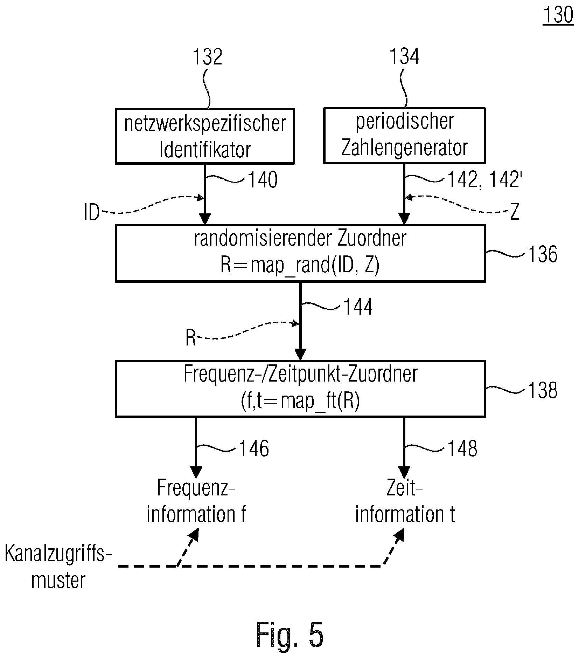

Fig. 5 zeigt ein schematisches Blockschaltbild eines Controllers 130 zur Erzeugung eines Kanalzugriffsmusters, gemäß einem Ausführungsbeispiel der vorliegenden Erfindung.

Wie in Fig. 5 zu erkennen ist, kann der Controller 130 einen Speicher 132, einen periodischen Zahlengenerator 134 zur Erzeugung einer periodischen Zahlenfolge Z, einen randomisierenden Zuordner 136 und einen Frequenz-/Zeitpunkt-Zuordner 138 aufweisen.

Der Speicher (z.B. ein Register) 132 kann ausgebildet sein, um einen netzwerkspezifischen Identifikator ID 140, z.B. eine (individuelle) Bitsequenz, die sich nicht ändert, vorzuhalten. Der periodische Zahlengenerator 134 kann ausgebildet sein, um seinen Zustand 142 oder eine von seinem Zustand abgeleitete Zahl 142' der periodischen Zahlenfolge bereitzustellen. Der randomisierende Zuordner 136 kann ausgebildet sein, um in Abhängigkeit von dem Zustand 142 des Zahlenfolgengenerators 134 oder der davon abgleiten Zahl 142' der periodischen Zahlenfolge und des netzwerkspezifischen Identifikators ID 140 eine Pseudozufallszahl R 144 zu ermitteln. Der Frequenz-/Zeitpunkt-Zuordner 138 kann ausgebildet sein, um basierend auf der Pseudozufallszahl R 144 eine Frequenzinformation f 146 und eine Zeitinformation t 148 zu ermitteln. Beispielsweise können die Frequenzinformation f 146 und die Zeitinformation t 148 einen Frequenzkanal und einen Zeitschlitz (oder einen Frequenzkanalindex und einen Zeitschlitzindex) und somit eine Ressource des Kanalzugriffsmusters beschreiben bzw. definieren.

Der Controller 130 kann beispielsweise - wie dies in Fig. 4 angedeutet ist - in der Basisstation 104 und/oder in dem einen oder den mehreren Endpunkt(en) 106_1-106-4 implementiert sein, um das von dem Kommunikationssystem 102 verwendete individuelle (oder Netzwerk-individuelle) Kanalzugriffsmuster zu berechnen.

Mit anderen Worten, Fig. 5 zeigt die Grundstruktur zur Erzeugung von Kanalzugriffsmustern, gemäß einem Ausführungsbeispiel der vorliegenden Erfindung.

Die Erzeugung der Kanalzugriffsmuster erfolgt iterativ, d.h. die in Fig. 5 dargestellten Blöcke werden einmal pro Erzeugung einer einzelnen Kanalzugriffsinformation aufgerufen. Durch N-maligen Aufruf wird somit ein Kanalzugriffsmuster mit N Kanalzugriffen generiert.

Die Funktion der Teilblöcke wird im Folgenden im Detail erläutert. Es wird der Begriff "Zahl" verwendet. Dabei handelt es sich allgemein um diskrete Information, welche in unterschiedlicher Darstellung (z.B. in dezimaler Form, als binäre Sequenz o.Ä.) vorliegen kann.

Netzwerkspezifischer Identifikator "ID"

Beim netzwerkspezifischen Identifikator handelt es sich um eine feste Zahl, die von einer äußeren Instanz (z.B. bei Konfiguration des Netzwerks bzw. der koordinierenden Basisstation) festgelegt wird. Idealerweise ist sie von Netzwerk zu Netzwerk unterschiedlich. Beispielsweise könnte es sich um eine eindeutige, hinreichend lange Basisstations-ID, eindeutige Netzwerk-ID oder jeweils einen hinreichend langen Hash darüber handeln. Diese Größe ist fest und variiert als einzige in der gezeigten Anordnung nicht von Aufruf zu Aufruf.

Periodischer Zahlengenerator "Z"

Der periodische Zahlengenerator 134 generiert eine sich periodisch mit der Periodizität P wiederholende Folge von Zahlen Z. Er besitzt einen inneren Zustand $S_n$, aus dem sich die nächste erzeugte Zahl und der nächste innere Zustand $S_{n+1}$ eindeutig bestimmen lassen. Das entscheidende Merkmal ist, dass sich bereits aus einem einzigen inneren Zustand (welcher zu einem beliebigen Zeitschritt vorliegt) die gesamte periodische Folge für jeden beliebigen Zeitschritt ableiten lässt. Ein einfaches Ausführungsbeispiel ist z.B. ein Modulo-P-Zähler, der periodisch die Zahlenfolge 0,1,2... (P-1) liefert. Ein weiteres Ausführungsbeispiel ist ein deterministischer Zufallszahlengenerator (engl. pseudo random number generator), z.B. implementiert in Form eine rückgekoppelten Schieberegisters (LFSR). Ein drittes Ausführungsbeispiel ist ein endlicher Körper (engl. Galois field) mit P Elementen.

Randomisierender Zuordner

Der randomisierende Zuordner 136 generiert aus den beiden Eingangszahlen ID und Z eine Ausgangszahl R, d.h. R=*map_rand*(ID, Z), wobei *map_rand* die Zuordnungsfunktion darstellt. Die Zuordnung hat dabei möglichst zufälligen Charakter, d.h. eine mathematisch korrelierte Eingangssequenz (bestehend aus ID, Z) erzeugt eine möglichst in sich unkorrelierte Ausgangssequenz R.

Ausführungsbeispiele für eine randomisierende Zuordnung sind

- Verkettung der beiden Eingangszahlen
- die Anwendung einer zyklischen Redundanzprüfung (engl. cyclic redundancy check, kurz CRC) auf die Eingangsgrößen ID, Z, welche zur Zahl R führt und randomisierenden Charakter hat,
- die Anwendung einer Hash-Funktion
- die Anwendung einer Verschlüsselung, z.B. AES-Verschlüsselung, wobei der zugehörige Schlüssel dabei allen autorisierten Teilnehmern bekannt ist und was somit auch ein Verfahren zur Einbringung von "transport layer security" (kurz TLS) darstellt.

Die Folge der Elemente der Zahl R ist nach obigen Maßgaben pseudozufälliger Natur. Sie sollte von Netzwerk zu Netzwerk unterschiedlich sein, um Überlappungen der Kanalzugriffsmuster möglichst zu vermeiden.

Frequenz-/Zeitpunkt-Zuordner

Der Frequenz-/Zeitpunkt-Zuordner 138 ordnet jeder Eingangszahl R mittels einer Abbildung ein 2-Tupel von Frequenzinformation (Funkfrequenz f) und Zeitinformation (Zugriffszeitpunkt t) zu, d.h. (f,t)=*map_ft*(R), wobei "*map_ft*" die Zuordnungsfunktion darstellt. Während die Abfolge der Frequenzen grundsätzlich beliebig innerhalb des vorgegebenen Frequenzbands sein kann, müssen die Zeitpunkte dabei von Aufruf zu Aufruf in monoton ansteigender Form vorliegen, da "Rücksprünge" in der Zeit nicht zulässig sind.

Von besonderer Bedeutung ist als Ausführungsbeispiel der Fall, dass der Kanalzugriff in Frequenz- und Zeitrichtung (wie weiter oben beschrieben) diskretisiert ist, d.h. in Form von diskreten Frequenzkanälen und diskreten Zeitschlitzen erfolgt. In diesem Fall ordnet der Frequenz-/Zeitpunkt-Zuordner jeder Eingangszahl R ein 2-Tupel von Frequenzkanalindex fi und Zeitschlitzindex ti zu, d.h. (fi,ti)=*map_ft*(R). Die Zeitschlitze werden dabei in zeitlich aufsteigender Reihenfolge indiziert, da "Rücksprünge" in der Zeit nicht zulässig sind. Weitere Ausführungen zur Belegung der Zeitschlitze finden sich in Abschnitt 3.

Die Abfolge der 2-Tupel (f,t) bzw. (fi, ti) basiert auf der Folge der Elemente von R und definiert das Kanalzugriffsmuster.

Die genaue Gestaltung des Frequenz-/Zeitpunkt-Zuordners bestimmt gemeinsam mit der Wahrscheinlichkeitsfunktion der Zahl R die Zugriffsstatistik auf den Kanal.

Zustandssignalisierung und Prädizierbarkeit

Die in Fig. 5 gezeigte Anordnung generiert ein Kanalzugriffsmuster, welches sowohl von einem zeitlich unveränderlichen, netzwerkspezifischen Identifikator als auch von einem zustandsabhängigen (und damit zeitlich veränderlichen) periodischen Zahlengenerator (Periodizität P) abhängt. Über den netzwerkspezifischen Identifikator kann sichergestellt werden, dass Netzwerke mit unterschiedlichen netzwerkspezifischen Identifikatoren stets unterschiedliche Sequenzen von R generieren, selbst wenn ihr Zahlengenerator sich im gleichen Zustand befinden sollte. Damit kann sichergestellt werden, dass unterschiedliche Netzwerke keine identischen Kanalzugriffsmuster erzeugen und somit im ungünstigsten Fall in eine "Dauerkollision" der Kanalzugriffe geraten.

Ein Endgerät benötigt zur Ermittlung des im Netzwerk angewandten Kanalzugriffsmusters sowohl den netzwerkspezifischen Identifikator als auch den jeweiligen Zustand des periodischen Zahlengenerators.

Den *netzwerkspezifischen Identifikator* erhält das Endgerät bereits bei der Erstanmeldung beim Netzwerk. Dieser wird vorteilhafterweise mittels regelmäßig von der Basisstation ausgesandter Baken-Signale (beacon) übermittelt und allen autorisierten Endgeräten zugänglich gemacht. Alternativ kann der netzwerkspezifische Identifikator dem Endgerät auch im Zuge der Erstkonfiguration (mit Auslieferung) bekannt gemacht werden, somit also vor der ersten Inbetriebnahme im Netzwerk.

Der Zustand des *periodischen Zahlengenerators* kann entweder in einem regelmäßigen Baken-Signal und/oder in eigenen, dedizierten Zustands-Signalisierungs-Ressourcen übermittelt werden. Ein Zahlengenerator mit Periodizität P hat P interne Zustände, sodass zur Übermittlung des jeweiligen Zustands $\lceil \log_2(P) \rceil$ Bits übertragen werden müssen. Die pro Zustandssignalisierung übertragene Informationsmenge (Anzahl der Bits) kann somit durch die gewählte Periodizität des Zahlengenerators nach Anforderung gesteuert werden.

Die für die Zustandssignalisierung übertragene Information kann in Form mehrerer Teilinformationen übertragen werden, wobei die Übertragung in unterschiedlicher Häufigkeit erfolgen kann. So könnten als Ausführungsbeispiel für den Fall, dass es sich bei dem periodischen Zahlengenerator (Z) um einen Zähler handelt, die höherwertigen Bits (engl. most significant bits (MSBs)) des Zählers getrennt von den niederwertigen Bits (engl. least significant bits (LSBs)) übertragen werden und auch mit einer anderen Häufigkeit (z.B. seltener). Auch wenn es sich nicht um einen Zähler handelt, könnte die gesamte Zustandsinformation in Form mehrerer Teil-Zustandsinformationen mit unterschiedlicher Übertragungshäufigkeit übertragen werden.

Durch die Periodizität des Zahlengenerators kann ein Endgerät, welchem der Zustand des Zahlengenerators zu mindestens einem Zeitpunkt bekannt ist, das gesamte Kanalzugriffsmuster für beliebige Zeitpunkte/Zeitschlitze in der Zukunft bestimmen. Damit ist es dem Endgerät möglich, in einem energiesparenden Ruhezustand z.B. die Sende-/Empfangseinheit zu deaktivieren und bei der nachfolgenden Aktivierung der Sende-/Empfangseinheit den dann gültigen Abschnitt des Kanalzugriffsmusters aus dem letzten zuvor bekannten Zustand zu prädizieren. Eine Aussendung der Zustandsinformation durch die Basisstation kann somit in vergleichsweise großen zeitlichen Abständen erfolgen.

Zusammenfassend hat das hierin beschriebene Verfahren den Vorteil, dass durch die Kombination eines netzwerkspezifischen Identifikators und eines periodischen Zahlengenerators ein vergleichsweise großer Zustandsraum für die (Pseudozufalls-)Zahl R aufgespannt wird. Damit wird verhindert, dass die Kanalzugriffsmuster von Netzwerken mit unterschiedlichen netzwerkspezifischen Identifikatoren identisch sind, womit eine systematische Kollision der Kanalzugriffe verschiedener, untereinander unkoordinierter Netzwerk minimiert werden kann. Dies erweist sich beim Telegram-Splitting-Multiple-Access (TSMA) Verfahren als besonders vorteilhaft.

Vorteilhafte Merkmale des Frequenz-Zeit-Zuordners werden in den folgenden Abschnitten detaillierter ausgeführt.

Weiteres Ausführungsbeispiel des Controllers

Gemäß Fig. 5 und obiger Beschreibung wird ein periodischer Zahlengenerator 134 benötigt. Dieser wird im folgenden Ausführungsbeispiel wie folgt ersetzt.

Reale Funknetzwerke werden oftmals mit einem Baken-Signal betrieben, welches regelmäßig ausgesendet wird. Jede Baken-Aussendung kann dabei mit einem Zähler versehen werden, welcher einem Baken-Sequenzindex entspricht. Dieser Baken-Sequenzindex wird hier als "Bakenindex" bezeichnet.

Ebenso ist es gebräuchlich, dass in einem zeitschlitzbasierten System die Zeitschlitze mit einem (in Zeitrichtung aufsteigenden) Zeitschlitzindex-Zähler versehen werden (siehe auch Fig. 3). Dieser wird hier als "Zeitschlitzindex" bezeichnet. Der Bakenindex wird in gewissen, im System vorgegebenen Abständen wieder auf null zurückgesetzt, sodass er eine Periodizität aufweist. Entsprechendes gilt für den Zeitschlitzindex (der z.B. nach einer Baken-Aussendung wieder bei null beginnt).

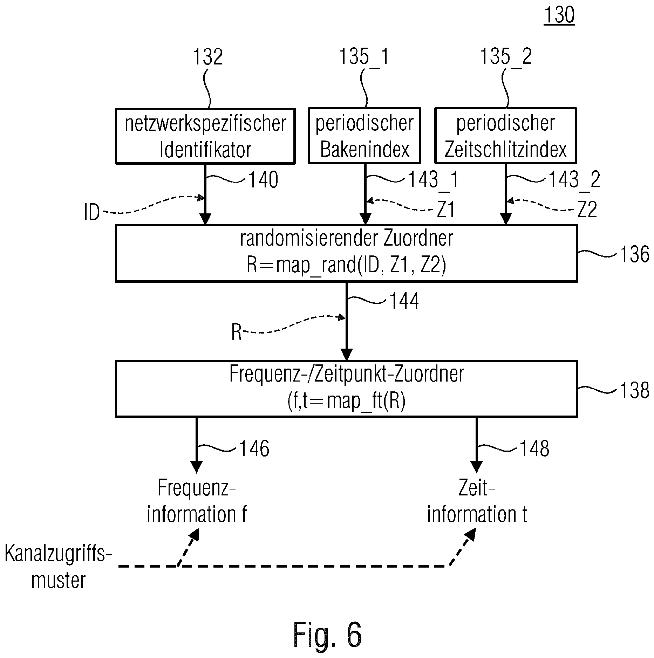

Fig. 6 zeigt ein schematisches Blockschaltbild eines Controllers 130 zur Erzeugung eines Kanalzugriffsmusters, gemäß einem Ausführungsbeispiel der vorliegenden Erfindung.

Der Controller 130 kann einen Speicher 132, einen ersten Zwischenspeicher 135_1, einen zweiten Zwischenspeicher 135_2, einen randomisierenden Zuordner 136 und einen Frequenz-/Zeitpunkt-Zuordner 138 aufweisen.

Der Speicher (z.B. ein Register) 132 kann ausgebildet sein, um einen netzwerkspezifischen Identifikator ID 140, z.B. eine (individuelle) Bitsequenz, die sich nicht ändert, vorzuhalten. Der erste Zwischenspeicher (z.B. ein Register) 135_1 kann ausgebildet sein, um einen periodischen Bakenindex Z1 143_1 vorzuhalten. Der zweite Zwischenspeicher (z.B. ein Register) 135_2 kann ausgebildet sein, um einen periodischen Zeitschlitzindex Z2 143_2 vorzuhalten. Der randomisierende Zuordner 136 kann ausgebildet sein, um in Abhängigkeit von dem periodischen Bakenindex Z1 143_1, dem periodischen Zeitschlitzindex Z2 143_2 und dem netzwerkspezifischen Identifikator ID 140 eine Pseudozufallszahl R 144 zu ermitteln. Der Frequenz-/Zeitpunkt-Zuordner 138 kann ausgebildet sein, um basierend auf der Pseudozufallszahl R 144 eine Frequenzinformation f 146 und eine Zeitinformation t 148 zu ermitteln. Beispielsweise können die Frequenzinformation f 146 und die Zeitinformation t 148 einen Frequenzkanal und einen Zeitschlitz (oder einen Frequenzkanalindex und einen Zeitschlitzindex) und somit eine Ressource des Kanalzugriffsmusters beschreiben bzw. definieren.

Mit anderen Worten, Fig. 6 zeigt eine modifizierte Grundstruktur zur Erzeugung von Kanalzugriffsmustern mit Bakenindex und Zeitschlitzindex. In Fig. 6 ist ein Ausführungsbeispiel dargestellt, in welchem gegenüber dem in Fig. 5 gezeigtem Ausführungsbeispiel der periodische Zahlengenerator (Ausgang Z) 134 durch die beiden Blöcke "periodischer Bakenindex" (Ausgang Z1) 135_1 und "periodischer Zeitschlitzindex" (Ausgang Z2) 135_2 ersetzt wurde. Alle weiteren Blöcke sind funktional unverändert (der Randomisierende Zuordner hat nun drei Eingänge).

Die in Fig. 5 und 6 gezeigten Controller 130 ermöglichen die Erzeugung von Netzwerk-individuellen Kanalzugriffsmustern, wobei diese zumindest eine aus folgenden Eigenschaften aufweisen:

- Die Kanalzugriffsmuster enthalten untereinander möglichst wenige überlappende Teilsequenzen,
- es gibt (z.B. in Bereichen mit hoher Netzwerkdichte) einen großen Vorrat von Kanalzugriffsmustern,
- die Kanalzugriffsmuster sind so gestaltet, dass sie eine sehr hohe Periodizität aufweisen,
- die Kanalzugriffsmuster führen (bei Vorliegen entsprechender Anforderungen) zu einer im Mittel gleichmäßigen Nutzung der zur Verfügung stehenden Frequenzkanäle,
- die Signalisierung des angewandten Musters erfolgt durch die koordinierende Instanz mit möglichst wenig Signalisierungsinformation, und
- Endgeräte können, bereits bei einmaligem, vollständigem Erhalt der Signalisierung des Kanalzugriffsmusters den Inhalt des Kanalzugriffsmusters zu beliebigen, zukünftigen Zeitpunkten bestimmen (dies ermöglicht Endgeräten, z.B. aus Energiespargründen längere Empfangspausen einzulegen und bei Wiedereinschalten dennoch das dann jeweils gültige Kanalzugriffsmuster auf der Basis von vor der Empfangspause erhaltener Information zu ermitteln).

## A.2. Steuerung der Kanalzugriffe im Frequenzbereich

Zur Vereinfachung der folgenden Darstellung wird angenommen, dass der Frequenzbereich (oder das Frequenzband) in diskrete Frequenzkanäle unterteilt ist und dass eine Übertragung nach dem TSMA-Verfahren erfolgt.

Mobilfunkkanäle weisen i.d.R. eine über der Frequenz variierende Signaldämpfung auf. Wird gemäß dem TSMA-Verfahren ein Datenpaket in Form mehrerer Teil-Datenpakete übertragen und ist der zugrundeliegende Mobilfunkkanal im Sender nicht bekannt, so kann die Fehlerrate der Übertragung im Mittel reduziert oder sogar minimiert werden, indem die einzelnen Teil-Datenpakete möglichst über den gesamten Frequenzbereich verteilt übertragen werden (Ausnutzung der Frequenzdiversität).

Aus diesem Grund kann es (insbesondere wenn ein Datenpaket aus nur wenigen Teil-Datenpaketen besteht) vorteilhaft sein, wenn gewährleistet ist, dass die Frequenzkanäle auf denen die Teil-Datenpakete übertragen werden, relativ zueinander einen gewissen (Mindest-)Abstand im Frequenzbereich haben.

Da das Kanalzugriffsmuster innerhalb eines Netzwerks in maßgeblicher Weise das Frequenzsprungverhalten bei TSMA bestimmt, kann mit einem geeigneten Verfahren sichergestellt werden, dass zwischen zwei aufeinanderfolgenden Frequenzkanälen des Kanalzugriffsmusters ein Mindestabstand besteht.

Bei Ausführungsbeispielen kann der Frequenz-/Zeitpunkt-Zuordner 138 (siehe Fig. 5 oder 6) daher ausgebildet sein, um basierend auf der Pseudozufallszahl R eine Frequenzinformation f und eine Zeitinformation t zu ermitteln, wobei die Frequenzinformation f einen Abstand zwischen zwei aufeinanderfolgenden Frequenzkanälen angibt.

Der Frequenz-/Zeitpunkt-Zuordner 138 in Fig. 5 oder 6, der auf Basis der pseudozufälligen Zahl R absolute Frequenzkanäle von Zugriff zu Zugriff unabhängig festlegt, kann also alternativ auch Abstände zwischen zwei aufeinanderfolgenden Frequenzkanälen bestimmen.

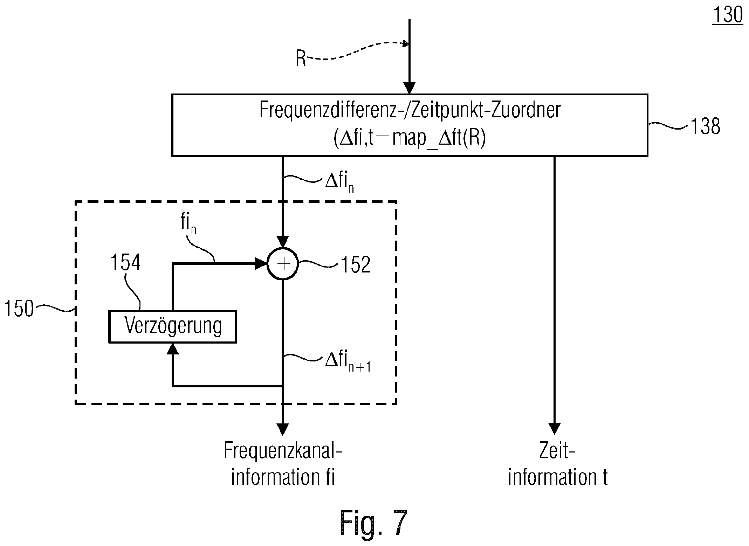

Fig. 7 zeigt ein schematisches Blockschaltbild eines Ausschnitts des Controllers 130, gemäß einem Ausführungsbeispiel. Wie in Fig. 7 zu erkennen ist, kann der Frequenz-/Zeitpunkt-Zuordner 138 (siehe Fig. 5 oder 6) ausgebildet sein, um basierend auf der Pseudozufallszahl R eine Frequenzinformation und eine Zeitinformation zu ermitteln, wobei die Frequenzinformation einen Abstand $\Delta fi_n$ zwischen zwei aufeinanderfolgenden Frequenzkanälen angibt.

Wie in Fig. 7 ferner zu erkennen ist, kann der Controller 130 einen Abbilder 150 aufweisen, der ausgebildet sein kann, um den Abstand $\Delta fi_n$ zwischen zwei aufeinanderfolgenden Frequenzkanälen auf einen Frequenzkanalindex fi abzubilden, beispielsweise durch einen Kombinierer (z.B. Addierer) 152 und ein Verzögerungsglied 154.

Mit anderen Worten, Fig. 7 zeigt die Erzeugung von Frequenzsprüngen mit Mindest- und oder Höchstsprungweite. In Fig. 7 ist dabei veranschaulicht, dass der Frequenz-/Zeitpunkt-Zuordner 138 von Fig. 5 oder 6 nunmehr durch einen Frequenzdifferenz-/Zeitpunkt-Zuordner 138 ersetzt ist, welcher an seinem unmittelbaren Ausgang keine absoluten Frequenzkanalindizes mehr liefert, sondern Frequenzkanalindex-Differenzen.

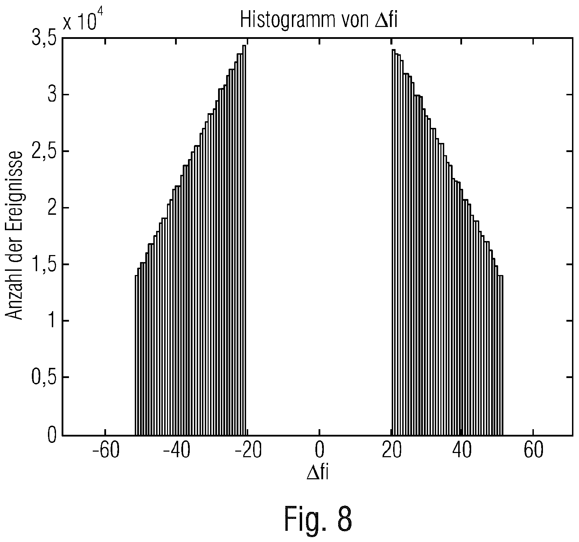

Durch eine geeignete Zuordnungsfunktion ($\Delta$fi,t)=map_$\Delta$ft(R) im Frequenzdifferenz-/Zeitpunkt-Zuordner kann sichergestellt werden, dass nur Frequenzkanalindexsprünge $\Delta fi_n = fi_{n+1} - fi_n$ (von Kanalzugriff n zu Kanalzugriff n+1) erfolgen, welche z.B. innerhalb eines gewünschten Bereichs liegen, z.B. $\Delta fi_{max} \geq \Delta fi \geq \Delta fi_{min}$ für $\Delta fi>0$ und $\Delta fi_{max} \geq (-\Delta fi) \geq \Delta fi_{min}$ für $\Delta fi<0$. Für die Implementierung einer solchen Beschränkung gibt es zahlreiche Verfahren, welche selbst nicht Gegenstand der Erfindung sind. Eine beispielhafte Implementierung in Form eines entsprechenden Programmcodes für MATLAB (mit welchem Fig. 8 erzeugt wurde) findet sich im Anhang.

Fig. 8 zeigt in einem Diagramm ein auf einer Monte-Carlo-Simulation beruhendes Histogramm über die Variable $\Delta fi$ (Differenz des Frequenzkanalindex $\Delta fi$ zwischen zeitl. benachbarten Kanalzugriffen).

Im dargestellten Beispiel stehen 72 Frequenzkanäle zur Verfügung. Die den Simulationsergebnissen zugehörigen Parameter sind $\Delta fi_{min}=21$, $\Delta fi_{max}=51$, d.h. der Betrag des Abstands zwischen zwei im Kanalzugriffsmuster aufeinanderfolgenden Zugriffen beträgt zwischen 21 und 51 Frequenzkanälen.

Durch geeignete, sich dem Fachmann leicht erschließende Modifikationen des beispielhaften Programmcodes lassen sich andere Verteilungsformen für $\Delta fi$ erzeugen (z.B. Gleichverteilung im Bereich von $-\Delta fi_{min}$ bis $-\Delta fi_{max}$ bzw. $+\Delta fi_{min}$ bis $+\Delta fi_{max}$) als in Fig. 8 gezeigt.

**A.3. Vorgabe der zeitlichen Kanalzugriffsaktivität**

In einem hoch ausgelasteten System können alle verfügbaren Zeitschlitze in das Kanalzugriffsmuster mit aufgenommen werden. In weniger stark ausgelasteten Systemen muss nicht jeder Zeitschlitz für den Kanalzugriff zur Verfügung stehen. Dies ist in der folgenden Abbildung dargestellt.

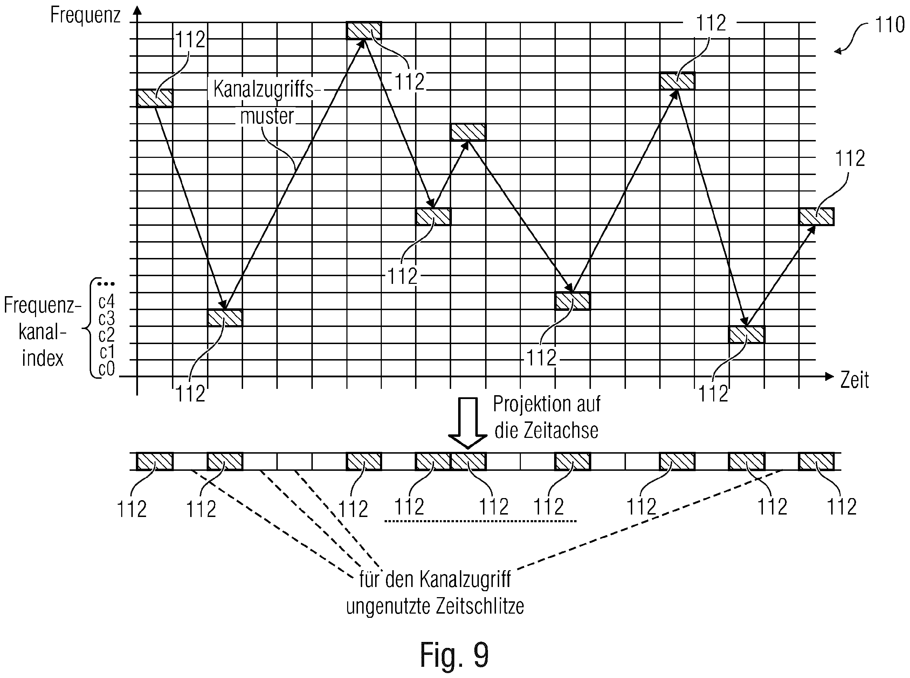

Fig. 9 zeigt in einem Diagramm eine durch ein Kanalzugriffsmuster 110 definierte frequenz- und zeitsprungbasierte Belegung der Ressourcen 112 des Frequenzbands sowie eine Projektion des Kanalzugriffsmusters 110 auf eine Zeitachse, gemäß einem Ausführungsbeispiel der vorliegenden Erfindung. Dabei beschreibt die Ordinate die Frequenzkanalindizes und die Abszisse die Zeitschlitzindizes.

Mit anderen Worten, Fig. 9 zeigt im oberen Teil beispielhaft ein Kanalzugriffsmuster 110 in den Dimensionen Frequenz und Zeit (Ressourcenelemente 112) sowie im unteren Teil dessen Projektion auf die Zeitdimension. Es ist zu erkennen, dass nicht jeder Zeitschlitz Teil des Kanalzugriffsmusters 110 ist.

Damit steht für die Erzeugung eines pseudozufälligen Kanalzugriffsmusters 110 neben der Dimension Frequenz (in Form des Frequenzkanalindex) zusätzlich die Dimension Zeit (in Form des Zeitschlitzindex) zur Verfügung. Bei der Erzeugung eines Kanalzugriffsmusters kann somit eine mittlere Aktivitätsrate A vorgegeben werden. Diese sei hier definiert als mittleres Verhältnis von für den Kanalzugriff genutzten Zeitschlitzen zu insgesamt maximal verfügbaren Zeitschlitzen. Bei Nutzung jedes Zeitschlitzes beträgt die Aktivitätsrate A somit 1 (100%). Wird hingegen im Mittel nur jeder dritte Zeitschlitz ins Kanalzugriffsmuster aufgenommen, so beträgt die mittlere Aktivitätsrate A=1/3.

Die Aktivitätsrate bestimmt also die (zeitliche) Dichte der im Kanalzugriffsmuster 110 angebotenen Ressourcen 112.

Bei Ausführungsbeispielen können die zu einer vorgegebenen Aktivitätsrate für den Kanalzugriff ausgewählten Zeitschlitze pseudozufällig aus einem geeigneten Teil der Pseudozufallszahl R (siehe Fig. 5 oder 6) bestimmt werden.

Ausführungsbeispiel 1

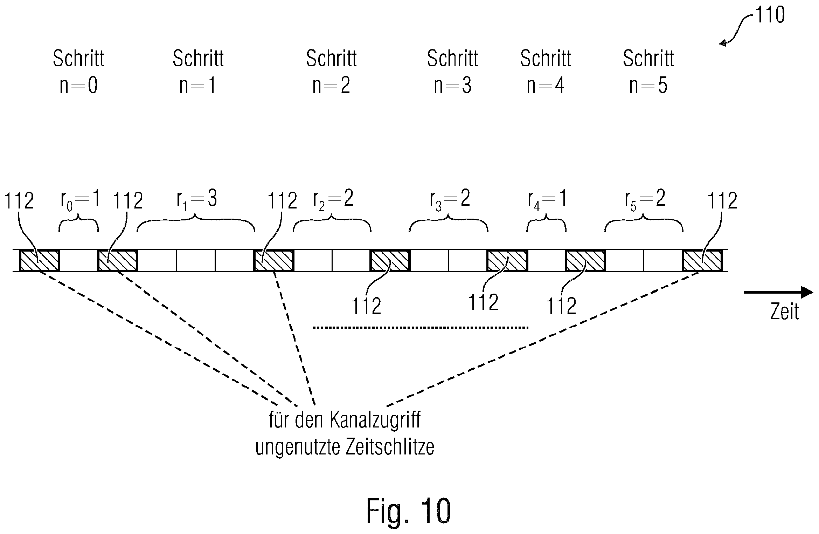

In jedem Schritt n kann aus der zugehörigen Pseudozufallszahl $R_n$ eine ganze Zahl $r_n$ abgeleitet werden, die Werte zwischen $r_{min}$ und $r_{max}$ annehmen kann, d.h. $r_{min} \leq r_n \leq r_{max}$. Nach jedem im Kanalzugriffsmuster 110 aktiven Zeitschlitz kann eine Anzahl von $r_n$ Zeitschlitzen übersprungen werden, diese werden somit nicht für den Kanalzugriff verwendet. Dieser Vorgang ist exemplarisch in Fig. 10 dargestellt.

Im Detail zeigt Fig. 10 in einem Diagramm auf eine Zeitachse projizierte Ressourcenelemente 112 eines Kanalzugriffsmusters 110, die in ungenutzten Zeitschlitzen resultiert, gemäß einem Ausführungsbeispiel.

Mit anderen Worten, Fig. 10 zeigt eine beispielhafte Abfolge von genutzten und ungenutzten Zeitschlitzen, gemäß einem Ausführungsbeispiel.

Wird die Zahl r aus der Zahl R dergestalt abgeleitet, dass die Elemente von r zwischen $r_{min}$ und $r_{max}$ mit gleicher Häufigkeit auftreten (Gleichverteilung), so ergibt sich folgende Aktivitätsrate:

$$A=2/(2+r_{min}+r_{max}).$$

Das im obigen Ausführungsbeispiel vorgestellte Verfahren hat den Vorteil, dass Mindest- und Höchstabstände zwischen den im Kanalzugriffsmuster 110 aktiven Zeitschlitzen vorgegeben werden können. Die Vorgabe von Mindestabständen kann insbesondere bei batteriebetriebenen Geräten vorteilhaft sein, bei denen Sendepausen einer gewissen Mindestlänge zwischen zwei aufeinanderfolgenden Aussendungen (Erholungsphase) die Batterielebensdauer erhöhen.

In vergleichbarer Vorgehensweise lässt sich vorgeben, dass eine Mindestzahl von aktiven Zeitschlitzen direkt aufeinander folgt.

Ausführungsbeispiel 2

Bei einer Implementierung gemäß Ausführungsbeispiel 1 können theoretisch längere Bereiche mit lokal deutlich höherer oder niedrigerer Aktivitätsrate als gewünscht vorkommen. Dieser Effekt wird in dem folgenden Ausführungsbeispiel vermieden.

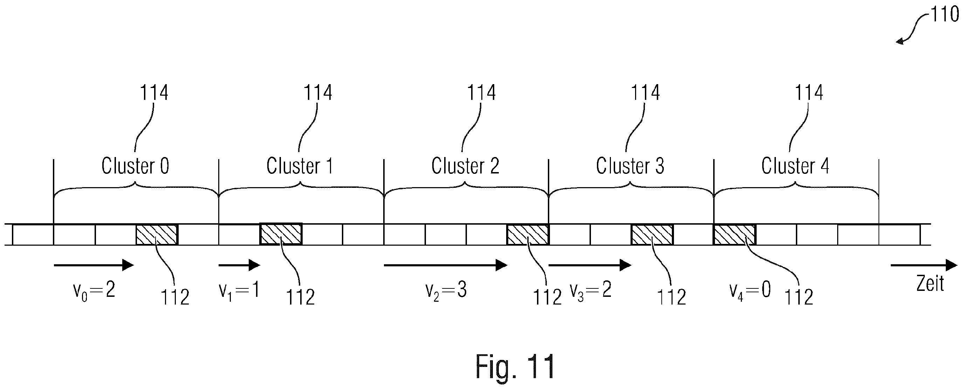

Hierbei werden periodisch Gruppen von aufeinanderfolgenden Zeitschlitzen vorgegeben, innerhalb welcher jeweils ein aktiver Zeitschlitz des Kanalzugriffsmusters platziert wird. Dies ist für eine Aktivitätsrate von 1/4 (25%) in Fig. 11 exemplarisch dargestellt.

Im Detail zeigt Fig. 11 in einem Diagramm auf eine Zeitachse projizierte Ressourcenelemente 112 eines Kanalzugriffsmusters 110 mit einer Aktivitätsrate A=1/4, gemäß einem Ausführungsbeispiel.

Mit anderen Worten, Fig. 11 zeigt eine beispielhafte Abfolge von genutzten und ungenutzten Zeitschlitzen, gemäß einem Ausführungsbeispiel.

Wie in Fig. 11 zu erkennen ist, können die Zeitschlitze zu Clustern 114 (im Beispiel von Fig. 11 der Länge 4) gruppiert werden. In jedem Cluster 114 wird genau ein Zeitschlitz des Kanalzugriffsmusters 110 platziert. Die Position der ins Kanalzugriffsmuster 110 aufgenommenen Zeitschlitze innerhalb des Clusters 114 kann durch eine Verschiebung $v_n$ bestimmt werden, welche von der Pseudozufallszahl $R_n$ abgeleitet und die ganzzahlige Werte zwischen 0 und (Clusterlänge-1) annehmen kann.

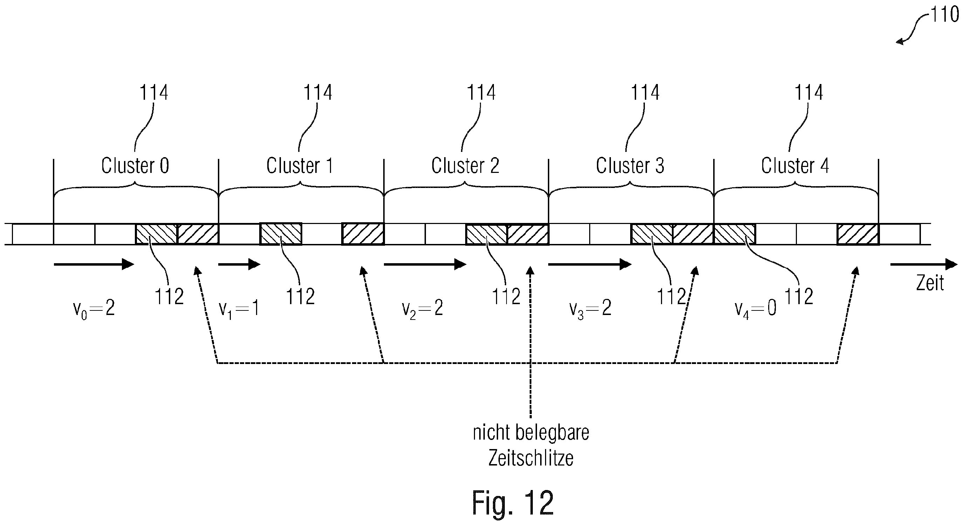

Für den Fall, dass ein Mindestabstand zwischen zwei aufeinanderfolgenden Zeitschlitzen des Kanalzugriffsmusters 110 gewährleistet werden soll, können zwischen den Clustern 114 nicht belegbare Bereiche eingebracht werden. Diese können aus einem oder mehreren Zeitschlitzen bestehen, wie dies in Fig. 12 veranschaulicht ist.

Im Detail zeigt Fig. 12 in einem Diagramm auf eine Zeitachse projizierte Ressourcenelemente 112 eines Kanalzugriffsmusters 110 mit einer Aktivitätsrate A=1/4 und einem vorgegebenen Mindestabstand zwischen aufeinander folgenden Zeitschlitzen des Kanalzugriffsmusters 110, gemäß einem Ausführungsbeispiel.

Mit anderen Worten, Fig. 12 zeigt eine beispielhafte Abfolge von genutzten und ungenutzten Zeitschlitzen mit nicht belegbaren Zeitschlitzen, gemäß einem Ausführungsbeispiel.

Wie in Fig. 12 zu erkennen ist, verringert sich aufgrund der nicht belegbaren Zeitschlitze der zulässige Bereich der Verschiebungsvariablen $v_n$ auf den Wertebereich von 0 bis (Clusterlänge-1-Länge des nicht belegbaren Bereichs).

Je nach gewählter Aktivitätsrate kann es sein, dass die Cluster 114 unterschiedliche Längen aufweisen müssen, um die gewünschte Aktivitätsrate zu erzielen. In diesem Fall variiert der Wertebereich von $v_n$ entsprechend der jeweiligen Clusterlänge. Um z.B. eine Aktivitätsrate von 40% einzustellen, können sich Cluster der Länge zwei und der Länge drei abwechseln.

### A.4. Kanalzugriffsmuster mit Bereichen unterschiedlicher Aktivitätsrate

Datenpakete, die den Empfänger möglichst schnell erreichen sollen (kurze Latzenzzeit), benötigen bei der Übertragung möglichst dicht aufeinanderfolgende Kanalzugriffe, d.h. eine vergleichsweise hohe Aktivitätsrate im Kanalzugriffsmuster.

Bei Datenpaketen, bei denen hingegen die Übertragungssicherheit (z.B. hohe Robustheit gegen externe Störer) im Vordergrund steht, kann eine Verteilung der Aussendung über einen längeren Zeitraum vorteilhaft sein, mithin also eine vergleichsweise niedrige Aktivitätsrate im Kanalzugriffsmuster günstig sein. Dasselbe gilt für Geräte, bei denen eine zeitlich entzerrte Energieentnahme aus der Batterie (zeitlich gestreckte Sendeaktivität) gewünscht wird.

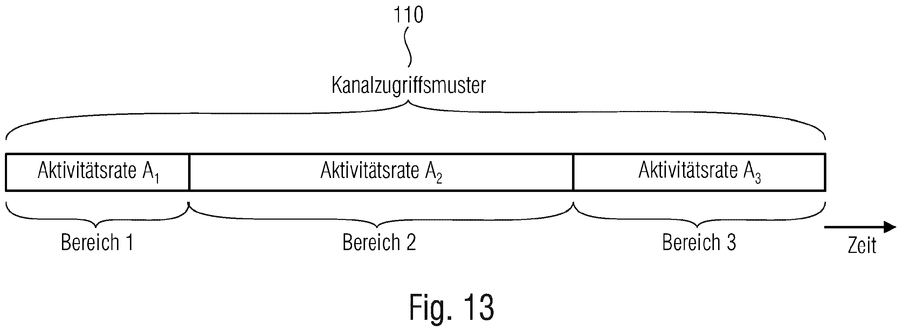

Wie oben dargestellt, kann durch geeignete Maßnahmen die Aktivitätsrate, d.h. die Frequenz des Kanalzugriffs, vorgegeben werden. Um in einem Netzwerk den ggf. unterschiedlichen Anforderungen gerecht zu werden, wird kann ein Kanalzugriffsmuster so gestaltet werden, dass es Bereiche mit unterschiedlichen Aktivitätsraten aufweist. Dies ist in Fig. 13 exemplarisch dargestellt. Je nach individueller Anforderung können Endgeräte dann z.B. in dem für sie geeigneten Bereich senden.

Im Detail zeigt Fig. 13 eine zeitliche Aufteilung eines Kanalzugriffsmusters 110 in Bereiche unterschiedlicher Aktivitätsrate $A_1$, $A_2$ und $A_3$, gemäß einem Ausführungsbeispiel.

Mit anderen Worten, Fig. 13 zeigt ein Beispiel für ein Kanalzugriffsmuster mit drei Bereichen unterschiedlicher Aktivitätsrate innerhalb des Kanalzugriffsmusters 110.

### A.5. Bedarfsabhängige (dynamische) Anpassung der Aktivitätsrate des Kanalzugriffsmusters

In Netzwerken (oder Kommunikationssystemen) 102 können zu unterschiedlichen Zeitpunkten unterschiedliche Lastsituationen vorliegen. Wie weiter oben ausgeführt, kann über die Gestaltung das Kanalzugriffsmusters 110 (d.h. dessen Aktivitätsrate bzw. mittlerer zeitlicher Dichte) eine Festlegung des aktiv nutzbaren Ressourcenvorrats für dieses Netzwerk erfolgen.

Das Bereitstellen eines hohen Ressourcenvorrats (hohe Aktivitätsrate) bei niedriger tatsächlicher Last kann insbesondere bei batteriebetriebenen Geräten nachteilig sein. Als Beispiel sei hier eine batteriebetriebene Basisstation (z.B. eines PAN-Netzwerks, ggf. im sog. Repeaterbetrieb), genannt, welche während aller aktiven Ressourcen des Kanalzugriffsmusters den Empfänger betreibt und damit Energie einsetzt.

Daher kann es sinnvoll sein, die mittlere Aktivitätsrate, also die zeitliche Dichte der durch das Kanalzugriffsmuster 110 angebotenen Ressourcen, den vorliegenden Lastverhältnissen dynamisch anzupassen. Wenn die Aktivitätsrate des Kanalzugriffsmusters 110 geändert ist, wird dies den Teilnehmern im Netzwerk entsprechend signalisiert, wofür z.B. das Baken-Signal (oder auch dedizierte Signalisierungsressourcen) in Frage kommt.

Befindet sich ein Endgerät 106 in einem längeren Ruhezustand (Energiesparmodus), so kann es vorkommen, dass es die während des Ruhezustands ausgesendete Signalisierungsinformation der Basisstation 104 über ein ggf. geändertes Kanalzugriffsmuster nicht erhält. In einem solchen Szenario kann es sinnvoll sein, dass ein Kanalzugriffsmuster 110 einen Mindestvorrat an (Grund-)Ressourcen bereitstellt, der jederzeit und ohne besondere Signalisierung zur Verfügung steht, sowie einen zusätzlichen Vorrat an Ressourcen, der lastabhängig hinzugefügt werden kann und einer entsprechenden Signalisierung unterliegt.

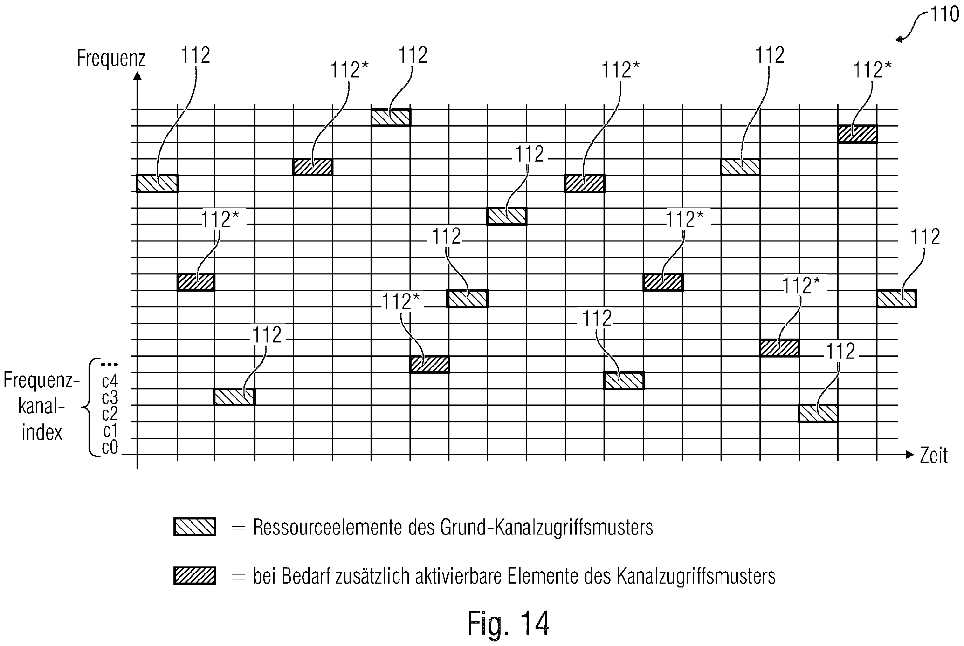

Im obigen Sinne dem Kanalzugriffsmuster zusätzlich hinzugefügte Ressourcen können z.B. zeitlich nach den Grundressourcen angeordnet sein oder auch mit diesen verschränkt im Zeit-/Frequenzraster angeordnet sein, wie dies in Fig. 14 gezeigt ist.

Im Detail zeigt Fig. 14 in einem Diagramm eine durch ein Kanalzugriffsmuster 110 definierte frequenz- und zeitsprungbasierte Belegungen der Ressourcen 112 des Frequenzbands, wobei das Kanalzugriffsmuster 110 zusätzlich bei Bedarf aktivierbare Ressourcen 112* aufweist, gemäß einem Ausführungsbeispiel der vorliegenden Erfindung. Dabei beschreibt die Ordinate die Frequenzkanalindizes und die Abszisse die Zeitschlitzindizes.

Mit anderen Worten, Fig. 14 zeigt ein Beispiel für verschränkte Grund- und Zusatzressourcen.

### A.6. Adaptive Frequenzbereichsbelegung

In bestimmten unlizenzierten Frequenzbändern können Nutzer ohne regulatorische Einschränkungen ggf. selbst entscheiden, welche Frequenzbereiche sie innerhalb des Frequenzbands nutzen. Dies kann dazu führen, dass bestimmte Bereiche des zur Verfügung stehenden Frequenzbands stärker durch externe Nutzer belegt werden als andere und somit stärkeren Störungen ausgesetzt sind.

Wenn eine Basisstation 104 eine solche mittel- oder langfristige asymmetrische Auslastung des Frequenzbands feststellt (z.B. durch frequenzkanalweise Signal-zu-Störleistungs-Schätzungen auf Basis empfangener Signale), kann der überdurchschnittlich stark belegte Bereich des Frequenzbands für die Nutzung durch das eigene Netzwerk gemieden werden, indem die zugehörigen Frequenzkanäle nicht in das Kanalzugriffsmuster mit aufgenommen werden. Dies ist im Frequenz-/Zeitpunkt-Zuordner (siehe Fig. 5 oder 6) zu berücksichtigen und wird allen Netzwerkteilnehmern in geeigneter Weise signalisiert.

Die Gruppe der ausgeklammerten Frequenzkanäle kann z.B. durch einen entsprechenden Start- und Endfrequenzkanalindex oder durch einen Startfrequenzkanalindex und eine folgende Kanalanzahl beschrieben werden.

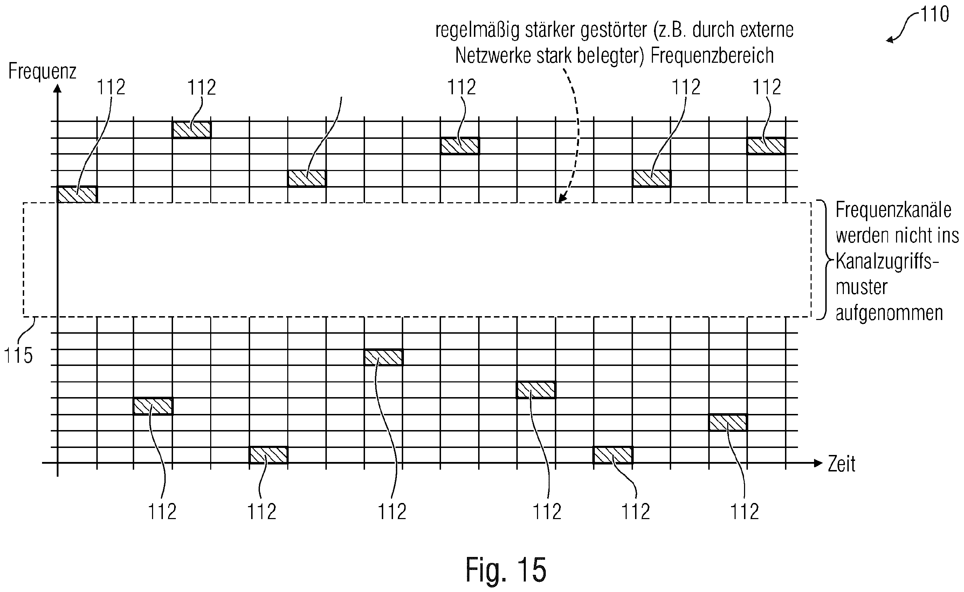

Fig. 15 zeigt in einem Diagramm eine durch ein Kanalzugriffsmuster 110 definierte frequenz- und zeitsprungbasierte Belegungen der Ressourcen 112 des Frequenzbands, wobei ein regelmäßig stärker gestörter Frequenzbereich 115 des Frequenzbands nicht durch das Kanalzugriffsmuster 110 belegt wird, gemäß einem Ausführungsbeispiel der vorliegenden Erfindung. Dabei beschreibt die Ordinate die Frequenzkanalindizes und die Abszisse die Zeitschlitzindizes.

Wie in Fig. 15 zu erkennen ist, wird bei der Erzeugung des Kanalzugriffsmusters 110 ein regelmäßig stärker gestörter (z.B. durch externe Netzwerke stark belegter) Frequenzbereich 115 berücksichtigt. Frequenzkanäle dieses Frequenzbereichs 115 werden somit nicht ins Kanalzugriffsmuster 110 aufgenommen.

Mit anderen Worten, Fig. 15 zeigt ein Beispiel für Ausklammerung stark gestörter Frequenzkanäle aus dem Kanalzugriffsmuster.

Mit der Meidung von störanfälligen Frequenzbereichen für die Datenübertragung im eigenen Netzwerk erfolgt gleichzeitig ein gewisser Lastausgleich über das Frequenzband, indem andere Netzwerke in den bereits stark ausgelasteten Frequenzbereichen keine zusätzlichen Störungen erfahren.

### A.7. Bündelung von Ressourcenelementen im Frequenzbereich (Frequenzkanalbündelung)

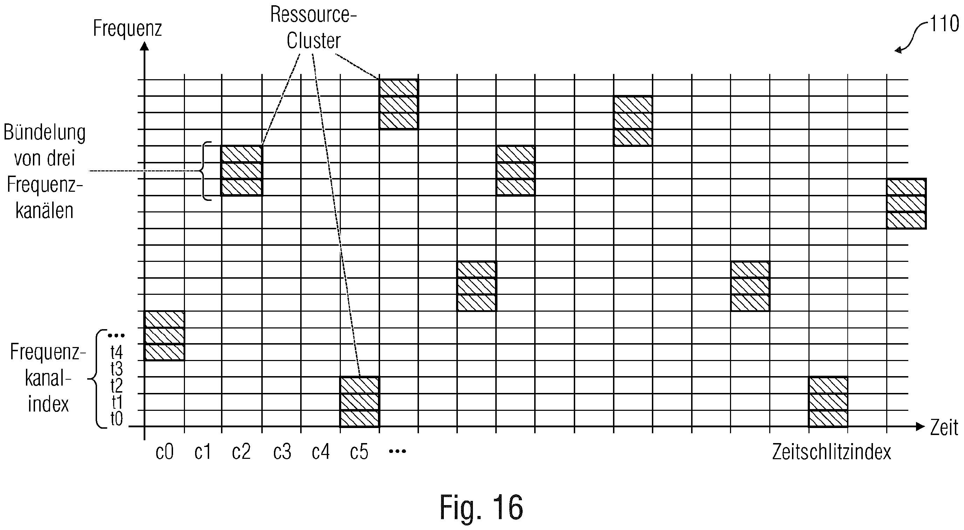

Je nach eingesetzter Hard- und Software ist es möglich, dass eine Basisstation 104 auf mehreren Frequenzkanälen gleichzeitig empfangen kann (Frequenzkanalbündelung). In diesem Fall ist es gerade bei höher ausgelasteten Systemen vorteilhaft, die Anzahl der innerhalb des Netzwerks angebotenen Ressourceelemente in der Frequenzdimension entsprechend zu erhöhen und mehrere Frequenzkanäle innerhalb eines Zeitschlitzes in das Kanalzugriffsmuster aufzunehmen, wie dies in Fig. 16 gezeigt ist.

Im Detail zeigt Fig. 16 in einem Diagramm eine durch ein Kanalzugriffsmuster 110 definierte frequenz- und zeitsprungbasierte Belegungen der Ressourcen 112 des Frequenzbands, wobei Ressourcen 112 im Frequenzbereich gebündelt werden, gemäß einem Ausführungsbeispiel. Dabei beschreibt die Ordinate die Frequenzkanalindizes und die Abszisse die Zeitschlitzindizes.

Mit anderen Worten, Fig. 16 zeigt eine beispielhafte Darstellung des Kanalzugriffsmusters 110 bei Bündelung von je drei benachbarten Frequenzkanälen zu Ressourcen-Clustern. Dabei wird in Fig. 16 beispielhaft die Bündelung von jeweils drei Frequenzkanälen dargestellt. Jede Gruppe von Ressource-Elementen eines Zeitschlitzes kann dabei als "Ressource-Cluster" bezeichnet werden. Das Kanalzugriffsmuster 110 kann hierbei ergänzt werden um die Information über die Anzahl der Frequenzkanäle, die ein Ressource-Cluster konstituieren.

Als weiteres Ausführungsbeispiel sei erwähnt, dass die zu Ressource-Clustern gruppierten Frequenzkanäle nicht notwendigerweise unmittelbar benachbart sein müssen.

Im Folgenden wird aufgezeigt, wie ein oder mehrere Teilnehmer eines Kommunikationssystems 102 unter Verwendung eines relativen Kanalzugriffsmusters auf eine Auswahl der durch das netzwerkspezifische Kanalzugriffsmuster 110 für das Kommunikationssystem 102 freigegebene Ressourcen zugreifen können.

## 8. Effiziente Signalisierung von Sprungmustern in zugewiesenen Ressourcen

Es wird im Folgenden vorausgesetzt, dass es innerhalb des Netzwerks 102_1 (oder Kommunikationssystems) eine koordinierende Instanz (im Folgenden Basisstation 104 genannt) sowie nicht-koordinierende Teilnehmer (im Folgenden Endgeräte bzw. Endpunkte genannt) gibt.

Damit sich die Endpunkte 106_1-106J zur Basisstation 104 koordinieren können, sendet die Basisstation 104 in bekannten (z.B. regelmäßigen) Abständen eine Bake 120 (oder Baken-Signal; engl. beacon) aus, wie dies in Abschnitt A erläutert wurde. Die Endpunkte 106_1-106J können diese Bake 120 empfangen, sich darauf koordinieren und ggf. Daten zu in der Bake 120 signalisierten Zeiten empfangen und auch aussenden.

Ein solcher Ansatz wird auch in [6] eingesetzt.

In Kommunikationssystemen wird neben einem konkurrenzbasierten Zugriff (engl. contention based access) (z.B. in vorgegebenen Zeitintervallen) häufig auch ein exklusiver Zugriff auf zugewiesene Ressourcen (engl. contention free access) angeboten. Vorteil der Zuweisung von Ressourcen ist die verminderte Störanfälligkeit, da Störungen durch andere Endpunkte des gleichen Kommunikationssystems ausgeschlossen werden können. Auch lässt sich der Durchsatz des Kommunikationssystems erhöhen, da nun alle Teilnehmer (z.B. Basisstation und/oder Endpunkte) die Ressourcen ohne Konflikte mit anderen Teilnehmern nutzen können.

Die Zuweisung von exklusiven Ressourcen besitzt jedoch auch Nachteile. Beispielsweise müssen allen Endpunkten 106_1-106_j, denen exklusive Ressourcen zur Verfügung gestellt werden sollen, in der Bake 120 die jeweilige Nutzerkennung (z.B. ID (ID = Identifikation) oder EUI (EUI = Extended Unique Identifier)), die Länge der zugewiesenen Ressourcen, der Startzeitindex, ggf. ein Frequenzindex, ggf. ein Sprungmuster und weitere Parameter mitgeteilt werden.

Diese Parameter werden bei herkömmlichen Kommunikationssystemen in der Bake 120 übertragen. Diese Bake 120 muss jedoch von allen Endpunkten 106_1-106J empfangen werden, da die Endpunkte 106_1-106J erst nach dem Empfang der Bake 120 (z.B. wegen einer Verschlüsselung der Daten) auswerten können, ob die übertragene Information für die jeweiligen Endpunkte 106_1-106J von Relevanz ist oder nicht. Umso mehr Endpunkte 106_1-106J innerhalb der Bake 120 koordiniert werden müssen, desto länger ist die Übertragungsdauer der Bake 120 und somit auch der Stromverbrauch der Endpunkte 106_1-106J.

An diesem Punkt setzen die nachfolgend beschriebenen Ausführungsbeispiele an.

Bei Ausführungsbeispielen wird die Größe der zu übertragenen Daten innerhalb der Bake 120 reduziert. Damit reduziert sich ebenfalls die Übertragungsdauer und somit auch der Stromverbrauch in den Endpunkten 106_1-106J.

Dies stellt gerade in großen Kommunikationssystemen 102_1 (z.B. Netzwerken) mit sehr vielen Endpunkten 106_1-106J einen signifikanten Vorteil dar, wenn die Endpunkte 106_1-106J nur batteriebetrieben sind. Sind beispielsweise j = 100.000 Endpunkte 106_1-106J mit einer Basisstation 104 verbunden, von denen die Basisstation 104 beispielsweise nach der nächsten Bake 120 drei Endpunkten feste Ressourcen zuweisen möchte, müssen ebenfalls die 99.997 anderen Endpunkte die Bake 120 empfangen, obwohl die Information nicht für diese Endpunkte bestimmt ist. Kann die Dauer der Bake 120 um beispielsweise 25% reduziert werden, ergibt sich eine nicht signifikant kleine Einsparung von Stromverbrauch an den Endpunkten 106_1-106J.

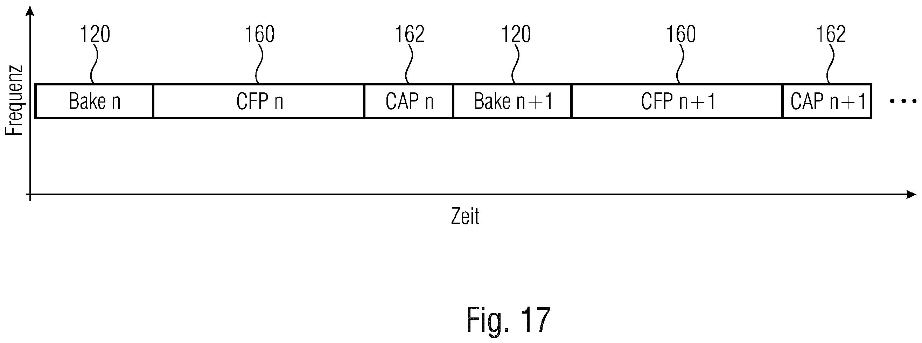

Zur Erläuterung der durch Ausführungsbeispiele ermöglichten Reduktion der Datenmenge, welche in der Bake 120 zur Signalisierung der Ressourcen an spezielle Endpunkte übertragen wird, wird zunächst anhand der Fig. 17 der zeitliche Ablauf von Datenübertragungen innerhalb eines koordinierten Kommunikationssystems und die dahinterliegende Logik erläutert.

Im Detail zeigt Fig. 17 in einem Diagramm einen zeitlichen Ablauf von Datenübertragungen innerhalb eines koordinierten Kommunikationssystems. Dabei beschreibt die Ordinate die Frequenz und die Abszisse die Zeit. Mit anderen Worten, Fig. 17 zeigt einen beispielhaften zeitlichen Aufbau eines koordinierten Kommunikationssystems zur Datenübertragung.

Nach der Bake 120 (engl. beacon) folgt eine Periode 160 (konkurrenzfreie Periode; engl. contention free period (CFP)), in welcher die Basisstation 104 ausgewählten Endpunkten (oder auch einer Gruppe von Endpunkten (z.B. bei Multicast)) Ressourcen zuweist (engl. contention free access). Diese Ressourcen können dann nur von den jeweiligen Endpunkten belegt werden. Typischerweise werden in dieser Periode 160 mehr als einem der Endpunkte Ressourcen zugewiesen, so dass eine Aufteilung der Ressourcen zwischen den Endpunkten erfolgt. Diese Aufteilung wird zuvor in der Bake 120 signalisiert, damit es zu keinen Kollisionen zwischen den Endpunkten kommt.

Nach der konkurrenzfreien Periode 160 kann eine konkurrenzbasierte Periode 162 (engl. contention based access period) folgen in welcher ein konkurrenzbasierter Zugriff erfolgt. Die Reihenfolge und die Dauer der Perioden 160 und 162 nach der Bake 120 sind austauschbar und dynamisch anpassbar.

Die Ressourcen der Bake 120 als auch Ressourcen der konkurrenzfreien Periode 160 (engl. contention free access Periode (CFP)) und der konkurrenzbasierten Periode (engl. contention based access Periode (CAP)) können mittels eines Kanalzugriffsmusters 110 nach Abschnitt A festgelegt werden. Dieses Kanalzugriffsmuster 110 definiert die zur Verfügung gestellten Ressourcen, welche unter den Endpunkten 106_1-106J aufgeteilt werden (sog. hierarchisches Telegram Splitting).

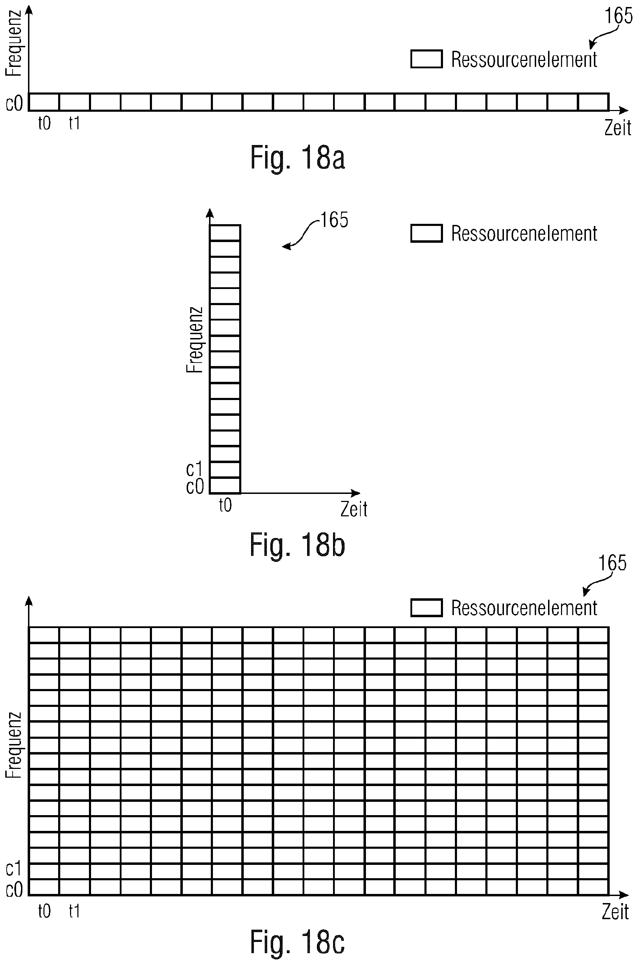

Die vom Kommunikationssystem 102 zur Verfügung gestellten Ressourcen in der konkurrenzfreien Periode 160 können auch als Ressourcenrahmen (engl. ressource frame) bezeichnet werden. Dieser Ressourcenrahmen kann dabei aus reinen Zeit-, reinen Frequenz- oder einer Kombination aus Zeit- und Frequenzressourcen bestehen. Diese Möglichkeiten sind für eine beispielhafte Größe in den Fig. 18a-c gezeigt.

Im Detail zeigt Fig. 18a in einem Diagramm einen Ressourcenrahmen 165 bestehend aus Zeitressourcen, während Fig. 18b in einem Diagramm einen Ressourcenrahmen 165 bestehend aus Frequenzressourcen, und während Fig. 18c in einem Diagramm einen Ressourcenrahmen 165 bestehend aus Zeit- und Frequenzressourcen zeigt. Dabei beschreibt die Ordinate die Frequenz und die Abszisse die Zeit. Mit anderen Worten, Fig. 18a-c zeigen verschiedene Möglichkeiten eines Ressourcenrahmens 165.

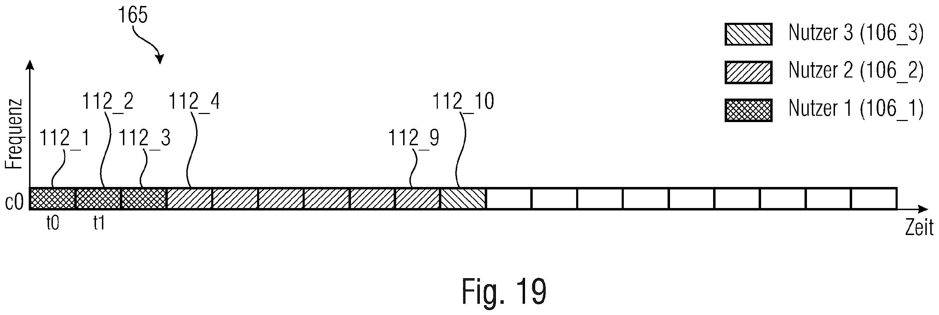

Im Falle von einer kompakten Übertragung am Stück (ohne Frequenzsprungverfahren (engl. frequency hopping), Zeitsprungverfahren (engl. time hopping) oder TSMA (Telegram-Splitting-Multiple-Access) kann eine einfache lineare Zuweisung entsprechend der benötigten Längen der Endpunkte erfolgen (z.B. bei GSM in acht Zeitschlitze), was zur Veranschaulichung in Fig. 19 grafisch gezeigt ist.

Im Detail zeigt Fig. 19 in einem Diagramm eine Belegung eines Ressourcenrahmens 165 mit l = 19 (Zeit-)Ressourcen 112_1-112 l durch drei Endpunkte 106_1-106_3, wobei einem ersten Endpunkt 106_1 die ersten drei Ressourcen 112_1-112_3, einem zweiten Endpunkt 106_2 die darauffolgenden sechs Ressourcen 112_4-112_9, und einem dritten Endpunkt 106_3 die darauffolgende Ressource 112_10 exklusiv zugewiesen sind. Dabei beschreibt die Ordinate die Frequenz und die Abszisse die Zeit.

Mit anderen Worten, Fig. 19 zeigt eine lineare Aufteilung des Ressourcenrahmens 165 auf drei Endpunkte 106_1, 106_2 und 106_3. Ein ähnlicher Aufbau wäre für einen reinen Frequenz-Ressourcenrahmen 165 oder einen kombinierten Ressourcenrahmen 165 aus Zeit und Frequenz möglich.

Bei Verwendung eines hierarchischem Frequenzsprungverfahrens bzw. von hierarchischem Telegram-Splitting (Sprungmuster innerhalb der konkurrenzfreien Periode 164) ist eine Aufteilung nach Fig. 19 typischerweise nicht möglich, wenn die Endpunkte 106_1-106_j batteriebetrieben sind, da diese Endpunkte zwischen den Ressourcen (oder Ressourcenelementen) eine Sende-/Empfangspause zum Aufladen der Kondensatoren benötigen. Die notwendigen Pausen zwischen den genutzten Ressourcenelementen eines Endpunktes sind dabei von mehreren Parametern abhängig. Diese sind beispielsweise der Aktivitätsindex aus Abschnitt A und die minimale Pause, die ein Endpunkt zum Aufladen der Kondensatoren benötigt.

Zusätzlich zu den oben genannten Parametern beeinflussen noch weitere Parameter die Zuteilung von Ressourcen (oder Ressourcenelementen) an die Endpunkte 106_1-106J, unter anderem Folgende:

- Anzahl der zur Verfügung stehenden Ressourcenelemente in Zeitrichtung,
- Anzahl der zur Verfügung stehenden Ressourcenelemente in Frequenzrichtung,
- Anzahl der Endpunkte, welche innerhalb des Ressourcenrahmens 165 Ressourcenelemente zugewiesen bekommen,
- Delay-Anforderungen der Applikation, und
- SNR der jeweiligen Endpunkte zur Basisstation.

Um all diese Möglichkeiten abdecken zu können, wird herkömmlicherweise ein großer Satz an Sprungmustern definiert, der sowohl den Endpunkten 106_1-106J als auch der Basisstation 104 bekannt ist. Das verwendete Sprungmuster wird zusammen mit einem Startzeitindex und/oder ggf. einem Frequenzindex in der Bake 120 übertragen.

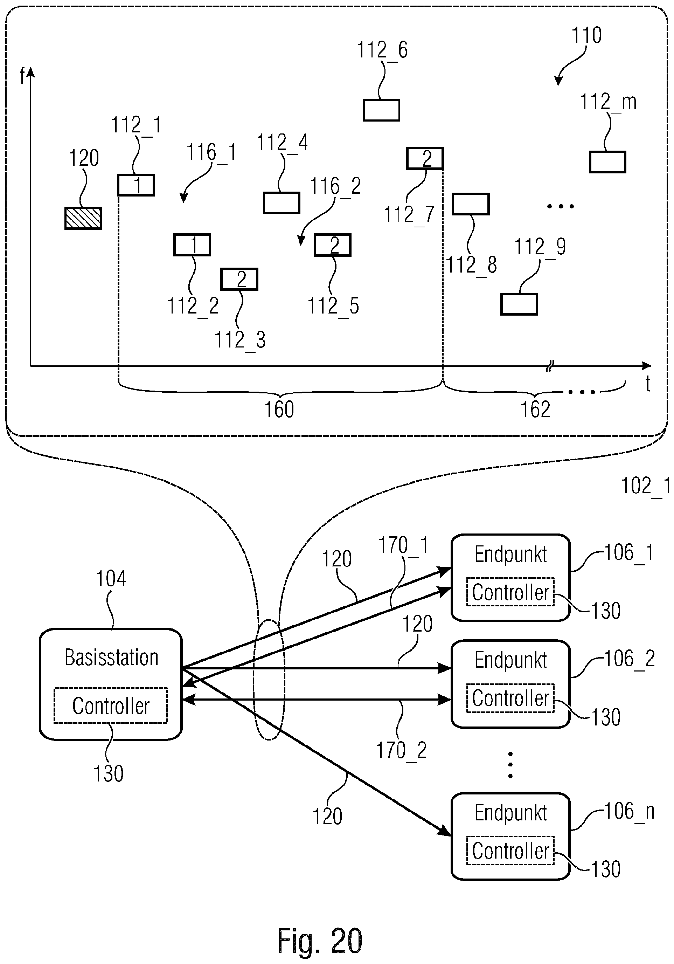

Fig. 20 zeigt ein schematisches Blockschaltbild eines Kommunikationssystems 102_1 mit einer Basisstation 104 und mehreren Endpunkten 106_1-106_j, gemäß einem Ausführungsbeispiel der vorliegenden Erfindung.

Wie dies oben bereits ausführlich erläutert wurde (vgl. z.B. Fig. 4) nutzen die Basisstation 104 und die Endpunkte 106_1-106J des Kommunikationssystems 102_1 zur gegenseitigen Kommunikation ein Frequenzband (z.B. ein lizenzfreies und/oder genehmigungsfreies Frequenzband, z.B. ISM Band), welches von einer Mehrzahl von Kommunikationssystemen zur Kommunikation genutzt wird. Das Kommunikationssystem 102_1 arbeitet dabei unkoordiniert in Bezug auf andere Kommunikationssysteme 102_2, 102_3 (siehe Fig. 1), die das gleiche Frequenzband nutzen.

Wie dies ebenfalls oben ausführlich erläutert wurde, ist die Basistation 104 ausgebildet, um ein Signal 120 (z.B. ein Baken-Signal) zu senden, wobei das Signal 120 eine Information (z.B. Signalisierungsinformation) über ein (netzwerkspezifisches) Kanalzugriffsmuster 110 aufweist, wobei das (netzwerkspezifische) Kanalzugriffsmuster 110 eine für die Kommunikation des Kommunikationssystems 102 verwendbare frequenz- und/oder zeitsprungbasierte Belegung von Ressourcen 112_1-112_m des Frequenzbands angibt. Die Endpunkte 106_1-106J sind dabei ausgebildet, um das Signal 120 zu empfangen und um basierend auf der Information über das (netzwerkspezifische) Kanalzugriffsmuster 110 das (netzwerkspezifische) Kanalzugriffsmuster 110 zu ermitteln (siehe z.B. Fig. 5 und 6).

Zumindest ein Teil der durch das Kanalzugriffsmuster 110 angegebenen Ressourcen 112_1-112_m ist dabei einem konkurrenzfreien Übertragungsabschnitt 160 zugewiesen, in der die Basisstation 104 einen Zugriff auf die Ressourcen 112_1-112_l (l ≤ m) steuert, d.h. einen oder mehreren Endpunkten 106_1-106J des Kommunikationssystems 102_1 zur exklusiven Nutzung zuweist.

Hierzu umfasst das von der Basisstation 104 gesendete Signal 120 ferner eine Steuerungsinformation zur Steuerung eines Zugriffs auf die Ressourcen 112_1-112_l des konkurrenzfreien Übertragungsabschnitts 160, d.h. den Teil der durch das Kanalzugriffsmuster 110 angegebenen Ressourcen 112_1-112_m, der der konkurrenzfreien Periode 160 zugewiesen ist.

Bei Ausführungsbeispielen kann der konkurrenzfreie Übertragungsabschnitt 160 eine konkurrenzfreie Periode sein. Alternativ kann der konkurrenzfreie Übertragungsabschnitt 160 auch mehrere konkurrenzfreien Perioden umfassen. Ferner ist es möglich, dass sich der konkurrenzfreie Übertragungsabschnitt 160 aus mehreren Teil-Übertragungsabschnitten zusammensetzt, die in der Zeit und/oder Frequenz verteilt sind (z.B. voneinander mit einem Zeit- und/oder Frequenzabstand beabstandet sind).

In der nachfolgenden Beschreibung wird beispielhaft davon ausgegangen, dass der konkurrenzfreie Übertragungsabschnitt 160 eine konkurrenzfreie Periode ist. Die nachfolgende Beschreibung ist dabei jedoch genauso auf andere Ausführungsbeispiele anwendbar, bei denen der konkurrenzfreie Übertragungsabschnitt 160 mehrere konkurrenzfreien Perioden umfasst oder sich aus mehreren Teil-Übertragungsabschnitten zusammensetzt.

Bei Ausführungsbeispielen werden in der Signalisierungsinformation nur ein Teil der eigentlich erforderlichen Information (z.B. IDs der Endpunkte, Länge der konkurrenzfreien Periode 160, Anzahl an Ressourcen für jeden der Endpunkte, Sprungmuster für jeden der Endpunkte, Startzeitoffset und Frequenzoffset für jeden der Endpunkte, usw.) zur Ermittlung der den jeweiligen Endpunkten exklusiv zugewiesenen Ressourcen 112_1-112_7 der konkurrenzfreien Periode 160 übertragen, um den erforderlichen Overhead für die Zuweisung der Ressourcen 112_1-112_l der konkurrenzfreien Periode 160 zu reduzieren.

Die einem der Endpunkte 106_1-106J des Kommunikationssystems 102_1 exklusiv zugewiesenen Ressourcen aus den Ressourcen 112_1-112_l der konkurrenzfreien Periode 160 sind gemäß dem Konzept der vorliegenden Erfindung basierend auf einer Abbildungsfunktion, die die Steuerungsinformation auf die jeweiligen exklusiv zugewiesenen Ressourcen abbildet, ermittelbar.

Anstelle der Übertragung der vollständigen Information, die eigentlich zur Ermittlung der den jeweiligen Endpunkten 106_1-106_j exklusiv zugewiesenen Ressourcen 112_1-112_l der konkurrenzfreien Periode 160 erforderlich ist, wird nur ein Teil dieser Information mittels der Steuerungsinformation übertragen, wobei basierend auf der Abbildungsfunktion, die die Steuerungsinformation auf die exklusiv zugewiesenen Ressourcen abbildet, die den jeweiligen Endpunkten 106_1-106J des Kommunikationssystems 102_1 exklusiv zugewiesene Ressourcen aus den Ressourcen 112_1-112_l der konkurrenzfreien Periode 160 ermittelbar sind.

In Fig. 20 wird beispielhaft davon ausgegangen, dass die ersten l = 7 Ressourcen 112_1-112_l (l = 7) des Kanalzugriffsmusters 110 der konkurrenzfreien Periode 160 zugewiesen sind, während die Ressourcen 112_l+1-112_m des Kanalzugriffsmusters 110 einer konkurrenzbasierten Periode 162 zugewiesen sind. Natürlich kann auch eine beliebige andere Anzahl an Ressourcen der konkurrenzfreien Periode zugwiesen sein.

Ferner wird in Fig. 20 beispielhaft davon ausgegangen, dass die Abbildungsfunktion, die die Steuerungsinformation auf die exklusiv zugewiesenen Ressourcen abbildet, ergibt, dass einem ersten Endpunkt 106_1 die Ressourcen 112_1 und 112_2 der konkurrenzfreien Periode 160 exklusiv zugewiesen sind, während einem zweiten Endpunkt 106_2 gemäß eines zweiten relativen Kanalzugriffsmusters 116_2 die Ressourcen 112_3, 112_5 und 112_7 der konkurrenzfreien Periode 160 exklusiv zugewiesen sind. Die Ressourcen 112_4 und 112_6 der konkurrenzfreien Periode 160 können anderen Endpunkten, wie z.B. einem dritten Endpunkt 106_3 und/oder einem vierten Endpunkt 106_4, exklusiv zugewiesen sein.

Wie in Fig. 20 beispielhaft zu erkennen ist, können dem ersten Endpunkt 106_1 die Ressourcen 112_1 und 112_2 gemäß einem ersten Kanalzugriffsmuster 116_1 zugewiesen sein, während dem zweiten Endpunkt 106_2 die Ressourcen 112_3, 112_5 und 112_7 gemäß einem zweiten Kanalzugriffsmuster 116_2 zugewiesen sein können. Das erste relative Kanalzugriffsmuster 116_1 kann dabei eine zeit- und/oder frequenzsprungbasierte Belegung von zu verwendenden Ressourcen der Ressourcen 112_1-112_I der konkurrenzfreien Periode 160 angeben, während das zweite relative Kanalzugriffsmuster 116_2 eine zeit- und/oder frequenzsprungbasierte Belegung von zu verwendenden Ressourcen der Ressourcen 112_1-112_I der konkurrenzfreien Periode 160 angeben kann, wobei das erste relative Kanalzugriffsmuster 116_1 und das zweite relative Kanalzugriffsmuster 116_2 unterschiedlich sind. Beispielsweise kann das erste relative Kanalzugriffsmuster 116_1 angeben, dass unmittelbar aufeinander folgende Ressourcen der Ressourcen 112_1-112_I der konkurrenzfreien Periode 160 zu verwenden sind, während das zweite relative Kanalzugriffsmuster 116_2 angibt, dass jede p-te Ressource der Ressourcen 112_1-112_I der konkurrenzfreien Periode 160 zu verwenden ist, wobei p eine natürliche Zahl größer gleich zwei ist, $p \geq 2$.

Zur Übertragung von Daten (z.B. mittels eines Datensignals 170_1) zwischen der Basisstation 104 und dem ersten Endpunkt 106_1 (z.B. von der Basisstation 104 zu dem ersten Endpunkt 106_1 und/oder von dem ersten Endpunkt 106_1 zu der Basisstation 104) werden während der konkurrenzfreien Periode 160 somit die exklusiv zugewiesenen Ressourcen 112_1 und 112_2 verwendet, während zur Übertragung von Daten (z.B. mittels eines Datensignals 170_2) zwischen der Basisstation 104 und dem zweiten Endpunkt 106_2 (z.B. von der Basisstation 104 zu dem zweiten Endpunkt 106_2 und/oder von dem zweiten Endpunkt 106_2 zu der Basisstation 104) die exklusiv zugewiesenen Ressourcen 112_3, 112_5 und 112_7 verwendet werden.

Die auf die konkurrenzfreie Periode 160 folgende konkurrenzbasierte Periode 162 kann theoretisch von allen Endpunkten 106_1-106J des Kommunikationssystems 102_1 zur Übertragung von Daten verwendet werden, wobei typischerweise nur eine Teilmenge der Endpunkte 106_1-106J (z.B. zufällig oder pseudozufällig) auf die jeweilige konkurrenzbasierte Periode 162 zugreift. So können die Basisstation 104 und die Endpunkte 106_1-106J des Kommunikationssystems 102_1 in der konkurrenzbasierten Periode 162 zur gegenseitigen Kommunikation, d.h. zur gegenseitigen Übertragung von Daten, ein relatives Kanalzugriffsmuster (z.B. ein jeweils zufällig oder pseudo-zufällig gewähltes relatives Kanalzugriffsmuster aus einem Satz von relativen Kanalzugriffsmustern) verwenden, welches angibt, welche der durch das Kanalzugriffsmuster 110 angegebenen Ressourcen 112_8-112_m tatsächlich für die Übertragung der Daten zu verwenden sind.

Das Kanalzugriffsmuster 110 und auch die einem jeweiligen Endpunkt exklusiv zugewiesenen Ressourcen aus den Ressourcen 112_1-112_I der konkurrenzfreien Periode 160 (und optional auch das relative Kanalzugriffsmuster für die konkurrenzbasierte Periode 162 und die jeweilig zu verwendenden Ressourcen) können beispielsweise durch einen Controller 130 (siehe Abschnitt A), der in der Basisstation 104 und/oder den Endpunkten 106_1-106J implementiert sein kann, ermittelt werden.

Wie bereits erwähnt sind bei Ausführungsbeispielen einem jeweiligen Endpunkt des Kommunikationssystems 102_1 exklusiv zugewiesene Ressourcen aus den Ressourcen 112_1-112_I der konkurrenzfreien Periode 164 basierend auf einer Abbildungsfunktion, die die Steuerungsinformation auf die exklusiv zugewiesenen Ressourcen abbildet, ermittelbar.

Im Folgenden werden detaillierte Ausführungsbeispiele der exklusiven Zuweisung von Ressourcen der konkurrenzbasierten Periode 160 basierend auf der Steuerungsinformation und der Abbildungsfunktion, die die Steuerungsinformation auf die exklusiv zugewiesenen Ressourcen abbildet, beschrieben.

### B.1. Verwendung einer Abbildungsfunktion im Sender und Empfänger

Es lassen sich bei der Zuweisung der Ressourcen 112_1-112_I des Ressourcenrahmens 165 an die Endpunkte drei Kriterien ableiten:

- Latenzanforderungen,
- Energieanforderungen,
- zur Verfügung stehender Duty Cycle in der Basisstation 104 (maximal erlaubte Sendezeit (engl. on air time)).

Die Anforderung an kurze Latenzzeiten bei der Übertragung steht niedrigen Energieanforderungen im Endpunkt gegenüber, so dass ein Endpunkt entweder energiesparend oder mit kurzen Latenzzeiten betrieben wird. Daraus ergeben sich zwei Klassen an Sprungmustern für die Zuweisung der Ressourcen.

Das Kriterium der maximal erlaubten Sendezeit der Basisstation 104 hat keinen Einfluss auf die notwendigen Klassen an Sprungmustern. Zur Reduktion des Duty Cycle der Basisstation 104 kann jedoch bei Unterstützung von mehreren parallelen Frequenzkanälen eine sog. Carrier Aggregation vorgenommen werden. Das bedeutet zu einem Zeitpunkt werden mehrere Teilnehmer auf verschiedenen Frequenzen bedient.

Durch die Reduktion der Sprungmuster auf zwei Klassen lässt sich eine Reduktion der Sprungmuster auf effektiv zwei Sprungmuster erzielen. Das erste Sprungmuster für niedrige Latenzanforderungen belegt beispielsweise jeden Zeitindex im Ressourcenrahmen 165. Das zweite Sprungmuster für niedrige Energieanforderungen belegt beispielsweise jeden p-ten Zeitindex, wobei p eine natürliche Zahl größer gleich zwei ist, $p \geq 2$. Die Definition der beiden Sprungmuster ist sowohl den Endpunkten 106_1-106J als auch der Basisstation 104 bekannt und kann entweder global bekannt sein oder bei Anmeldung eines neuen Endpunkts im Kommunikationssystem übertragen werden.

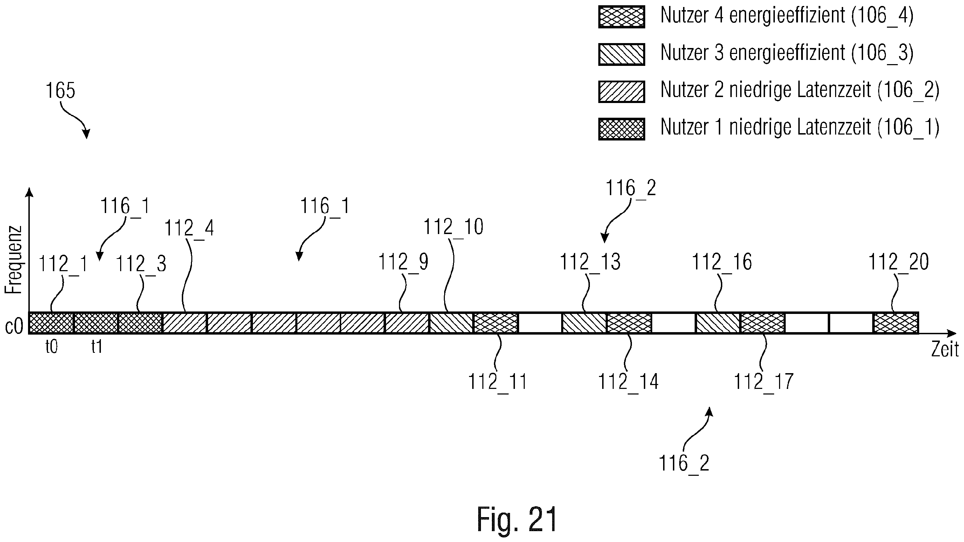

Fig. 21 zeigt in einem Diagramm eine Belegung eines Ressourcenrahmens 165 mit I = 20 (Zeit-)Ressourcen 112_1-112_I durch vier Endpunkte 106_1-106_4, wobei ein erster und ein zweiter Endpunkt 106_1 und 106_2 der vier Endpunkte 106_1-106_4 Endpunkte mit hohen Latenzanforderungen (engl. low delay) sind, und wobei ein dritter und ein vierter Endpunkt 106_3 und 106_4 der vier Endpunkte 106_1-106_4 energieeffiziente Endpunkte sind. Dabei beschreibt die Ordinate die Frequenz und die Abszisse die Zeit.

Wie in Fig. 21 zu erkennen ist, sind dem ersten Endpunkt 106_1 gemäß dem ersten relativen Kanalzugriffsmuster 116_1 die ersten drei Ressourcen 112_1-112_3 der Ressourcen 112_1-112_I des Ressourcenrahmens 165 zugewiesen, wobei dem zweiten Endpunkt 106_2 gemäß dem ersten relativen Kanalzugriffsmuster 116_1 die darauffolgenden sechs Ressourcen 112_4-112_9 der Ressourcen 112_1-112_I des Ressourcenrahmens 165 zugewiesen sind, wobei dem dritten Endpunkt 106_3 gemäß dem zweiten relativen Kanalzugriffsmuster 116_2 die drei Ressourcen 112_10, 112_13 und 112_16 der Ressourcen 112_1-112_I des Ressourcenrahmens 165 zugewiesen sind, und wobei dem vierten Endpunkt 106_4 gemäß dem zweiten relativen Kanalzugriffsmuster 116_2 die vier Ressourcen 112_11, 112_14, 112_17 und 112_20 der Ressourcen 112_1-112_I des Ressourcenrahmens 165 zugewiesen sind.

Mit anderen Worten, Fig. 21 zeigt eine beispielhafte Zuteilung von Ressourcen des Ressourcenrahmens 165 an vier Endpunkte 106_1-106_4, wobei zwei Endpunkte 106_1 und 106_2 hohe Latenzanforderungen (engl. low delay) besitzen und zwei Endpunkte 106_3 und 106_4 niedrige Energieanforderungen haben. In der Zuweisung werden zeitlich zuerst die Endpunkte 106_1 und 106_2 mit hohen Latenzanforderungen eingebracht und darauffolgend ineinander verschränkt (oder verschachtelt) die Endpunkte 106_3 und 106_4 mit niedrigen Energieanforderungen.

Herkömmlicherweise müssen den Endpunkten vorab keine Parameter bekannt sein. In der Bake 120 müssten daher für das Beispiel aus Fig. 21 herkömmlicherweise folgende Parameter signalisiert werden:

- IDs aller Endpunkte im Ressourcenrahmen,
- Länge der zugewiesenen Ressourcenelemente jedes Endpunkts,
- Sprungmuster für jeden Endpunkt, und
- Startzeitoffset für jeden Endpunkt.

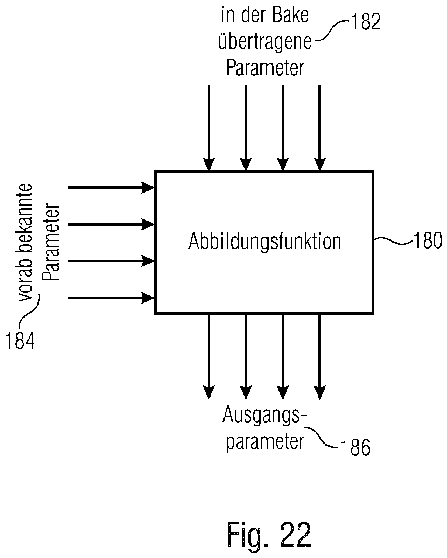

Durch die Reduktion der Sprungmuster auf effektiv zwei Sprungmuster (relative Kanalzugriffsmuster 116_1 und 116_2), kann die Signalisierung der Endpunkte in der Bake 120 deutlich verkürzt werden, in dem eine Abbildungsfunktion erzeugt wird, welche aus den übertragenen Parametern und den vorab bekannten Parametern die oben genannten Parameter erzeugt. Ein Überblick einer solchen Abbildungsfunktion ist in Fig. 22 grafisch veranschaulicht.

Fig. 22 zeigt eine schematische Ansicht einer Abbildungsfunktion 180, die die mit der Bake 120 (z.B. Baken-Signal) übertragene Steuerungsinformation 182 (z.B. Steuerungsparameter) und vorab bekannte Parameter 184 (z.B. Basisparameter) auf Ausgangsparameter 186 abbildet, basierend auf denen die den jeweiligen Endpunkten exklusiv zugewiesene Ressourcen aus den Ressourcen 112_1-112_I der konkurrenzfreien Periode 160 ermittelt werden können.

Da es nur noch effektiv zwei Sprungmuster (z.B. relative Kanalzugriffsmuster 116_1 und 116_2) gibt, wobei die erste Klasse von Sprungmustern (z.B. für Endpunkte mit hohen Latenzanforderungen (engl. low delay)) immer am Beginn (der konkurrenzfreien Periode 160) eingebracht werden, um die Latenzanforderungen einzuhalten, ist die Signalisierung der Sprungmuster (z.B. relativen Kanalzugriffsmuster 116_1 und 116_2) nicht notwendig.

Anstelle des Sprungmusters (relativen Kanalzugriffsmusters) für jeden Endpunkt wird nun die Anzahl der Endpunkte, welche die erste Klasse von Sprungmustern (z.B. für Endpunkte mit hohen Latenzanforderungen (engl. low delay)) verwenden, übertragen.

Aus der Anzahl der Endpunkte, dem bekannten Sprungmuster (z.B. Kanalzugriffsmuster 116_1) für die erste Klasse und der Länge jedes Endpunkts kann die Abbildungsfunktion 180 nun den Startzeitoffset berechnen, so dass dieser ebenfalls nicht mehr übertragen werden muss.

Für den Startzeitpunkt der Teilnehmer, welche die erste Klasse der Sprungmuster (Low-Delay) nutzen ergibt sich folgende Abbildungsfunktion:

$$t_{start}[n] = \sum_{k=0}^{n-1} lenRessourceElementsUsers[k]$$

mit

*i = Anzahl an Low Delay Teilnehmern*
*k = Laufindex*
*n = aktuteller Teilnehmer, wobei n ≤ i*

*lenRessourceElementsUsers = Array mit Länge der zugewiesenen Ressource Elemente jedes* Teilnehmers

Für die folgenden Teilnehmer, die das energieeffiziente Sprungmuster nutzen gilt:

$$t_{start}[n] = \sum_{k=0}^{i-1} lenRessourceElementsUsers[k] + (n-i)\%\,gap +$$

$$+\begin{cases} 0 & if\ (n-i) \leq gap \\ \sum lenRessourceElementsUsers[(n-i)\%\,gap : (n-i-1) : gap] & if\ (n-i) > gap \end{cases}$$

mit
*gap = leere Elemente innerhalb des energieef fizienten Sprungmusters*

Nachdem alle Startzeitpunkte und Längen für die Endpunkte der ersten Klasse bekannt sind, können für die restlichen Endpunkte der zweiten Klasse über das Sprungmuster (relative Kanalzugriffsmuster) und die Längen ebenfalls die Startzeitoffsets bestimmt werden.

Im Fall, dass die Abbildungsfunktion 180 verwendet wird, sollten vorab die folgenden Parameter (Basisparameter) 184 bekannt sein:

- Größe des Ressourcenrahmens 165,
- Sprungmuster für hohe Latenzanforderungen (engl. low delay) (erstes relatives Kanalzugriffsmuster 116_1), und
- Energieeffizientes Sprungmuster (zweites relatives Kanalzugriffsmuster 116_2).

Die mindestens in der Bake 120 übertragenen Parameter (Steuerparameter) 182 sind:

- IDs aller Endpunkte im Ressourcenrahmen 165,
- Länge der zugewiesenen Ressourcenelemente jedes Endpunkts, und
- Anzahl der Endpunkte mit hohen Latenzanforderungen (engl. low delay).

Bei Ausführungsbeispielen wird, anstelle der vollständigen Übertragung der Parameter, eine Abbildungsfunktion eingesetzt, die die notwendigen Parameter aus den übertragenen Parametern ableitet.

Bei Ausführungsbeispielen erhält die Abbildungsfunktion 182 aus den übertragenen Daten in der Bake 120 nur die Anzahl der Endpunkte der ersten Klasse (hohe Latenzanforderungen (engl. low delay)) sowie die Länge der zugewiesenen Ressourcenelemente von allen Endpunkten. Zusätzlich sind der Abbildungsfunktion die Sprungmuster der Klassen (erstes und zweites relatives Kanalzugriffsmuster 116_1 und 11_6) sowie die Größe des Ressourcenrahmens 165 bekannt, diese wurden entweder global definiert oder während der Anmeldung übertragen.

Das Prinzip der Reduktion der übertragenen Parameter und der anschließenden Gewinnung der Parameter durch die Abbildungsfunktion 180 kann auch angewendet werden, falls es mehr als zwei Klassen von Sprungmustern (relative Kanalzugriffsmuster) gibt. Im Falle von q-Klassen von Systemen müssten q-1 Anzahlen an Endpunkte(n) pro q-te Klasse Parameter übertragen werden.

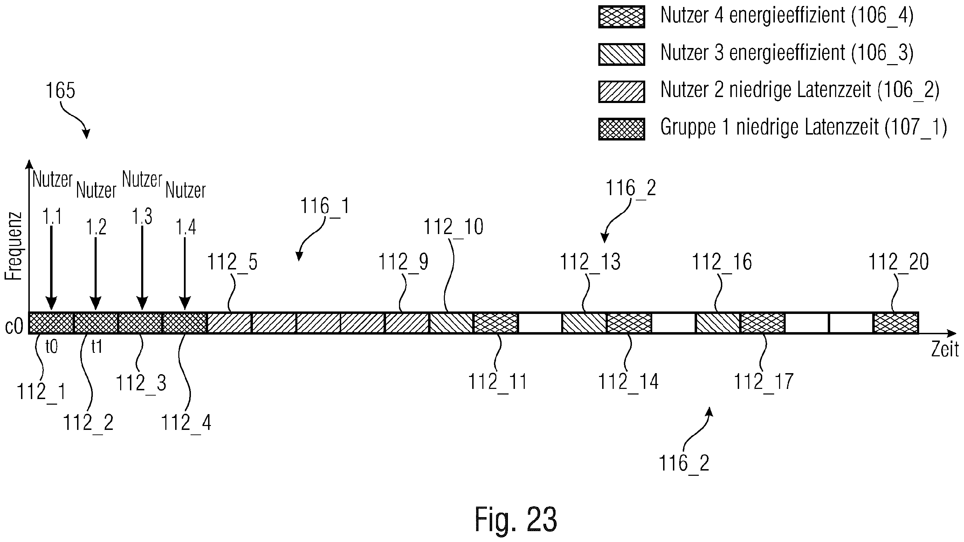

Soll anstelle der Signalisierung einzelner Endpunkte eine Gruppe (von Endpunkten) signalisiert werden, wird nicht die Länge aller Endpunkte der Gruppe, sondern die gesamte Länge aller Endpunkte der Gruppe signalisiert. Die Aufteilung der Ressourcen innerhalb der Gruppe ist entweder bekannt (z.B. linear unter allen Endpunkten) oder wurde vorab signalisiert (z. B. in einer vorherigen Nachricht). Ein solches Beispiel mit linearer Aufteilung innerhalb einer Gruppe mit vier Endpunkten ist in Fig. 23 zu sehen.

Fig. 23 zeigt in einem Diagramm eine Belegung eines Ressourcenrahmens 165 mit I = 20 (Zeit-)Ressourcen 112_1-112_I durch eine erste Gruppe 107_1 von vier Endpunkten und drei weiteren Endpunkte 106_2-106_4, wobei die Gruppe 107_1 von vier Endpunkten und ein zweiter Endpunkt der drei weiteren Endpunkte 106_2-106_4 Endpunkte mit hohen Latenzanforderungen (engl. low delay) sind, und wobei ein dritter und ein vierter Endpunkt 106_3 und 106_4 der drei weiteren Endpunkte 106_2-106_4 energieeffiziente Endpunkte sind. Dabei beschreibt die Ordinate die Frequenz und die Abszisse die Zeit.

Wie in Fig. 23 zu erkennen ist, sind der ersten Gruppe 107_1 von Endpunkten die ersten vier Ressourcen 112_1-112_4 der Ressourcen 112_1-112_I des Ressourcenrahmens 165 zugewiesen, wobei dem zweiten Endpunkt 106_2 gemäß dem ersten relativen Kanalzugriffsmuster 116_1 die darauffolgenden fünf Ressourcen 112_5-112_9 der Ressourcen 112_1-112_I des Ressourcenrahmens 165 zugewiesen sind, wobei dem dritten Endpunkt 106_3 gemäß dem zweiten relativen Kanalzugriffsmuster 116_2 die drei Ressourcen 112_10, 112_13 und 112_16 der Ressourcen 112_1-112_I des Ressourcenrahmens 165 zugewiesen sind, und wobei dem vierten Endpunkt 106_4 gemäß dem zweiten relativen Kanalzugriffsmuster 116_2 die vier Ressourcen 112_11, 112_14, 112_17 und 112_20 der Ressourcen 112_1-112_I des Ressourcenrahmens 165 zugewiesen sind.

Mit anderen Worten, Fig. 23 zeigt eine beispielhafte Zuteilung von Ressourcen an eine Gruppe 107_1 von Endpunkten und drei Endpunkte 106_2-106_4, wobei die Gruppe 107_1 von Endpunkten und ein Endpunkt 106_2 hohe Latenzanforderungen (engl. low delay) besitzen und zwei Endpunkte 106_3 und 106_4 niedrige Energieanforderungen haben.

### B.2. Abbildungsfunktion unter Berücksichtigung von mehreren parallelen Frequenzkanälen

Wie in Fig. 18c gezeigt ist, gibt es auch Kommunikationssysteme, in denen in einem Zeitschlitz mehrere Frequenzkanäle zur Übertragung verwendet werden können.

Durch die parallele Übertragung mehrerer Ressourcenelemente (bzw. in mehreren Ressourcen (oder Ressourcenelementen)) sinkt die Empfangsleistung am Empfänger (z.B. Endpunkt), wenn die Gesamt-Sendeleistung der Basisstation 104 nicht erhöht werden kann. Dies ist beispielsweise bei Verwendung der ISM-Bänder der Fall, da in diesen Bändern die maximale Sendeleistung begrenzt ist.

Somit ist es nur sinnvoll Endpunkte parallel zu versorgen, wenn die Leistungsübertragungsbilanz (engl. link budget) (z.B. die Empfangsleistung am Empfänger) noch genügend Reserve bietet.

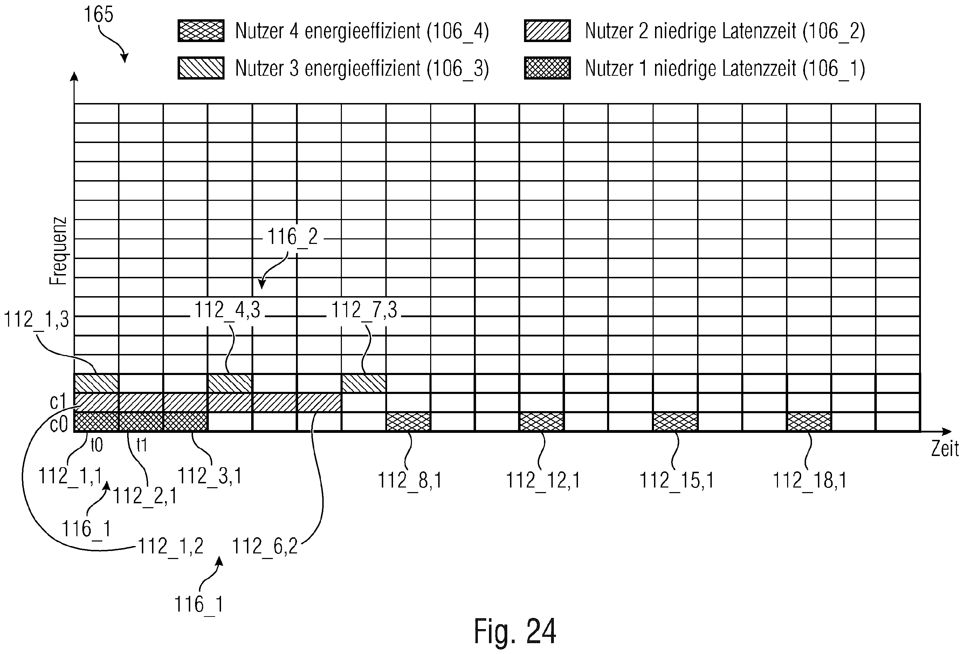

Dieses Schema ist beispielhaft in Fig. 24 für die vier Endpunkte aus Fig. 21 zu sehen.

Fig. 24 zeigt in einem Diagramm eine Belegung eines Ressourcenrahmens 165, der 20 Zeitressourcen und 16 Frequenzressourcen (von denen drei genutzt werden) pro Zeitressource aufweist, durch vier Endpunkte 106_1-106_4, wobei ein erster und ein zweiter Endpunkt 106_1 und 106_2 der vier Endpunkte 106_1-106 4 Endpunkte mit hohen Latenzanforderungen (engl. low delay) sind, und wobei ein dritter und ein vierter Endpunkt 106_3 und 106_4 der vier Endpunkte 106_1-106 4 energieeffiziente Endpunkte sind, wobei der vierte Endpunkt 106_4 eine niedrige Leistungsübertragungsbilanz aufweist. Dabei beschreibt die Ordinate die Frequenz und die Abszisse die Zeit.

Wie in Fig. 24 zu erkennen ist, sind dem ersten Endpunkt 106_1 gemäß dem ersten relativen Kanalzugriffsmuster 116_1 die ersten drei Ressourcen 112_1,1-112_3,1 eines ersten Frequenzkanals des Ressourcenrahmens 165 zugewiesen, wobei dem zweiten Endpunkt 106_2 gemäß dem ersten relativen Kanalzugriffsmuster 116_1 die ersten sechs Ressourcen 112_1,2-112_6,2 eines zweiten Frequenzkanals des Ressourcenrahmens 165 zugewiesen sind, wobei dem dritten Endpunkt 106_3 gemäß dem zweiten relativen Kanalzugriffsmuster 116_2 die ersten drei Ressourcen 112_1,3 112_4,3 und 112_7,3 eines dritten Frequenzkanals des Ressourcenrahmens 165 zugewiesen sind, und wobei dem vierten Endpunkt 106_4, der nicht genügend Leistungsübertragungsbilanz für eine parallele Übertragung aufweist, gemäß dem zweiten relativen Kanalzugriffsmuster 116_2 die vier Ressourcen 112_8,1, 112_12,1, 112_15,1 und 112_18,1 zugewiesen sind, die auf die parallele Übertragung der drei Endpunkte 106_1-106_3 folgen.

Mit anderen Worten, Fig. 24 zeigt eine beispielhafte Zuteilung von Ressourcen an vier Endpunkte 106_1-106 4, wobei zwei Endpunkte 106_1 und 106_2 hohe Latenzanforderungen (engl. low delay) besitzen und zwei Endpunkte 106_3 und 106_4 niedrige Energieanforderungen haben, wobei drei Endpunkte 106_1, 106_2 und 106_3 zeitlich parallel auf mehreren Kanälen ihre Ressourcen haben. Dabei besitzen die Endpunkte 106_1, 106_2 und 106_3 genügend Empfangsleistung, so dass eine zeitlich überlagerte Übertragung möglich ist. Der Endpunkt 106_4 hat nicht genügend Leistungsübertragungsbilanz (engl. link budget), so dass diese Aussendung nach dem Ende der drei parallelen Aussendungen erfolgt.

Damit die Abbildungsfunktion 180 zusätzlich die gewünschten parallelen Ressourcen für die Endpunkte berücksichtigen kann, wird die Anzahl an gewünschten parallelen Endpunkten zusätzlich in der Bake 120 signalisiert.

Die damit mindestens in der Bake 120 übertragenen Parameter (Steuerungsparameter) sind:

- IDs aller Endpunkte im Ressourcenrahmen 165,
- Länge der zugewiesenen Ressourcenelemente jedes Endpunkts,
- Anzahl der Endpunkte mit hohen Latenzanforderungen (engl. low delay), und
- Anzahl an zu parallelisierenden Endpunkten.

Die Anzahl an maximal unterstützten parallelen Endpunkten ist gleich der maximal definierten Kanäle (c0, c1, ... in Fig. 24). Können mehr Endpunkte parallelisiert werden, als Kanäle zur Verfügung stehen, erfolgt auch hier eine Verschachtelung gemäß Abschnitt B.1.

Der verwendete Frequenzkanal wird hierbei nicht in der Bake 120 übertragen, er ergibt sich durch die Abbildungsfunktion 180.

Bei Ausführungsbeispielen wird zusätzlich zu den Parametern aus Abschnitt B.1 die Anzahl der zu parallelisierenden Endpunkte in der Bake 120 übertragen.

Bei Ausführungsbeispielen bildet die Abbildungsfunktion die zu parallelisierenden Endpunkte an den Beginn des Ressourcenrahmens 165 ab.

**B.3. Abbildungsfunktion unter Berücksichtigung von Datenlägen, die größer als die maximale Anzahl an Ressourcenelementen pro Endpunkt ist**

Oftmals kann es vorkommen, dass einem Endpunkt mehr Ressourcenelemente zur Verfügung gestellt werden sollen, als nach Definition des Sprungmusters (z.B. relativen Kanalzugriffsmusters) Ressourcenelemente zur Verfügung stehen. Nach den Abschnitten B.1. und B.2. wäre somit eine Zuweisung von ausreichend Ressourcenelementen nicht möglich.

Mit Ausnahme der ersten Klasse von Sprungmustern (erstes relatives Kanalzugriffsmuster 116_1) (für hohe Latenzanforderungen (engl. low delay) bei denen jedes Ressourcenelement in Zeitrichtung belegt ist), gibt es zwischen den verwendeten Ressourcenelementen leere (z.B. nicht belegte) Ressourcenelemente, die anderen Endpunkten zugewiesen werden können.

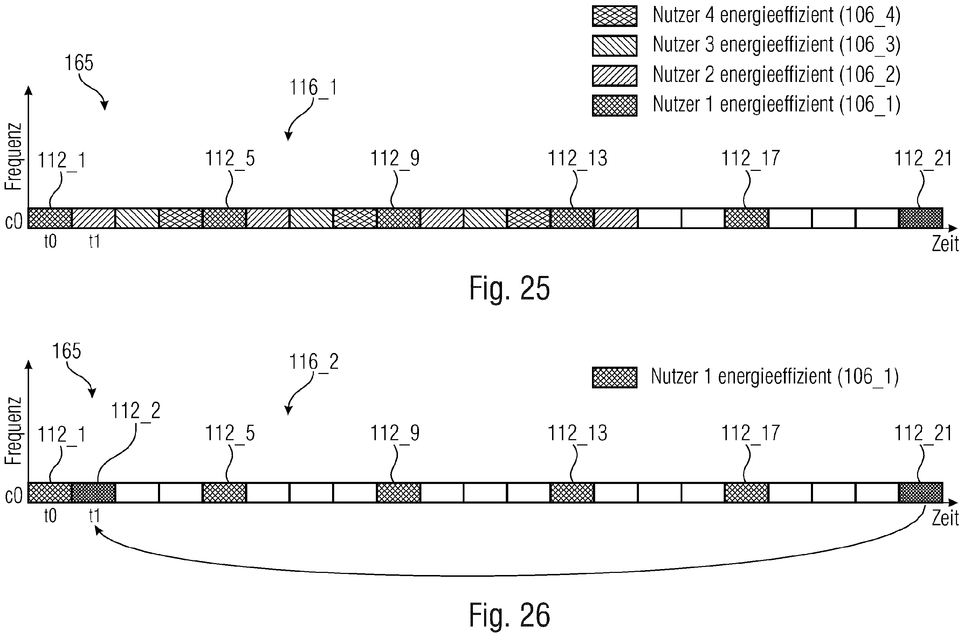

Werden die Endpunkte (der konkurrenzfreien Periode 160) nach deren notwendigen Längen bei der Zuweisung der Ressourcenelemente sortiert, ist für den Fall, dass der erste Endpunkt mehr als die laut Sprungmuster (z.B. relativen Kanalzugriffsmuster) zur Verfügung stehenden Ressourcen benötigt, zwischen den belegten Ressourcen noch Platz für laut Abschnitt B.1. anderen Endpunkte. Das nach Abschnitt B.1. gezeigte Schema ist beispielhaft in Fig. 25 zu sehen.

Im Detail zeigt Fig. 25 in einem Diagramm eine Belegung eines Ressourcenrahmens 165 mit I = 20 (Zeit-)Ressourcen 112_1-112_I durch vier energieeffiziente Endpunkte 106_1-106_4, wobei einem ersten Endpunkt 106_1 der vier Endpunkte 106_1-106_4 eine Anzahl von Ressourcen zugewiesen ist, die unter Berücksichtigung des zweiten relativen Kanalzugriffsmuster 116_2 zu einer Zugriffsdauer führt, die länger als die konkurrenzfreie Periode ist, so dass eine dem ersten Endpunkt 106_1 zugewiesene Ressource 112_21 außerhalb des Ressourcenrahmens 165 liegt. Dabei beschreibt die Ordinate die Frequenz und die Abszisse die Zeit.

Mit anderen Worten, Fig. 25 zeigt eine beispielhafte Zuteilung von Ressourcen an vier Endpunkte 106_1-106_4 nach Abschnitt B.1., wobei der erste Endpunkt 106_1 mit dem letzten Ressourcenelement 112_21 den zulässigen Ressourcenrahmen 165 übersteigt. Dabei verwenden alle Endpunkte aus Fig. 25 den energieoptierten Fall und wurden nach deren notwendiger Länge umsortiert. Der erste Endpunkt 106_1 benötigt sechs Ressourcenelemente 112_1, 112_5, 112_9, 112_13, 112_17 und 112_21, laut Sprungmuster (z.B. relativem zweiten Kanalzugriffsmuster 116_2) können jedoch nur fünf Ressourcenelemente 112_1, 112_5, 112_9, 112_13 und 112_17 zur Verfügung gestellt werden, so dass das letzte Ressourcenelement 112_21 aus dem gültigen Bereich des Ressourcenrahmens 165 fällt.

Dieses eine Ressourcenelement 112_21 aus dem Beispiel aus Fig. 25, welches aus dem gültigen Bereich (Ressourcenrahmen 165) gefallen ist, kann bei Ausführungsbeispielen mittels einer bekannten Vorschrift durch die Abbildungsfunktion 180 wieder zurück in den gültigen Bereich (Ressourcenrahmen 165) gebracht werden.

Nachdem bereits alle Endpunkte nach deren Länge sortiert worden sind, macht es Sinn zunächst den ersten Endpunkt 106_1 gemäß dem Sprungmuster (zweiten relativen Kanalzugriffsmuster 116_1) einzubringen und zu prüfen, ob von diesem Endpunkt Ressourcenelemente außerhalb des gültigen Bereichs (Ressourcenrahmen 165) liegen.

Ist dies der Fall, werden alle Ressourcenelemente, welche außerhalb des gültigen Bereichs (Ressourcenrahmen 165) liegen, als ein virtueller zweiter Endpunkt angesehen und anschließend in den Ressourcenrahmen 165 eingebracht. Sollten nach dem Einbringen der verbleibenden Ressourcenelemente gemäß dem virtuellen zweiten Teilnehmer weiterhin Ressourcenelemente außerhalb des gültigen Bereichs (Ressourcenrahmen 165) liegen, können diese als dritter virtueller Endpunkt angesehen werden. Dies wird nachfolgend anhand von Fig. 26 veranschaulicht.

Fig. 26 zeigt in einem Diagramm eine Belegung eines Ressourcenrahmens 165 mit I = 20 (Zeit-)Ressourcen 112_1-112_I durch einen energieeffizienten Endpunkt 106_1, wobei dem Endpunkt 106_1 eine Anzahl von Ressourcen zugewiesen ist, die gemäß des zweiten relativen Kanalzugriffsmusters 116_2 zu einer Belegung von Ressourcen führt, bei der eine Ressource 112_21 außerhalb des Ressourcenrahmens 165 liegt, so dass diese eine Ressource 112_21 als einem zweiten virtuellen Endpunkt 106_1' zugehörig angesehen wird, und somit in den Ressourcenrahmen 165 verschoben wird. Dabei beschreibt die Ordinate die Frequenz und die Abszisse die Zeit.

Wie in Fig. 26 zu erkennen ist, benötigt der erste Endpunkt 106_1 eigentlich sieben Ressourcen, was gemäß des ersten relativen Kanalzugriffsmusters 116_1 zu einer Belegung der Ressourcen 112_1, 112_5, 112_9, 112_13, 112_17 und 112_21 führen würde. Die Ressource 112_21, die außerhalb des Ressourcenrahmens 165 liegt, wird einem zweiten virtuellen Endpunkt 106_1' als zugehörig angesehen, wobei dem zweiten virtuellen Endpunkt 106_1' verfügbare Ressourcen aus den Ressourcen 112_1-112_I gem. des zweiten relativen Kanalzugriffsmusters 116_1 zugewiesen werden. Bei dem in Fig. 26 ist die Ressource 112_2 die erste verfügbare Ressource, die dementsprechend dem zweiten virtuellen Endpunkt 106_1' zugewiesen wird.

Mit anderen Worten, Fig. 26 zeigt eine Verschiebung der Ressourcenelemente 112_21, welche aus dem gültigen Ressourcenrahmen 165 gefallen sind, als virtuellen zweiten Endpunkt 106_1'.

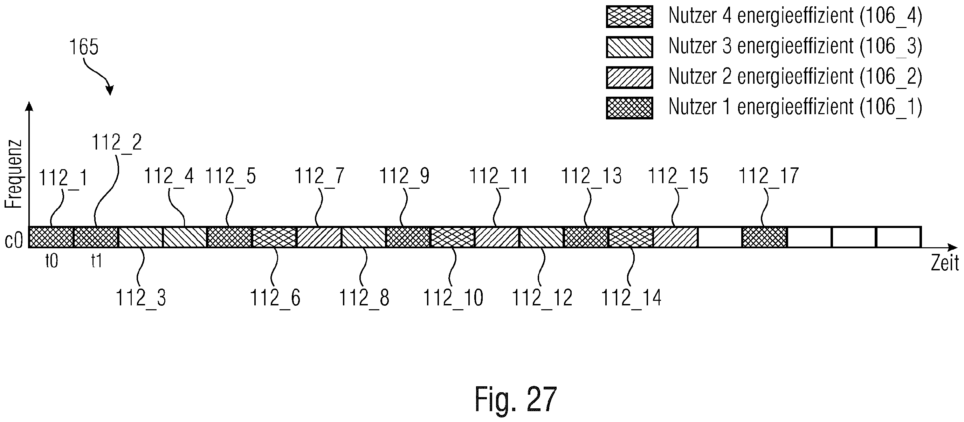

Nachdem nun der erste Endpunkt 106_1 (inkl. virtuellem zweiten Endpunkt 106_1') eingebracht wurde, kann der zweite Endpunkt 106_2 entsprechend dem Sprungmuster (zweiten relativen Kanalzugriffsmuster 116_2) eingebracht werden. Da der erste Endpunkt 106_1 die Ressourcenelemente des aus Abschnitt B.1. zweiten Endpunkts 106_2 ebenfalls mit belegt hat, wird der zweite Endpunkt nun als dritter Endpunkt in der Abbildungsfunktion behandelt. Der dritte Endpunkt 106_3 als vierter usw. Dieses Schema zeigt Fig. 27 beispielhaft für den Ausgangsfall aus Fig. 25.

Im Detail zeigt Fig. 27 in einem Diagramm eine Belegung eines Ressourcenrahmens 165 mit I = 20 (Zeit-)Ressourcen 112_1-112_I durch vier energieeffiziente Endpunkte 106_1-106 4, wobei bei der Zuweisung der Ressourcen der erste Endpunkt 106_1, dem eine Anzahl von Ressourcen zugewiesen ist, die gemäß des zweiten relativen Kanalzugriffsmusters 116_2 zu einer Belegung von Ressourcen führt, bei der eine Ressource außerhalb des Ressourcenrahmens 165 liegt, als zwei (virtuelle) Endpunkte angesehen wurde (vgl. Fig. 26). Dabei beschreibt die Ordinate die Frequenz und die Abszisse die Zeit.

Wie in Fig. 27 zu erkennen ist, sind dem ersten Endpunkt 106_1 die Ressourcen 112_1, 112_5, 112_9, 112_13 und 112_17 zugeordnet. Zusätzlich ist dem ersten Endpunkt 106_1 die Ressource 112_2 zugeordnet. Dem zweiten Endpunkt 106_2 sind die Ressourcen 112_3, 112_7, 112_11 und 112_15 zugeordnet, wobei dem dritten Endpunkt 106_3 die Ressourcen 112_4, 112_8 und 112_12 zugeordnet sind, und wobei dem vierten Endpunkt 106_4 die Ressourcen 112_6, 112_10 und 112_15 zugeordnet sind.

Mit anderen Worten, Fig. 27 zeigt eine Einbringung der verbleibenden drei Endpunkte 106_2-106_4 nachdem nach Fig. 26 der erste Endpunkt 106_1 eingebracht wurde.

Bei Ausführungsbeispielen werden die Endpunkte ihrer Länge nach sortiert.

Bei Ausführungsbeispielen wird ein Endpunkt, wenn dieser mehr als die zur Verfügung stehenden Ressourcen belegt, in mehrere virtuelle Endpunkte unterteilt und dann entsprechend des Sprungmusters (zweites relatives Kanalzugriffsmuster) eingebracht.

### B.4. Definition von Sprungmustern mit periodischen Zugriffsverfahren

Alternativ zu den vorherigen Abschnitten B.1. bis B.3. kann es bei konstanter Größe des Ressourcenrahmens 165 auch eine feste Definition an N-Sprungmustern geben, die dem Teilnehmer und der Basistation vorab bekannt sind. Es kann einen Satz von Sprungmustern (relativen Kanalzugriffsmustern) geben, der für die konkurrenzfreie Periode 160 verwendet/reserviert ist, dieser kann fest definiert oder einmal bei einer Anmeldung eines Endpunkts an der Basisstation 104 (engl. attach) oder einer Änderung übertragen werden. Zu jedem Zeitslot kann dann z.B. ein Endpunkt pro Sprungmuster (relativem Kanalzugriffsmuster) starten (oder zu jedem 2. etc.), je nachdem wie es die Orthogonalität der Sprungmuster zulässt ohne (zu viele) Kollisionen zu erzeugen.

Bei wenigen Endpunkten gibt es keine Kollisionen. Je mehr Endpunkte eingeplant (engl. scheduled) werden, desto mehr Kollisionen werden akzeptiert. Den Endpunkten ist jedoch bekannt, wo die Kollisionen entstehen, da alle Zuteilungen bekannt sind. Die Endpunkte senden nicht in Ressourcenelementen, die bereits durch einen anderen Endpunkt belegt werden (nur der 1. Endpunkt sendet).

Um die verschiedenen Datenlängen besser verwalten zu können, macht es Sinn innerhalb der definierten Sprungmuster (relativen Kanalzugriffsmuster) die Sprungmuster mit verschiedenen Längen zu entwerfen. Je nachdem welche Anzahl an Ressourcenelementen der jeweilige Endpunkt benötigt bzw. dem jeweiligen Endpunkt zur Verfügung gestellt wird, wird der Endpunkt an die korrekte Stelle (Nummer in der Signalisierungsliste) verschoben. Damit werden die Ressourcenelemente möglichst effizient ausgenutzt.

In anderen Worten, wenn beispielsweise drei Sprungmuster mit den Längen von 3, 56, und 17 Ressourcenelementen definiert sind. Werden die Teilnehmer entsprechend derer benötigten Länge die Sprungmuster zugeteilt. Beispielsweise würde ein Teilnehmer mit nur 2 benötigten Ressourcenelementen das erste Sprungmuster und nicht die anderen beiden mit mehr möglichen Elementen nutzen.

Die notwendigen Parameter bei der Übertragung in der Bake 120 sind die gleichen wie bei den vorherigen Abschnitten B.1. bis B.3. Somit entsteht kein Mehraufwand bei der Übertragung, die Bestimmung der jeweiligen belegten Ressourcen pro Endpunkt erfolgt wie in den vorherigen Abschnitten B.1. bis B.3. durch eine Abbildungsfunktion 180.

Bei Ausführungsbeispielen wird eine Definition von N-Sprungmustern (relativen Kanalzugriffsmustern) vorgegeben, welche (möglichst) orthogonal sind. Durch die Anordnung der signalisierten Endpunkte (Reihenfolge) kann ein Ressourcenrahmen 165 möglichst effizient ausgenutzt werden.

### B.5. Huffman Codierung der in der Bake übertragenen Längen der Endpunkte

Neben der Verwendung der Abbildungsfunktion 180 zur Reduktion der Datenmenge in der Bake 120, kann eine Huffman-Codierung [5] der übertragenen Längen der Endpunkte erfolgen.

Für eine sinnvolle Huffman-Codierung muss eine Verteilungsfunktion der verschiedenen Datenlängen bekannt sein. Diese kann entweder vorab aus Daten von anderen Netzwerken bestimmt werden oder anhand der ausgebrachten Sensoren (Endpunkte) und deren typischerweise versendeten Datenlängen bestimmt werden.

Aus der Verteilungsfunktion lässt sich ein Huffman-Baum [6] berechnen. Dieser Baum muss sowohl der Basisstation 104 als auch den Endpunkten 106_1-106J bekannt sein und kann entweder global bekannt sein oder beim Anmeldeprozess mitgeteilt werden.

Bei Ausführungsbeispielen können de Längen der zugewiesenen Ressourcen der Endpunkte Huffman codiert werden.

Wird im laufenden Betrieb festgestellt, dass sich die Verteilungsfunktion der Datenlängen geändert hat, kann ein neuer Huffman-Baum berechnet werden. Dieser kann anschließend mittels Multicast an alle Endpunkte 106_1-106J verteilt werden. Neue Endpunkte erhalten bei der Anmeldung direkt den neuen Huffman-Baum.

Bei Ausführungsbeispielen kann, wenn sich während des laufenden Betriebs die Verteilungsfunktion ändert, ein neuer Huffman-Baum berechnet und allen Teilnehmern mitgeteilt werden.

### B.6. Teilweise Signalisierung der Längen in der Bake

Die Längen müssen nicht vollständig in der Bake 102 stehen, z.B. nur 4 MSB in der Bake, damit die Abbildungsfunktion 180 in etwa das Ende kennt (für die Zuweisung der Ressourcen), 4 LSB in der jeweiligen einzelnen Übertragung, damit der Adressat die exakte Länge kennt.

Bei Ausführungsbeispielen wird die Längeninformation in der Bake nur teilweise (nicht vollständig) übertragen.

## C. **Weitere** Ausführungsbeispiele

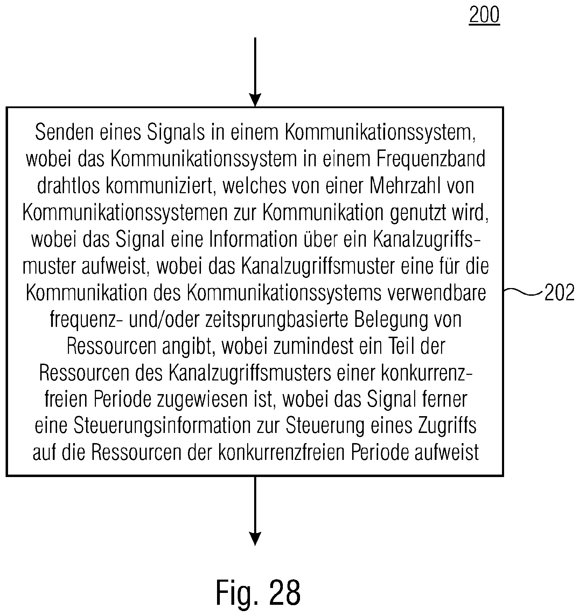

Fig. 28 zeigt ein Flussdiagramm eines Verfahrens 200, gemäß einem Ausführungsbeispiel der vorliegenden Erfindung. Das Verfahren 200 umfasst einen Schritt 202 des Sendens eines Signals in einem Kommunikationssystem, wobei das Kommunikationssystem in einem Frequenzband drahtlos kommuniziert, welches von einer Mehrzahl von Kommunikationssystemen zur Kommunikation genutzt wird, wobei das Signal eine Information über ein Kanalzugriffsmuster aufweist, wobei das Kanalzugriffsmuster eine für die Kommunikation des Kommunikationssystems verwendbare frequenz- und/oder zeitsprungbasierte Belegung von Ressourcen angibt, wobei zumindest ein Teil der Ressourcen des Kanalzugriffsmusters einer konkurrenzfreien Periode zugewiesen ist, wobei das Signal ferner eine Steuerungsinformation zur Steuerung eines Zugriffs auf die Ressourcen der konkurrenzfreien Periode aufweist.

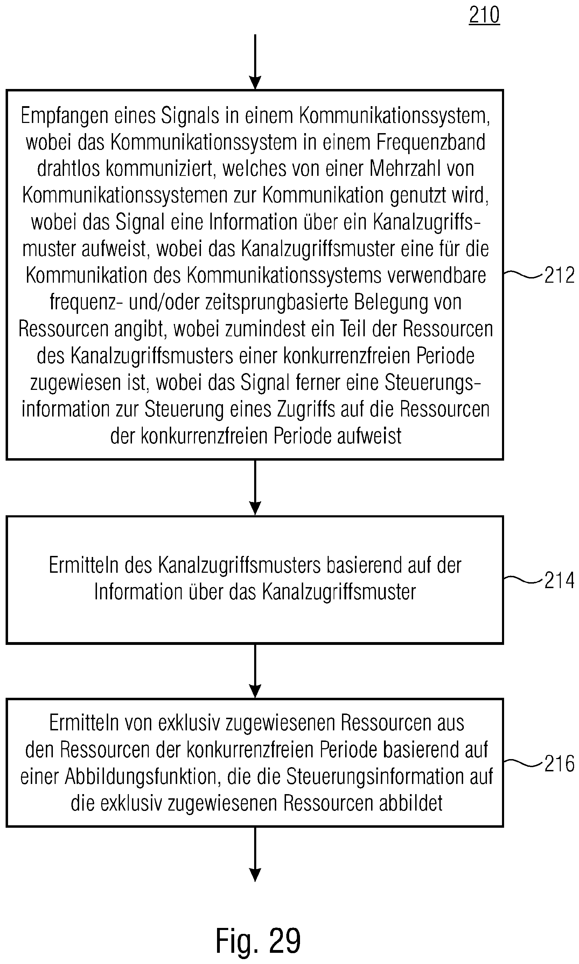

Fig. 29 zeigt ein Flussdiagramm eines Verfahrens 210, gemäß einem Ausführungsbeispiel der vorliegenden Erfindung. Das Verfahren 210 umfasst einen Schritt des Empfangen eines Signals in einem Kommunikationssystem, wobei das Kommunikationssystem in einem Frequenzband drahtlos kommuniziert, welches von einer Mehrzahl von Kommunikationssystemen zur Kommunikation genutzt wird, wobei das Signal eine Information über ein Kanalzugriffsmuster aufweist, wobei das Kanalzugriffsmuster eine für die Kommunikation des Kommunikationssystems verwendbare frequenz- und/oder zeitsprungbasierte Belegung von Ressourcen angibt, wobei zumindest ein Teil der Ressourcen des Kanalzugriffsmusters einer konkurrenzfreien Periode zugewiesen ist, wobei das Signal ferner eine Steuerungsinformation zur Steuerung eines Zugriffs auf die Ressourcen der konkurrenzfreien Periode aufweist. Ferner umfasst das Verfahren 210 einen Schritt 214 des Ermittelns des Kanalzugriffsmusters basierend auf der Information über das Kanalzugriffsmuster. Ferner umfasst das Verfahren 210 einen Schritt 216 des Ermittelns von exklusiv zugewiesenen Ressourcen aus den Ressourcen der konkurrenzfreien Periode basierend auf einer Abbildungsfunktion, die die Steuerungsinformation auf die exklusiv zugewiesenen Ressourcen abbildet

Ausführungsbeispiele finden Anwendung in Systemen zur Funkübertragung von Daten von Endgeräten zu einer Basisstation oder von einer/mehrerer Basisstationen zu Endgeräten. Beispielsweise kann es sich bei einem System dabei um ein persönliches Netzwerk (engl. Personal Area Network, PAN) oder ein Niedrigenergie-Weitverkehrsnetzwerk (engl. Low Power Wide Area Network, LPWAN) handeln, wobei die Endgeräte z.B. batteriebetriebene Sensoren (Sensorknoten) sein können.

Ausführungsbeispiele zielen auf Anwendungsfälle, in welchen eine Nachricht (Datenpaket) in einem Funknetzwerk in mehreren Teil-Datenpaketen übertragen wird (sogenanntes Telegrammaufteilungsverfahren, engl. Telegram Splitting [1]) und in welchem mehrere untereinander unkoordinierte Funknetzwerke auf gemeinsame Funkressourcen (z.B. gemeinsames Frequenzband) zugreifen.

Wie bereits erwähnt können die hierin beschriebenen Ausführungsbeispiele eingesetzt werden, um Daten basierend auf dem Telegram-Splitting-Verfahren zwischen den Teilnehmern des Kommunikationssystems zu übertragen. Beim Telegram-Splitting-Verfahren werden Daten, wie z.B. ein Telegramm oder Datenpaket, in eine Mehrzahl von Sub-Datenpakete (oder Teildatenpakte, oder Teilpakete) aufgeteilt und die Sub-Datenpakete unter Verwendung eines Zeit- und/oder Frequenzsprungmusters in der Zeit und/oder in der Frequenz verteilt von einem Teilnehmer zu einem anderen Teilnehmer (z.B. von der Basistation zum Endpunkt, oder vom Endpunkt zur Basisstation) des Kommunikationssystems übertragen, wobei der Teilnehmer, der die Sub-Datenpakete empfängt, diese wieder zusammenfügt (oder kombiniert), um das Datenpaket zu erhalten. Jedes der Sub-Datenpakete enthält dabei nur einen Teil des Datenpakets.

Das Datenpaket kann ferner kanalcodiert sein, so dass zum fehlerfreien Decodieren des Datenpakets nicht alle Sub-Datenpakete, sondern nur ein Teil der Sub-Datenpakete erforderlich ist.

Bei der Übertragung von Daten basierend auf dem Telegram-Splitting-Verfahren, können die Sub-Datenpakete in einer Teilmenge (z.B. einer Auswahl) der verfügbaren Ressourcen des netzwerkspezifischen Kanalzugriffsmusters verteilt übertragen werden. Im Detail können die Sub-Datenpaketen basierend auf dem relativen Kanalzugriffsmuster, d.h. in den Ressourcen des relativen Kanalzugriffsmusters, übertragen werden. Beispielsweise kann pro Ressource ein Sub-Datenpaket übertragen werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger, das digitale Speichermedium oder das computerlesbare Medium sind typischerweise gegenständlich und/oder nichtvergänglich bzw. nichtvorübergehend.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die hierin beschriebenen Vorrichtungen können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Vorrichtungen, oder jedwede Komponenten der hierin beschriebenen Vorrichtungen können zumindest teilweise in Hardware und/oder in Software (Computerprogramm) implementiert sein.

Die hierin beschriebenen Verfahren können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Verfahren, oder jedwede Komponenten der hierin beschriebenen Verfahren können zumindest teilweise durch Hardware und/oder durch Software ausgeführt werden.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

Literaturverzeichnis

[1] DE 10 2011 082 098 B4

[2] IEEE Std. 802.15.4 - 2015 - IEEE Standard for Low-Rate Wireless Networks, 2015

[3] G. Kilian, H. Petkov, R. Psiuk, H. Lieske, F. Beer, J. Robert, and A. Heuberger, "Improved coverage for low-power telemetry systems using telegram splitting," in Proceedings of 2013 European Conference on Smart Objects, Systems and Technologies (SmartSysTech), 2013

[4] G. Kilian, M. Breiling, H. H. Petkov, H. Lieske, F. Beer, J. Robert, and A. Heuberger, "Increasing Transmission Reliability for Telemetry Systems Using Telegram Splitting," IEEE Transactions on Communications, vol. 63, no. 3, pp. 949-961, Mar. 2015

[5] Huffman-Codierung, http://www.ziegenbalg.ph-karlsruhe.de/materialienhomepage-jzbg/cc-interaktiv/huffman/codierung.htm, zuletzt geöffnet: 03.04.2019

[6] IEEE 802.15.4w Specification

[7] ETSI TS 103 357 Specification

Abkürzungsverzeichnis

| | |
|---|---|
| CRC: | Cyclic Redundancy Check |
| LPWAN: | Low Power Wide Area Network |
| LSB: | Least Significant Bit(s) |
| MSB: | Most Significant Bit(s) |
| PAN: | Personal Area Network |
| TLS: | Transport Layer Security |
| TSMA: | Telegram-Splitting-Multiple-Access |

**Patentansprüche**

**1.** Basisstation (104) eines Kommunikationssystems (102_1),

wobei das Kommunikationssystem (102_1) in einem Frequenzband drahtlos kommuniziert, welches von einer Mehrzahl von Kommunikationssystemen (102_2,102_3) zur Kommunikation genutzt wird,
wobei die Basisstation (104) ausgebildet ist, um ein Signal (120) zu senden,
wobei das Signal (120) eine Information über ein Kanalzugriffsmuster (110) aufweist, wobei das Kanalzugriffsmuster (110) eine für die Kommunikation der Basisstation (104) und mehreren Endpunkten (106_1-106J) des Kommunikationssystems (102_1) verwendbare frequenz- und/oder zeitsprungbasierte Belegung von Ressourcen (112_1-112_m) des Frequenzbands angibt,
wobei zumindest ein Teil der Ressourcen (112_1-112_m) des Kanalzugriffsmusters (110) einem konkurrenzfreien Übertragungsabschnitt (160) zugewiesen ist, in dem die Basisstation einen Zugriff auf die Ressourcen (112_1-112_1) des konkurrenzfreien Übertragungsabschnitts (160) steuert und einen oder mehreren Endpunkten (106_1-106_j) des Kommunikationssystems (102_1) zur exklusiven Nutzung zuweist,
wobei das Signal (120) ferner eine Steuerungsinformation zur Steuerung des Zugriffs des oder der mehreren Endpunkte (106_1-106J) auf die zur exklusiven Nutzung zugewiesenen Ressourcen (112_1-112_l) des konkurrenzfreien Übertragungsabschnitts (160) aufweist,
wobei einem Endpunkt des Kommunikationssystems (102_2) exklusiv zugewiesene Ressourcen aus den Ressourcen (112_1-112_1) des konkurrenzfreien Übertragungsabschnitts (160) basierend auf einer Abbildungsfunktion (180), die Steuerungsparameter der Steuerungsinformation und vorab bekannte Basisparameter auf die exklusiv zugewiesenen Ressourcen abbildet, ermittelbar sind.

**2.** Basisstation (104) nach einem der vorangehenden Ansprüche,
wobei die Steuerungsinformation folgende Steuerungsparameter (182) umfasst:

- IDs von Endpunkten des konkurrenzfreien Übertragungsabschnitts (160), wobei die Endpunkte des konkurrenzfreien Übertragungsabschnitts (160) Endpunkte einer ersten Klasse von Endpunkten und/oder Endpunkte einer zweiten Klasse von Endpunkten umfasst,
- eine Anzahl an zugewiesenen Ressourcen für jeden der Endpunkte des konkurrenzfreien Übertragungsabschnitts (160) oder eine davon abgeleitete Information, und
- eine Anzahl von Endpunkten, die der ersten Klasse von Endpunkten zugehörig sind.

**3.** Basisstation (104) nach einem der vorangehenden Ansprüche,
wobei folgende Basisparameter (184) vorab bekannt sind oder bei einer Anmeldung eines Endpunkts an der Basisstation (104) zwischen der Basisstation und dem Endpunkt ausgetauscht werden:

- eine Anzahl an Ressourcen (112_1-112_l) des konkurrenzfreien Übertragungsabschnitts (160),
- ein erstes relatives Kanalzugriffsmuster (116_1) für eine erste Klasse von Endpunkten, wobei das erste relative Kanalzugriffsmuster (116_1) für die Übertragung zu verwendende Ressourcen aus den Ressourcen (112_1-112_l) des konkurrenzfreien Übertragungsabschnitts (160) angibt,
- ein zweites relatives Kanalzugriffsmuster (116_2) für eine zweite Klasse von Endpunkten, wobei das zweite relative Kanalzugriffsmuster (116_2) für die Übertragung zu verwendende Ressourcen aus den Ressourcen (112_1-112_l) des konkurrenzfreien Übertragungsabschnitts (160) angibt.

**4.** Basisstation (104) nach einem der Ansprüche 2 bis 3,
wobei den Endpunkten des konkurrenzfreien Übertragungsabschnitts (160) exklusiv zugewiesene Ressourcen aus den Ressourcen (112_1-112_l) des konkurrenzfreien Übertragungsabschnitts (160) basierend auf einer Abbildungsfunktion (180), die die Steuerungsparameter (182) nach Anspruch 2 und die Basisparameter (184) nach Anspruch 3 auf die jeweiligen exklusiv zugewiesenen Ressourcen abbildet, ermittelbar sind.

**5.** Basisstation (104) nach Anspruch 4,
wobei gemäß der Abbildungsfunktion (180) den Endpunkten des konkurrenzfreien Übertragungsabschnitts (160), die der ersten Klasse von Endpunkten zugehörig sind, verfügbare Ressourcen aus den Ressourcen (112_1-112_l) des konkurrenzfreien Übertragungsabschnitts (160) nacheinander in einer Reihenfolge einer Nennung der IDs der jeweiligen Endpunkte durch die Signalisierungsinformation die jeweilige durch die Signalisierungsinformation angegebene Anzahl an zugewiesenen Ressourcen entsprechend des ersten relativen Kanalzugriffsmusters (116_1) exklusiv zugewiesen werden.

**6.** Basisstation (104) nach einem der Ansprüche 2 bis 5,
wobei die von der Anzahl an zugewiesenen Ressourcen für jeden der Endpunkte des konkurrenzfreien Übertragungsabschnitts (160) abgeleitete Information eine geringere Auflösung aufweist als ein Ressourcenelement.

**7.** Endpunkt (106_1) eines Kommunikationssystems (102_1),

wobei das Kommunikationssystem (102_1) in einem Frequenzband drahtlos kommuniziert, welches von einer Mehrzahl von Kommunikationssystemen (102_2, 102_3) zur Kommunikation genutzt wird,
wobei der Endpunkt (106_1) ausgebildet ist, um ein Signal (120) zu empfangen, wobei das Signal (120) eine Information über ein Kanalzugriffsmuster (110) aufweist, wobei das Kanalzugriffsmuster (110) eine für die Kommunikation einer Basisstation (104) und mehreren Endpunkten (106_1-106J) des Kommunikationssystems (102_1) verwendbare frequenz- und/oder zeitsprungbasierte Belegung von Ressourcen (112_1-112_m) des Frequenzbands angibt,
wobei der Endpunkt (106_1) ausgebildet ist, um das Kanalzugriffsmuster (110) basierend auf der Information über das Kanalzugriffsmuster (110) zu ermitteln,
wobei zumindest ein Teil der Ressourcen (112_1-112_l) des Kanalzugriffsmusters (110) einem konkurrenzfreien Übertragungsabschnitt (160) zugewiesen ist,
wobei das Signal (120) ferner eine Steuerungsinformation zur Steuerung eines Zugriffs auf die zur exklusiven Nutzung zugewiesenen Ressourcen (112_1-112_l) des konkurrenzfreien Übertragungsabschnitts (160) aufweist,
wobei der Endpunkt (106_1) ausgebildet ist, um dem Endpunkt (106_1) exklusiv zugewiesene Ressourcen aus den Ressourcen (112_1-112_l) des konkurrenzfreien Übertragungsabschnitts (160) basierend auf einer Abbildungsfunktion (180), die Steuerungsparameter der Steuerungsinformation und vorab bekannte Basisparameter auf die exklusiv zugewiesenen Ressourcen abbildet, zu ermitteln.

**8.** Endpunkt (106_1) nach Anspruch 7,
wobei die Steuerungsinformation folgende Steuerungsparameter (182) umfasst:

- IDs von Endpunkten des konkurrenzfreien Übertragungsabschnitts (160), wobei die Endpunkte des konkurrenzfreien Übertragungsabschnitts (160) Endpunkte einer ersten Klasse von Endpunkten und/oder Endpunkte einer zweiten Klasse von Endpunkten umfasst,
- eine Anzahl an zugewiesenen Ressourcen für jeden der Endpunkte des konkurrenzfreien Übertragungsabschnitts (160) oder eine davon abgeleitete Information, und
- eine Anzahl von Endpunkten, die der ersten Klasse von Endpunkten zugehörig sind.

**9.** Endpunkt (106_1) nach einem der Ansprüche 7 bis 8,
wobei folgende Basisparameter (184) vorab bekannt sind oder bei einer Anmeldung eines Endpunkts an der Basisstation (104) zwischen der Basisstation (104) und dem Endpunkt ausgetauscht werden:

- eine Anzahl an Ressourcen (112_1-112_l) des konkurrenzfreien Übertragungsabschnitts (160),
- ein erstes relatives Kanalzugriffsmuster (116_1) für eine erste Klasse von Endpunkten, wobei das erste relative Kanalzugriffsmuster (116_1) für die Übertragung zu verwendende Ressourcen aus den Ressourcen (112_1-112_l) des konkurrenzfreien Übertragungsabschnitts (160) angibt,
- ein zweites relatives Kanalzugriffsmuster (116_2) für eine zweite Klasse von Endpunkten, wobei das zweite relative Kanalzugriffsmuster (116_2) für die Übertragung zu verwendende Ressourcen aus den Ressourcen (112_1-112_l) des konkurrenzfreien Übertragungsabschnitts (160) angibt.

**10.** Endpunkt (106_1) nach einem der Ansprüche 8 bis 9,
wobei der Endpunkt (106_1) ausgebildet ist, um dem Endpunkt (106_1) durch die Signalisierungsinformation exklusiv zugewiesene Ressourcen aus den Ressourcen (112_1-112_l) des konkurrenzfreien Übertragungsabschnitts (160) basierend auf der Abbildungsfunktion (180), die die Steuerungsparameter (182) nach Anspruch 8 und die Basisparameter (184) nach Anspruch 9 auf die jeweiligen exklusiv zugewiesenen Ressourcen abbildet, zu ermitteln.

**11.** Endpunkt (106_1) nach Anspruch 10,
wobei gemäß der Abbildungsfunktion (180) den Endpunkten des konkurrenzfreien Übertragungsabschnitts (160), die der ersten Klasse von Endpunkten zugehörig sind, verfügbare Ressourcen aus den Ressourcen (112_1-112_l) des konkurrenzfreien Übertragungsabschnitts (160) nacheinander in einer Reihenfolge einer Nennung der IDs der jeweiligen Endpunkte durch die Signalisierungsinformation die jeweilige durch die Signalisierungsinformation angegebene Anzahl an zugewiesenen Ressourcen entsprechend des ersten relativen Kanalzugriffsmusters (116_1) exklusiv zugewiesen werden.

**12.** Kommunikationssystem (102_1), mit folgenden Merkmalen:

einer Basisstation (104) nach einem der Ansprüche 1 bis 6, und
zumindest einem Endpunkt (106_1) nach einem der Ansprüche 7 bis 11.

**13.** Verfahren (200), ausgeführt durch eine Basisstation (104), wobei das Verfahren (200) folgende Schritte aufweist:

Senden (202) eines Signals (120) in einem Kommunikationssystem (102_1),
wobei das Kommunikationssystem (102_1) in einem Frequenzband drahtlos kommuniziert, welches von einer Mehrzahl von Kommunikationssystemen (102_2, 102_3) zur Kommunikation genutzt wird,
wobei das Signal (120) eine Information über ein Kanalzugriffsmuster (110) aufweist, wobei das Kanalzugriffsmuster (110) eine für die Kommunikation der Basisstation und mehreren Endpunkten des Kommunikationssystems verwendbare frequenz- und/oder zeitsprungbasierte Belegung von Ressourcen (112_1-112_m) des Frequenzbands angibt,
wobei zumindest ein Teil der Ressourcen (116_1-116_m) des Kanalzugriffsmusters (110) einem konkurrenzfreien Übertragungsabschnitt (160) zugewiesen ist, in dem die Basisstation einen Zugriff auf die Ressourcen (112_1-112_l) des konkurrenzfreien Übertragungsabschnitts (160) steuert und einen oder mehreren Endpunkten (106_1-106_j) des Kommunikationssystems (102_1) zur exklusiven Nutzung zuweist,
wobei das Signal (120) ferner eine Steuerungsinformation zur Steuerung des Zugriffs des oder der mehreren Endpunkte (106_1-106J) auf die zur exklusiven Nutzung zugewiesenen Ressourcen (112_1-112_l) des konkurrenzfreien Übertragungsabschnitts (160) aufweist,
wobei einem Endpunkt des Kommunikationssystems exklusiv zugewiesene Ressourcen aus den Ressourcen des konkurrenzfreien Übertragungsabschnitts basierend auf einer Abbildungsfunktion, die Steuerungsparameter der Steuerungsinformation und vorab bekannte Basisparameter auf die exklusiv zugewiesenen Ressourcen abbildet, ermittelbar sind.

**14.** Verfahren (210), ausgeführt durch einen Endpunkt (106_1), wobei das Verfahren (210) folgende Schritte aufweist:

Empfangen (212) eines Signals (120) in einem Kommunikationssystem (102_1),
wobei das Kommunikationssystem (102_1) in einem Frequenzband drahtlos kommuniziert, welches von einer Mehrzahl von Kommunikationssystemen (102_2, 102_3) zur Kommunikation genutzt wird,
wobei das Signal (120) eine Information über ein Kanalzugriffsmuster (110) aufweist, wobei das Kanalzugriffsmuster (110) eine für die Kommunikation einer Basisstation und mehreren Endpunkten des Kommunikationssystems (102_1) verwendbare frequenz- und/oder zeitsprungbasierte Belegung von Ressourcen (112_1-112_m) des Frequenzbands angibt,
wobei zumindest ein Teil der Ressourcen (112_1-112_m) des Kanalzugriffsmusters (110) einem konkurrenzfreien Übertragungsabschnitt (160) zugewiesen ist,
wobei das Signal ferner eine Steuerungsinformation zur Steuerung eines Zugriffs auf die zur exklusiven Nutzung zugewiesenen Ressourcen (112_1-112_l) des konkurrenzfreien Übertragungsabschnitts (160) aufweist,
Ermitteln (214) des Kanalzugriffsmusters (110) basierend auf der Information über das Kanalzugriffsmuster (110), und
Ermitteln (216) von exklusiv zugewiesenen Ressourcen aus den Ressourcen (112_1-112_l) des konkurrenzfreien Übertragungsabschnitts (160) basierend auf einer Abbildungsfunktion (180), die Steuerungsparameter der Steuerungsinformation und vorab bekannte Basisparameter auf die exklusiv zugewiesenen Ressourcen abbildet.

**15.** Computerprogramm umfassend Befehle, die bei der Ausführung des Programms durch einen Computer diesen Veranlassen das Verfahren gemäß einem der Ansprüche 13 und 14 auszuführen.

## Claims

**1.** Base station (104) of a communication system (102_1),

wherein the communication system (102_1) communicates wirelessly in a frequency band used for communication by a plurality of communication systems (102_2, 102_3),
wherein the base station (104) is configured to transmit a signal (120),
wherein the signal (120) comprises information about a channel access pattern (110), wherein the channel access pattern (110) indicates a frequency-hop-based and/or time-hop-based occupancy of resources (112_1-112_m) of the frequency band that is usable for the communication of the base station (104) and several end points (106_1-106J) of the communication system (102_1), wherein at least part of the resources (112_1-112_m) of the channel access pattern (110) are allocated to a contention-free transmission portion (160) in which the base station controls access to the resources (112_1-112_l) of the contention-free transmission portion (160) and allocates one or more end points (106_1-106J) of the communication system (102_1) for exclusive use,
wherein the signal (120) further comprises control information for controlling the access of the one or more end points (106_1-106J) to the resources (112_1-112_l), allocated for exclusive use, of the contention-free transmission portion (160) ,
wherein resources exclusively allocated to an end point of the communication system (102_2) are determinable from the resources (112_1-112_l) of the contention-free transmission portion (160) based on a mapping function (180) that maps control parameters of the control information and previously known base parameters to the exclusively allocated resources.

**2.** Base station (104) according to the preceding claim,
wherein the control information includes the following control parameters (182):

- IDs of end points of the contention-free transmission portion (160), wherein the end points of the contention-free transmission portion (160) include end points of a first class of end points and/or end points of a second class of end points,
- a number of allocated resources for each of the end points of the contention-free transmission portion (160) or information derived therefrom, and
- a number of end points associated with the first class of end points.

**3.** Base station (104) according to one of the preceding claims,
wherein the following base parameters (184) are previously known or are exchanged between the base station and the end point upon registration of an end point with the base station (104):

- a number of resources (112_1-112_l) of the contention-free transmission portion (160),
- a first relative channel access pattern (116_1) for a first class of end points, wherein the first relative channel access pattern (116_1) indicates resources to be used for transmission from the resources (112_1-112_l) of the contention-free transmission portion (160),
- a second relative channel access pattern (116_2) for a second class of end points, wherein the second relative channel access pattern (116_2) indicates resources to be used for transmission from the resources (112_1-112_l) of the contention-free transmission portion (160).

**4.** Base station (104) according to one of claims 2 to 3,
wherein resources exclusively allocated to the end points of the contention-free transmission portion (160) are determinable from the resources (112_1-112_l) of the contention-free transmission portion (160) based on a mapping function (180) that maps the control parameters (182) according to claim 2 and the base parameters (184) according to claim 3 to the respective exclusively allocated resources.

**5.** Base station (104) according to claim 4,
wherein, according to the mapping function (180), available resources from the resources (112_1-112_l) of the contention-free transmission portion (160) are exclusively allocated to the end points of the contention-free transmission portion (160) that are associated with the first class of end points, one after the other in an order of naming the IDs of the respective end points by the signaling information, wherein the respective number of allocated resources, indicated by the signaling information, is exclusively allocated to the end points corresponding to the first relative channel access pattern (116_1).

**6.** Base station (104) according to one of claims 2 to 5,
wherein the information derived from the number of allocated resources for each of the end points of the contention-free transmission portion (160) has a lower resolution than a resource element.

**7.** End point (106_1) of a communication system (102_1),

wherein the communication system (102_1) communicates wirelessly in a frequency band used for communication by a plurality of communication systems (102_2, 102_3),
wherein the end point (106_1) is configured to receive a signal (120), wherein the signal (120) comprises information about a channel access pattern (110), wherein the channel access pattern (110) indicates a frequency-hop-based and/or time-hop-based occupancy of resources (112_1-112_m) of the frequency band that is usable for the communication of a base station (104) and several end points (106_1-106_j) of the communication system (102_1),
wherein the end point (106_1) is configured to determine the channel access pattern (110) based on the information about the channel access pattern (110),
wherein at least part of the resources (112_1-112_l) of the channel access pattern (110) are allocated to a contention-free transmission portion (160),
wherein the signal (120) further comprises control information for controlling access to the resources (112_1-112_l), allocated for exclusive use, of the contention-free transmission portion (160),
wherein the end point (106_1) is configured to determine resources exclusively allocated to the end point (106_1) from the resources (112_1-112_l) of the contention-free transmission portion (160) based on a mapping function (180) that maps control parameters of the control information and previously known base parameters to the exclusively allocated resources.

**8.** End point (106_1) according to claim 7,
wherein the control information includes the following control parameters (182):

- IDs of end points of the contention-free transmission portion (160), wherein the end points of the contention-free transmission portion (160) include end points of a first class of end points and/or end points of a second class of end points,
- a number of allocated resources for each of the end points of the contention-free transmission portion (160) or information derived therefrom, and
- a number of end points associated with the first class of end points.

**9.** End point (106_1) according to one of claims 7 to 8,
wherein the following base parameters (184) are previously known or are exchanged between the base station (104) and the end point upon registration of an end point with the base station (104):

- a number of resources (112_1-112_l) of the contention-free transmission portion (160),
- a first relative channel access pattern (116_1) for a first class of end points, wherein the first relative channel access pattern (116_1) indicates resources to be used for transmission from the resources (112_1-112_l) of the contention-free transmission portion (160),
- a second relative channel access pattern (116_2) for a second class of end points, wherein the second relative channel access pattern (116_2) indicates resources to be used for transmission from the resources (112_1-112_l) of the contention-free transmission portion (160).

**10.** End point (106_1) according to one of claims 8 to 9,
wherein the end point (106_1) is configured to determine resources exclusively allocated to the end point (106_1) by the signaling information from the resources (112_1-112_l) of the contention-free transmission portion (160) based on the mapping function (180) that maps the control parameters (182) according to claim 8 and the base parameters (184) according to claim 9 to the respective exclusively allocated resources.

**11.** End point (106_1) according to claim 10,
wherein, according to the mapping function (180), available resources from the resources (112_1-112_l) of the contention-free transmission portion (160) are exclusively allocated to the end points of the contention-free transmission portion (160) that are associated with the first class of end points, one after the other in an order of naming the IDs of the respective end points by the signaling information, wherein the respective number of allocated resources, indicated by the signaling information, is exclusively allocated to the end points corresponding to the first relative channel access pattern (116_1).

**12.** Communication system (102_1), having the following features:

a base station (104) according to one of claims 1 to 6, and
at least one end point (106_1) according to one of claims 7 to 11.

**13.** Method (200) carried out by a base station (104), the method (200) comprising:

transmitting (202) a signal (120) in a communication system (102_1),
wherein the communication system (102_1) communicates wirelessly in a frequency band used for communication by a plurality of communication systems (102_2, 102_3),
wherein the signal (120) comprises information about a channel access pattern (110), wherein the channel access pattern (110) indicates a frequency-hop-based and/or time-hop-based occupancy of resources (112_1-112_m) of the frequency band that is usable for the communication of the base station and several end points of the communication system,
wherein at least part of the resources (116_1-116_m) of the channel access pattern (110) are allocated to a contention-free transmission portion (160) in which the base station controls access to the resources (112_1-112_l) of the contention-free transmission portion (160) and allocates one or more end points (106_1-106J) of the communication system (102_1) for exclusive use,
wherein the signal (120) further comprises control information for controlling the access of the one or more end points (106_1-106J) to the resources (112_1-112_l), allocated for exclusive use, of the contention-free transmission portion (160),
wherein resources exclusively allocated to an end point of the communication system are determinable from the resources of the contention-free transmission portion based on a mapping function that maps control parameters of the control information and previously known base parameters to the exclusively allocated resources.

**14.** Method (210) carried out by an end point (106_1), the method (210) comprising:

receiving (212) a signal (120) in a communication system (102_1),
wherein the communication system (102_1) communicates wirelessly in a frequency band used for communication by a plurality of communication systems (102_2, 102_3),
wherein the signal (120) comprises information about a channel access pattern (110), wherein the channel access pattern (110) indicates a frequency-hop-based and/or time-hop-based occupancy of resources (112_1-112_m) of the frequency band that is usable for the communication of a base station and several end points of the communication system (102_1),
wherein at least part of the resources (112_1-112_m) of the channel access pattern (110) are allocated to a contention-free transmission portion (160),
wherein the signal further comprises control information for controlling access to the resources (112_1-112_l), allocated for exclusive use, of the contention-free transmission portion (160),
determining (214) the channel access pattern (110) based on the information about the channel access pattern (110), and
determining (216) exclusively allocated resources from the resources (112_1-112_l) of the contention-free transmission portion (160) based on a mapping function (180) that maps control parameters of the control information and previously known base parameters to the exclusively allocated resources.

**15.** Computer program comprising instructions which, when the program is executed by a computer, cause the same to carry out the method according to one of claims 13 and 14.

**Revendications**

**1.** Station de base (104) d’un système de communication (102_1),

lequel système de communication (102_1) communique sans fil sur une plage de fréquence qui est utilisée pour communiquer par une multitude de systèmes de communication (102_2, 102_3),
laquelle station de base (104) est configurée pour émettre un signal (120),
lequel signal (102) comporte une information sur un modèle d’accès au canal (110), lequel modèle d’accès au canal (110) spécifie une occupation de ressources (112_1-112_m) de la plage de fréquence basée sur des sauts de fréquence et/ou temporels et pouvant être utilisée pour la communication de la station de base (104) et de plusieurs points de terminaison (106_1-106J) du système de communication (102_1),
au moins une partie des ressources (112_1-112_m) du modèle d’accès au canal (110) étant affectée à une section de transmission sans concurrence (160) dans laquelle la station de base contrôle un accès aux ressources (112_1-112_l) de la section de transmission sans concurrence (160) et affecte un ou plusieurs points de terminaison (106_1-106_j) du système de communication (102_1) à l’utilisation exclusive,
le signal (120) comportant en outre une information de commande pour commander l’accès du ou des multiples points de terminaison (106_1-106_j) aux ressources (112_1-112_l) de la section de transmission sans concurrence (160) affectées à l'utilisation exclusive, et
des ressources affectées de façon exclusive à partir des ressources (112_1 -112J) de la section de transmission sans concurrence (160), sur la base d'une fonction de mappage (180) qui mappe des paramètres de commande de l'information de commande et des paramètres préalablement connus sur les ressources affectées de façon exclusive, pouvant être transmises à un point de terminaison du système de communication (102_2).

**2.** Station de base (104) selon une des revendications précédentes,
dans laquelle l'information de commande comprend les paramètres de commande (182) suivants :

- ID de points de terminaison de la section de transmission sans concurrence (160), lesquels points de terminaison de la section de transmission sans concurrence (160) comprend des points de terminaison d'une première classe de points de terminaison et/ou des points de terminaison d'une deuxième classe de points de terminaison,
- un certain nombre de ressources affectées pour chacun des points de terminaison de la section de transmission sans concurrence (160) ou une information déduite de cela et
- un certain nombre de points de terminaison qui appartiennent à la première classe de points de terminaison.

**3.** Station de base (104) selon une des revendications précédentes,
dans laquelle les paramètres de base (184) suivants sont préalablement connus ou sont échangés entre la station de base et le point de terminaison, lors d'une annonce d'un point de terminaison à la station de base (104) :

- un certain nombre de ressources (112_1 -112J) de la section de transmission sans concurrence (160),
- un premier modèle relatif d'accès au canal (116_1) pour une première classe de points de terminaison, lequel premier modèle relatif d'accès au canal (116_1) indique des ressources à utiliser pour la transmission à partir des ressources (112_1 -112J) de la section de transmission sans concurrence (160) et
- un deuxième modèle relatif d'accès au canal (116_2) pour une deuxième classe de points de terminaison, lequel deuxième modèle relatif d'accès au canal (116_2) indique des ressources à utiliser pour la transmission à partir des ressources (112_1 -112J) de la section de transmission sans concurrence (160).

**4.** Station de base (104) selon une des revendications 2 à 3,
dans laquelle des ressources affectées de façon exclusive à partir des ressources (112_1-112_l) de la section de transmission sans concurrence (160), sur la base d'une fonction de mappage (180) qui mappe les paramètres de commande (182) selon la revendication 2 et les paramètres de base (184) selon la revendication 3 sur les ressources affectées de façon exclusive, peuvent être transmises aux points de terminaison de la section de transmission sans concurrence (160).

**5.** Station de base (104) selon la revendication 4,
dans laquelle, selon la fonction de mappage (180), des ressources disponibles à partir des ressources (112_1-112_l) de la section de transmission sans concurrence (160) sont affectées de façon exclusive aux points de terminaison de la section de transmission sans concurrence (160) qui appartiennent à la première classe des points de terminaison, les unes après les autres dans un ordre d'une énumération des ID des points de terminaison par l'information de signalisation, le nombre de ressources affectées indiqué par l'information de signalisation correspondant au premier modèle relatif d'accès au canal (116_1).

**6.** Station de base (104) selon une des revendications 2 à 5,
dans laquelle l'information déduite du nombre de ressources affectées pour chacun des points de terminaison de la section de transmission sans concurrence (160) présente une résolution inférieure à un élément de ressource.

**7.** Point de terminaison (106_1) d'un système de communication (102_1),

lequel système de communication (102_1) communique sans fil sur une plage de fréquence qui est utilisée pour communiquer par une multitude de systèmes de communication (102_2, 102_3),
lequel point de terminaison (106_1) est configuré pour recevoir un signal (120), lequel signal (102) comporte une information sur un modèle d'accès au canal (110), lequel modèle d'accès au canal (110) spécifie une occupation de ressources (112_1-112_m) de la plage de fréquence basée sur des sauts de fréquence et/ou temporels pouvant être utilisée pour la communication d'une station de base (104) et de plusieurs points de terminaison (106_1-106_j) du système de communication (102_1),
lequel point de terminaison (106_1) est configuré pour déterminer le modèle d'accès au canal (110) sur la base de l'information sur le modèle d'accès au canal (110),

au moins une partie des ressources (112_1-112_i) du modèle d'accès au canal (110) étant affectée à une section de transmission sans concurrence (160),
le signal (120) comportant en outre une information de commande pour commander un accès aux ressources (112_1-112_I) de la section de transmission sans concurrence (160) affectées à l'utilisation exclusive, et
le point de terminaison (106_1) étant configuré pour déterminer des ressources affectées de façon exclusive au point de terminaison (106_1) à partir des ressources (112_1-112_I) de la section de transmission sans concurrence (160), sur la base d'une fonction de mappage (180) qui mappe des paramètres de commande de l'information de commande et des paramètres préalablement connus sur les ressources affectées de façon exclusive.

**8.** Point de terminaison (106_1) selon la revendication 7,
dans lequel l'information de commande comprend les paramètres de commande (182) suivants :

- ID de points de terminaison de la section de transmission sans concurrence (160), lesquels points de terminaison de la section de transmission sans concurrence (160) comprend des points de terminaison d'une première classe de points de terminaison et/ou des points de terminaison d'une deuxième classe de points de terminaison,
- un certain nombre de ressources affectées pour chacun des points de terminaison de la section de transmission sans concurrence (160) ou une information déduite de cela et
- un certain nombre de points de terminaison qui appartiennent à la première classe de points de terminaison.

**9.** Point de terminaison (106_1) selon une des revendications 7 à 8,
dans lequel les paramètres de base (184) suivants sont préalablement connus ou sont échangés entre la station de base (104) et le point de terminaison lors d'une annonce d'un point de terminaison à la station de base (104) :

- un certain nombre de ressources (112_1-112_I) de la section de transmission sans concurrence (160),
- un premier modèle relatif d'accès au canal (116_1) pour une première classe de points de terminaison, lequel premier modèle relatif d'accès au canal (116_1) indique des ressources à utiliser pour la transmission à partir des ressources (112_1 -112J) de la section de transmission sans concurrence (160) et
- un deuxième modèle relatif d'accès au canal (116_2) pour une deuxième classe de points de terminaison, lequel deuxième modèle relatif d'accès au canal (116_2) indique des ressources à utiliser pour la transmission à partir des ressources (112_1-112_I) de la section de transmission sans concurrence (160).

**10.** Point de terminaison (106_1) selon une des revendications 8 à 9,
lequel point de terminaison (106_1) est configuré pour déterminer des ressources affectées au point de terminaison (106_1) de façon exclusive par l'information de ressource, à partir des ressources (112_1-112_I) de la section de transmission sans concurrence (160), sur la base d'une fonction de mappage (180) qui mappe les paramètres de commande (182) selon la revendication 8 et les paramètres de base (184) selon la revendication 9 sur les ressources affectées de façon exclusive.

**11.** Point de terminaison (106_1) selon la revendication 10,
dans lequel, selon la fonction de mappage (180), des ressources disponibles à partir des ressources (112_1-112_I) de la section de transmission sans concurrence (160) sont affectées de façon exclusive aux points de terminaison de la section de transmission sans concurrence (160) qui appartiennent à la première classe des points de terminaison, les unes après les autres dans un ordre d'une énumération des ID des points de terminaison par l'information de signalisation, le nombre de ressources affectées indiqué par l'information de signalisation correspondant au premier modèle relatif d'accès au canal (116_1).

**12.** Système de communication (102_1) doté des éléments caractéristiques suivants :

une station de base (104) parmi une des revendications 1 à 6 et
au moins un point de terminaison (106_1) selon une des revendications 7 à 11.

**13.** Procédé (200) exécuté par une station de base (104), lequel procédé (200) présente les étapes suivantes :

émission (202) d'un signal (120) dans un système de communication (102_1),
lequel système de communication (102_1) communique sans fil sur une plage de fréquence qui est utilisée pour communiquer par une multitude de systèmes de communication (102_2, 102_3),
lequel signal (102) comporte une information sur un modèle d'accès au canal (110), lequel modèle d'accès au canal (110) spécifie une occupation de ressources (112_1-112_m) de la plage de fréquence basée sur des sauts de fréquence et/ou temporels pouvant être utilisée pour la communication de la station de base et de plusieurs points de terminaison du système de communication,
au moins une partie des ressources (116_1-116_m) du modèle d'accès au canal (110) étant affectée à une section de transmission sans concurrence (160) dans laquelle la station de base contrôle un accès aux ressources (112_1-112_l) de la section de transmission sans concurrence (160) et affecte un ou plusieurs points de terminaison (106_1-106_j) du système de communication (102_1) à l'utilisation exclusive,
le signal (120) comportant en outre une information de commande pour commander l'accès du ou des multiples points de terminaison (106_1-106_j) aux ressources (112_1-112_l) de la section de transmission sans concurrence (160) affectées à l'utilisation exclusive, et
des ressources affectées de façon exclusive à partir des ressources (112_1 -112J) de la section de transmission sans concurrence (160), sur la base d'une fonction de mappage (180) qui mappe des paramètres de commande de l'information de commande et des paramètres préalablement connus sur les ressources affectées de façon exclusive, pouvant être transmises à un point de terminaison du système de communication (102_2).

**14.** Procédé (210) exécuté par un point de terminaison (106_1), lequel procédé (210) présente les étapes suivantes :

réception (212) d'un signal (120) dans un système de communication (102_1),
lequel système de communication (102_1) communique sans fil sur une plage de fréquence qui est utilisée pour communiquer par une multitude de systèmes de communication (102_2, 102_3),
lequel signal (120) comporte une information sur un modèle d'accès au canal (110), lequel modèle d'accès au canal (110) spécifie une occupation de ressources (112_1-112_m) de la
plage de fréquence basée sur des sauts de fréquence et/ou temporels pouvant être utilisée pour la communication de la station de base et de plusieurs points de terminaison du système de communication,
au moins une partie des ressources (112_1-112_m) du modèle d'accès au canal (110) étant affectée à une section de transmission sans concurrence (160),
le signal comportant en outre une information de commande pour commander un accès aux ressources (112_1-112_l) de la section de transmission sans concurrence (160) affectées à l'utilisation exclusive,
détermination (214) du modèle d'accès au canal (110) sur la base de l'information sur le modèle d'accès au canal (110), et
détermination (216) des ressources affectées de façon exclusive à partir des ressources (112_1-112_l) de la section de transmission sans concurrence (160), sur la base d'une fonction de mappage (180) qui mappe des paramètres de commande de l'information de commande et des paramètres préalablement connus sur les ressources affectées de façon exclusive.

**15.** Programme informatique comportant des instructions qui, lors de l'exécution du programme par un ordinateur, provoquent l'exécution par celui-ci du procédé selon une des revendications 13 et 14.

100
102_3
106_12
104_3
102_1
106_9
106_1
106_10
106_2
106_11
102_2
DS 1
106_5
106_6
104_1
104_2
106_3
106_8
106_4
106_7

Fig. 1

100
102_2
Netzwerk 2
106_5
106_6
BS 2
(104_2)
106_8
106_7
Störsignale
102_1
Netzwerk 1
106_1
106_2
BS 1
(104_1)
106_3
106_4

Fig. 2

(110_1)
Kanalzugriffsmuster
Netzwerk 1
(110_2)
Kanalzugriffsmuster
Netzwerk 2
112_1
112_2
Frequenz-
kanal-
index
(Netz
werk 1)
c0
c1
c2
c3
c4
...
t0
t1
t2
t3
t4
...
Zeitschlitzindex
(Netzwerk 1)
Zeit
1 Ressourceelement
bestimmt durch Frequenz-
kanal und Zeitschlitz

Fig. 3

102
106_4
Endpunkt
Controller
130
106_1
Endpunkt
Controller
130
104
120
Basisstation
Controller
130
106_3
Endpunkt
Controller
130
106_2
Endpunkt
Controller
130

Fig. 4

130
132
134
netzwerkspezifischer Identifikator
periodischer Zahlengenerator
140
142, 142'
ID
Z
randomisierender Zuordner R=map_rand(ID, Z)
136
144
R
Frequenz-/Zeitpunkt-Zuordner (f,t=map_ft(R)
138
146
148
Frequenz-information f
Zeit-information t
Kanalzugriffs-muster

Fig. 5

130
132
135_1
135_2
netzwerkspezifischer Identifikator
periodischer Bakenindex
periodischer Zeitschlitzindex
140
143_1
143_2
ID
Z1
Z2
randomisierender Zuordner
R=map_rand(ID, Z1, Z2)
136
144
R
Frequenz-/Zeitpunkt-Zuordner
(f,t=map_ft(R)
138
146
148
Frequenz-information f
Zeit-information t
Kanalzugriffs-muster

Fig. 6

130
138
Frequenzdifferenz-/Zeitpunkt-Zuordner
(Δfi,t=map_Δft(R))
R
Δfin
152
Δfin+1
fin
Verzögerung
154
150
Zeit-
information t
Frequenzkanal-
information fi

Fig. 7

Histogramm von Δfi
Anzahl der Ereignisse
x 10^4
3,5
3
2,5
2
1,5
1
0,5
0
-60
-40
-20
0
20
40
60
Δfi

Fig. 8

Frequenz
110
112
Kanalzugriffs-
muster
Frequenz-
kanal-
index
c4
c3
c2
c1
c0
Zeit
Projektion auf
die Zeitachse
für den Kanalzugriff
ungenutzte Zeitschlitze

Fig. 9

110
Zeit
Schritt n=0
Schritt n=1
Schritt n=2
Schritt n=3
Schritt n=4
Schritt n=5
$r_0=1$
$r_1=3$
$r_2=2$
$r_3=2$
$r_4=1$
$r_5=2$
112
für den Kanalzugriff ungenutzte Zeitschlitze

Fig. 10

110
Zeit
114
Cluster 0
112
$v_0=2$
114
Cluster 1
112
$v_1=1$
114
Cluster 2
$v_2=3$
112
$v_3=2$
114
Cluster 3
112
114
Cluster 4
112
$v_4=0$

Fig. 11

110
Zeit
114
Cluster 0
Cluster 1
Cluster 2
Cluster 3
Cluster 4
112
$v_0=2$
$v_1=1$
$v_2=2$
$v_3=2$
$v_4=0$
nicht belegbare
Zeitschlitze

Fig. 12

110
Kanalzugriffsmuster
Aktivitätsrate $A_1$
Aktivitätsrate $A_2$
Aktivitätsrate $A_3$
Bereich 1
Bereich 2
Bereich 3
Zeit

Fig. 13

110
Frequenz
Zeit
112
112*
Frequenz-
kanal-
index
c4
c3
c2
c1
c0
= Ressourceelemente des Grund-Kanalzugriffsmusters
= bei Bedarf zusätzlich aktivierbare Elemente des Kanalzugriffsmusters

Fig. 14

110
regelmäßig stärker gestörter (z.B. durch externe Netzwerke stark belegter) Frequenzbereich
Frequenz
112
Frequenzkanäle werden nicht ins Kanalzugriffs-muster aufgenommen
115
Zeit

Fig. 15

110
Frequenz
Zeit
Zeitschlitzindex
Ressource-Cluster
Bündelung von drei Frequenzkanälen
Frequenzkanalindex
c0
c1
c2
c3
c4
c5
...
t0
t1
t2
t3
t4
...

Fig. 16

Frequenz
Zeit
120
Bake n
160
CFP n
162
CAP n
120
Bake n+1
160
CFP n+1
162
CAP n+1
...

Fig. 17

Frequenz
165
Ressourcenelement
c0
t0
t1
Zeit
Fig. 18a
165
Ressourcenelement
Frequenz
c1
c0
t0
Zeit
Fig. 18b
165
Ressourcenelement
Frequenz
c1
c0
t0
t1
Zeit

Fig. 18c

Nutzer 3 (106_3)
Nutzer 2 (106_2)
Nutzer 1 (106_1)
Zeit
Frequenz
c0
t0
t1
165
112_1
112_2
112_3
112_4
112_9
112_10

Fig. 19

110
f
112_6
112_m
112_1
120
116_1
112_4
116_2
1
2
1
2
2
112_7
112_8
112_9
112_2
112_3
112_5
t
160
162
102_1
104
Basisstation
Controller
130
120
170_1
120
170_2
120
Endpunkt
Controller
106_1
130
Endpunkt
Controller
106_2
130
Endpunkt
Controller
106_n
130

Fig. 20

Nutzer 4 energieeffizient (106_4)
Nutzer 3 energieeffizient (106_3)
Nutzer 2 niedrige Latenzzeit (106_2)
Nutzer 1 niedrige Latenzzeit (106_1)
165
116_1
116_1
116_2
116_2
112_1
112_3
112_4
112_9
112_10
112_11
112_13
112_14
112_16
112_17
112_20
t0
t1
c0
Frequenz
Zeit


Fig. 21

in der Bake übertragene Parameter
182
vorab bekannte Parameter
184
Abbildungsfunktion
180
Ausgangs-parameter
186

Fig. 22

Nutzer 4 energieeffizient (106_4)
Nutzer 3 energieeffizient (106_3)
Nutzer 2 niedrige Latenzzeit (106_2)
Gruppe 1 niedrige Latenzzeit (107_1)
Zeit
Frequenz
c0
t0
t1
Nutzer 1.1
Nutzer 1.2
Nutzer 1.3
Nutzer 1.4
165
116_1
116_2
116_2
112_1
112_2
112_3
112_4
112_5
112_9
112_10
112_11
112_13
112_14
112_16
112_17
112_20


Fig. 23

165
Nutzer 4 energieeffizient (106_4)
Nutzer 3 energieeffizient (106_3)
Nutzer 2 niedrige Latenzzeit (106_2)
Nutzer 1 niedrige Latenzzeit (106_1)
Frequenz
116_2
112_1,3
112_4,3
112_7,3
c1
c0
t0
t1
Zeit
112_1,1
112_2,1
112_3,1
112_8,1
112_12,1
112_15,1
112_18,1
116_1
112_1,2
112_6,2
116_1

Fig. 24

Nutzer 4 energieeffizient (106_4)
Nutzer 3 energieeffizient (106_3)
Nutzer 2 energieeffizient (106_2)
Nutzer 1 energieeffizient (106_1)
165
116_1
Frequenz
112_1
112_5
112_9
112_13
112_17
112_21
c0
t0
t1
Zeit

Fig. 25

165
116_2
Nutzer 1 energieeffizient (106_1)
Frequenz
112_2
112_1
112_5
112_9
112_13
112_17
112_21
c0
t0
t1
Zeit

Fig. 26

Nutzer 4 energieeffizient (106_4)
Nutzer 3 energieeffizient (106_3)
Nutzer 2 energieeffizient (106_2)
Nutzer 1 energieeffizient (106_1)
165
112_1
112_2
112_3
112_4
112_5
112_6
112_7
112_8
112_9
112_10
112_11
112_12
112_13
112_14
112_15
112_17
t0
t1
c0
Frequenz
Zeit

Fig. 27

200

Senden eines Signals in einem Kommunikationssystem, wobei das Kommunikationssystem in einem Frequenzband drahtlos kommuniziert, welches von einer Mehrzahl von Kommunikationssystemen zur Kommunikation genutzt wird, wobei das Signal eine Information über ein Kanalzugriffsmuster aufweist, wobei das Kanalzugriffsmuster eine für die Kommunikation des Kommunikationssystems verwendbare frequenz- und/oder zeitsprungbasierte Belegung von Ressourcen angibt, wobei zumindest ein Teil der Ressourcen des Kanalzugriffsmusters einer konkurrenzfreien Periode zugewiesen ist, wobei das Signal ferner eine Steuerungsinformation zur Steuerung eines Zugriffs auf die Ressourcen der konkurrenzfreien Periode aufweist

202

Fig. 28

210

Empfangen eines Signals in einem Kommunikationssystem, wobei das Kommunikationssystem in einem Frequenzband drahtlos kommuniziert, welches von einer Mehrzahl von Kommunikationssystemen zur Kommunikation genutzt wird, wobei das Signal eine Information über ein Kanalzugriffsmuster aufweist, wobei das Kanalzugriffsmuster eine für die Kommunikation des Kommunikationssystems verwendbare frequenz- und/oder zeitsprungbasierte Belegung von Ressourcen angibt, wobei zumindest ein Teil der Ressourcen des Kanalzugriffsmusters einer konkurrenzfreien Periode zugewiesen ist, wobei das Signal ferner eine Steuerungsinformation zur Steuerung eines Zugriffs auf die Ressourcen der konkurrenzfreien Periode aufweist — 212

Ermitteln des Kanalzugriffsmusters basierend auf der Information über das Kanalzugriffsmuster — 214

Ermitteln von exklusiv zugewiesenen Ressourcen aus den Ressourcen der konkurrenzfreien Periode basierend auf einer Abbildungsfunktion, die die Steuerungsinformation auf die exklusiv zugewiesenen Ressourcen abbildet — 216

Fig. 29

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 2015023396 A1
- US 2005176371 A1
- DE 102011082098 B4


### In der Beschreibung aufgeführte Nicht-Patentliteratur


- **G. KILIAN ; H. PETKOV ; R. PSIUK ; H. LIESKE ; F. BEER ; J. ROBERT ; A. HEUBERGER.** Improved coverage for low-power telemetry systems using telegram splitting. *Proceedings of 2013 European Conference on Smart Objects, Systems and Technologies (SmartSysTech),* 2013
- **G. KILIAN ; M. BREILING ; H. H. PETKOV ; H. LIESKE ; F. BEER ; J. ROBERT ; A. HEUBERGER.** Increasing Transmission Reliability for Telemetry Systems Using Telegram Splitting. *IEEE Transactions on Communications,* Marz 2015, vol. 63 (3), 949-961
- *Huffman-Codierung,* 03. April 2019, http://www.ziegenbalg.ph-karlsruhe.de/materialienhomepage-jzbg/cc-interaktiv/huffman/codierung.htm